(19) Europäisches Patentamt
European Patent Office
Office européen des brevets

(11) EP 1 345 169 A2

(12) **EUROPEAN PATENT APPLICATION**

(43) Date of publication:
**17.09.2003 Bulletin 2003/38**

(51) Int Cl.7: **G06T 3/40**

(21) Application number: **03005481.1**

(22) Date of filing: **17.03.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **15.03.2002 JP 2002072696**
**11.03.2003 JP 2003065785**

(71) Applicant: **Ricoh Company, Ltd.**
**Tokyo 143-8555 (JP)**

(72) Inventor: **Sakuyama, Hiroyuki**
**Tokyo (JP)**

(74) Representative: **Schwabe - Sandmair - Marx**
**Stuntzstrasse 16**
**81677 München (DE)**

(54) **Method and apparatus for image reduction**

(57) An image data generator for generating data on a size-reduced image of an original image includes: an inverse wavelet transform part performing inverse wavelet transform on wavelet coefficients; and a coefficient selecting part selecting, of wavelet coefficients in a sub-band, wavelet coefficients to be subjected to the inverse wavelet transform. The inverse wavelet transform part performs the inverse wavelet transform only on the wavelet coefficients selected in the coefficient selecting part with respect to the wavelet coefficients in the sub-band.

FIG.10

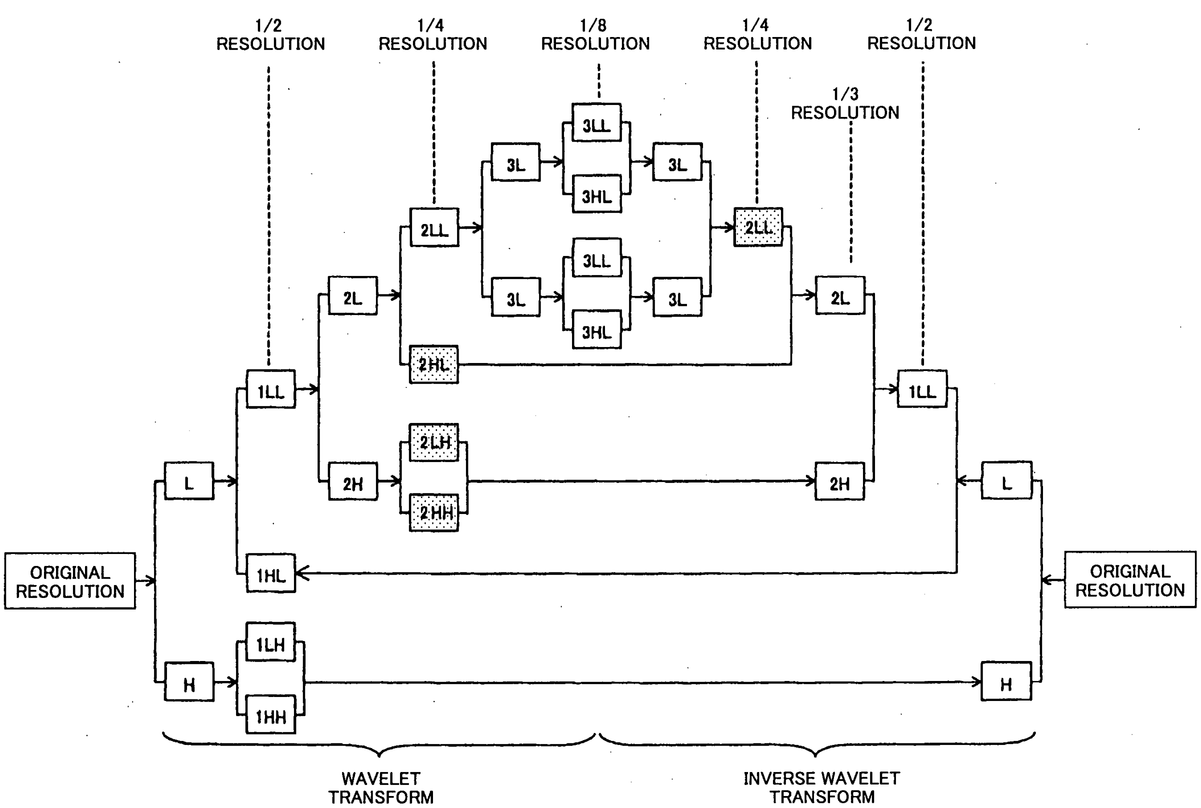




Printed by Jouve, 75001 PARIS (FR)

## Description

### BACKGROUND OF THE INVENTION

1. Field of the Invention

The present invention generally relates to image data generators, and more particularly to an image data generator for generating a size-reduced image of an original. Here, a size-reduced image can be the one whose aspect ratio is different from that of the original image. The present invention is 'applicable to an application program for generating a size-reduced image of an original, a device driver such as a printer driver, and other apparatuses for processing images.

2. Description of the Related Art

Wavelet transform has been employed more often lately as a substitute frequency conversion technique for DCT (Discrete Cosine Transform) employed in JPEG (Joint Photographic Coding Experts Group). A typical example of wavelet transform is JPEG 2000, which is an image compression and decompression method standardized internationally in 2001 as a successor to JPEG.

Wavelet transform is characterized in that an image is compressed at high compression rates with excellent image quality, and at the time of compression, is decomposed into a plurality of resolution components so that an image having a lower resolution than the original image is generated.

Conventionally, however, the following restriction exists in generating a low-resolution image from the original image. According to the conventional wavelet decoding entailing resolution conversion, resolution can be reduced only to $1/2^n$ (n = 1, 2 ...) due to the nature of the wavelet decoding. This is because the conventional wavelet transform employs a two-division filter bank. Accordingly, the low-frequency components can be synthesized only in $1/2^n$ in a synthesis filter bank in the process of decoding, so that the reduction rate of the decoded image is limited to $1/2^n$.

On the other hand, it is considered that a demand for decoding with resolutions other than $1/2^n$ increases as the original image has a higher resolution. That is, if decoding can be performed with resolutions of any rational numbers including $1/2^n$, the decoding is independent of the constraints on the terminal side; thereby considerably expanding its application range.

With respect to this resolution conversion, Japanese Laid-Open Patent Applications No. 2000-125293 and No. 2000-125294 (hereinafter referred to as first prior art and second prior art, respectively), showing the above-described problem in resolution conversion, disclose wavelet decoders and methods. Those wavelet decoders and methods are allowed to decode an image signal compressed and coded by wavelet transform with resolutions of any rational numbers without being affected by the constraints on the terminal side. As a result, those wavelet decoders and methods are allowed to effectively store and display, for instance, a so-called thumbnail, which is frequently used in electronic still cameras and printers, and an image obtained by converting the resolution of an original image (a reduced or enlarged original image). Thereby, those wavelet decoders and methods can be applied to a wider variety of products.

Each of the wavelet decoders of the first prior art and the second prior art includes an entropy decoding part that applies entropy decoding to a coded bit stream, an inverse quantization part that inversely quantizes quantization coefficients and outputs transform coefficients, a transform coefficient inverse scanning part that scans the transform coefficients according to a predetermined method and rearranges the transform coefficients, and a wavelet inverse transform part that inversely. transforms the rearranged transform coefficients and provides a decoded image. The wavelet inverse transform part includes means for limiting the bandwidth of the transform coefficients in accordance with magnifications of resolution conversion, and has. a configuration where up-samplers, down-samplers, and synthesis filers are adaptively arranged.

FIG. 1 is a diagram showing the configuration of the wavelet inverse transform part of the wavelet decoder of the second prior art in the case of obtaining a 1/3 resolution of an original image. The wavelet inverse transform part of FIG. 1 includes 2× up-samplers 119, 121, 124, 126, 129 and 131, low-pass filters 120, 125, and 130 for synthesis, high-pass filters 122, 127, and 132 for synthesis, adders 123, and a down-sampler 134. Due to band restriction, the coefficients of resolution components (LH signal and H signal) 111 and 112 higher than one third of the resolution of the original image are not employed. On the other hand, the coefficient of low-resolution components (LLL signal and LLH signal) 109 and 110 are combined and output from the adder 123 further to be inversely converted, so that an image (signal) 114 whose resolution is a half of the resolution of the original image is obtained. The signal 114 is further inversely transformed so that an image (signal) 117 that has the same resolution as the original image is obtained. Finally, the signal 117 is thinned out or reduced to one third by the down-sampler 134 so that a desired image (signal) 118 is obtained. In FIG. 1, the elements indicated by the broken lines are unnecessary.

### SUMMARY OF THE INVENTION

In both of the first prior art and the second prior art, it is not clear what "configuration where ... are adaptively arranged" means. In the embodiments of those inventions, wavelet transform is performed after band restriction so that a decoded image is obtained. Thereafter, the decoded image is thinned out by the down-sampler provided at the final stage, so that a reduced image is obtained. Such a configuration, however, should also perform inverse wavelet transform and decoding on pixels that are finally eliminated, and therefore, lacks efficiency.

Japanese Laid-Open Patent Applications No. 2002-152517, No. 2002-152744, and No. 2002-344732 disclose an apparatus and methods for obtaining a decompressed image from a coded image. In these inventions, wavelet coefficients of up to a resolution level close to a desired size are extracted to be subjected to inverse wavelet transform so that a decoded image is generated. Thereafter, processing for varying magnification is performed so that an image of the desired size is obtained. In these inventions, it is required to vary magnification.

Accordingly, it is a general object of the present invention to provide an image data generator and an image data generating method in which the above-described disadvantages are eliminated.

Focusing on the fact that a wavelet coefficient inherently corresponds to its pixel position, the present invention has a more specific object of providing an image data generator and an image data generating method that can generate decoded image data of a desired resolution, or desired size-reduced image data, with a smaller amount of processing by performing inverse wavelet transform only on the coefficients that are related to pixels desired to be finally obtained, using the correspondence between the wavelet coefficients and their pixel positions. As mentioned above, a size-reduced image can be the one whose aspect ratio is not equal to that of the original image.

It is another more specific object of the present invention to provide a program for causing a computer to execute such a method and a computer-readable recording medium storing such a program.

Further, the technique of imposing band restriction on a wavelet coefficient in the first prior art and the second prior art is effective to some extent in increasing processing speed. This technique, however, is based on the premise that all of the codes of the wavelet coefficients that are not subjected to band restriction are decoded in the entropy decoding part, and therefore, is not efficient.

It is yet another more specific object of the present invention to provide an image data generator and an image data generating method that can generate decoded image data of a desired resolution, or desired size-reduced image data, balancing a decoding rate and decoding image quality, by timely performing partial decoding on coded wavelet coefficients.

It is yet another more specific object of the present invention to provide a program for causing a computer to execute such a method and a computer-readable recording medium storing such a program.

The above objects of the present invention are achieved by an image data generator for generating data on a size-reduced image of an original image, the image data generator including: an inverse wavelet transform part performing inverse wavelet transform on wavelet coefficients; and a coefficient selecting part selecting, of wavelet coefficients in a sub-band, wavelet coefficients to be subjected to the inverse wavelet transform, wherein the inverse wavelet transform part performs the inverse wavelet transform only on the wavelet coefficients selected in the coefficient selecting part with respect to the wavelet coefficients in the sub-band.

The above objects of the present invention are also achieved by an image data generator for generating data on a size-reduced image of an original image, the image data generator including an inverse wavelet transform part performing inverse wavelet transform on wavelet coefficients of a plurality of components, the inverse wavelet transform part performing the inverse wavelet transform independently on each of the components with at least one of the components having a resolution set therefor, the resolution being set different from a resolution set for the rest of the components.

The above objects of the present invention are also achieved by an image data generator for generating data on a size-reduced image of an original image, the image data generator including: a coefficient decoding part decoding codes into which wavelet coefficients are coded; and a code omitting part omitting codes not to be decoded of codes in a sub-band, wherein the coefficient decoding part decodes codes other than those omitted in said code omitting part.

According to the above-described image data generators of the present invention, the wavelet coefficients are subjected to inverse wavelet transform, and in the case of generating a size-reduced image of an original image, the wavelet coefficients in the same sub-band are selectively subjected to inverse wavelet transform. Therefore, the size-reduced image can be generated with a reduced amount of calculation.

Further, the wavelet coefficients in the same sub-band are partially decoded in performing inverse wavelet transform on the wavelet coefficients and generating a size-reduced image of an original image. Therefore, the size-reduced image can be generated with decoding speed and decoded image quality being balanced with each other.

The above objects of the present invention are also achieved by a method of generating data on a size-reduced image of an original image, the method including the steps of: (a) selecting, of wavelet coefficients in a sub-band, wavelet coefficients to be subjected to inverse wavelet transform; and (b) performing the inverse wavelet transform on wavelet coefficients, wherein the step (b) performs the inverse wavelet transform only on the wavelet coefficients selected in the step (a) with respect to the wavelet coefficients in the sub-band.

The above objects of the present invention are also achieved by a method of generating data on a size-reduced image of an original image, the method including the step of performing inverse wavelet transform on wavelet coefficients of a plurality of components, wherein the inverse wavelet transform is performed independently on each of the components with at least one of the components having a resolution set therefor, the resolution being set different from a resolution set for the rest of the components.

The above objects of the present invention are also achieved by a method of generating data on a size-reduced image of an original image, the method comprising the steps of: (a) decoding codes into which wavelet coefficients are coded; (b) omitting codes not to be decoded of codes in a sub-band; and (c) decoding codes other than those omitted in the step (b).

The above objects of the present invention are also achieved by a program for causing a computer to execute a method of generating data on a size-reduced image of an original image, the method including the steps of: (a) selecting, of wavelet coefficients in a sub-band, wavelet coefficients to be subjected to inverse wavelet transform; and (b) performing the inverse wavelet transform on wavelet coefficients, wherein the step (b) performs the inverse wavelet transform only on the wavelet coefficients selected in the step (a) with respect to the wavelet coefficients in the sub-band.

The above objects of the present invention are also achieved by a program for causing a computer to execute a method of generating data on a size-reduced image of an original image, the method including the step of performing inverse wavelet transform on wavelet coefficients of a plurality of components, wherein the inverse wavelet transform is performed independently on each of the components with at least one of the components having a resolution set therefor, the resolution being set different from a resolution set for the rest of the components.

The above objects of the present invention are also achieved by a program for causing a computer to execute a method of generating data on a size-reduced image of an original image, the method including the steps of: (a) decoding codes into which wavelet coefficients are coded; (b) omitting codes not to be decoded of codes in a sub-band; and (c) decoding codes other than those omitted in the step (b).

The above objects of the present invention are also achieved by a computer-readable recording medium storing a program for causing a computer to execute a method of generating data on a size-reduced image of an original image, the method including the steps of: (a) selecting, of wavelet coefficients in a sub-band, wavelet coefficients to be subjected to inverse wavelet transform; and (b) performing the inverse wavelet transform on wavelet coefficients, wherein the step (b) performs the inverse wavelet transform only on the wavelet coefficients selected in the step (a) with respect to the wavelet coefficients in the sub-band.

The above objects of the present invention are also achieved by a computer-readable recording medium storing a program for causing a computer to execute a method of generating data on a size-reduced image of an original image, the method including the step of performing inverse wavelet transform on wavelet coefficients of a plurality of components, wherein the inverse wavelet transform is performed independently on each of the components with at least one of the components having a resolution set therefor, the resolution being set different from a resolution set for the rest of the components.

The above objects of the present invention are further achieved by a computer-readable recording medium storing a program for causing a computer to execute a method of generating data on a size-reduced image of an original image, the method including the steps of: (a) decoding codes into which wavelet coefficients are coded; (b) omitting codes not to be decoded of codes in a sub-band; and (c) decoding codes other than those omitted in the step (b).

## BRIEF DESCRIPTION OF THE DRAWINGS

Other objects, features and advantages of the present invention will become more apparent from 'the following detailed description when read in conjunction with the accompanying drawings, in which:

FIG. 1 is a diagram showing the configuration of an inverse wavelet transform part of prior art in the case of obtaining a 1/3-resolution of an original image;

FIG. 2 is a diagram for illustrating a process of two-dimensionally (vertically and horizontally) performing wavelet transform called 5 × 3 transform employed in JPEG 2000 on a 16 × 16 monochrome image according to the present invention;

FIG. 3 is another diagram for illustrating the process of two-dimensionally (vertically and horizontally) performing wavelet transform called 5 × 3 transform employed in JPEG 2000 on the 16 × 16 monochrome image according to the present invention;

FIG. 4 is another diagram for illustrating the process of two-dimensionally (vertically and horizontally) performing wavelet transform called 5 × 3 transform employed in JPEG 2000 on the 16 × 16 monochrome image according to the present invention;

FIG. 5 is another diagram for illustrating the process of two-dimensionally (vertically and horizontally) performing wavelet transform called 5 × 3 transform employed in JPEG 2000 on the 16 × 16 monochrome image according to the present invention;

FIG. 6 is a diagram showing a typical coefficient array after rearranging coefficients obtained after two wavelet transform operations according to the present invention;

FIG. 7 is a block diagram showing an image data generator according to a first embodiment of the present invention;

FIG. 8A is a diagram showing a 16 × 16 image generated by performing inverse wavelet transform on all coefficients obtained after performing 5× 3 wavelet transform on the original image of FIG. 2 in the case of obtaining a 5 × 5 image, and FIG. 8B is a diagram showing the 16 × 16 image of FIG. 8A in the case of obtaining a 5 × 4 image according to the first embodiment of the present invention;

FIG. 9 is a diagram showing a 16 × 16 image generated by performing horizontal filtering at the time of the inverse wavelet transform operation on all the coefficients obtained after performing 5 × 3 wavelet transform on the original image of FIG. 2 in the case of obtaining the 5 × 5 image, and FIG. 9B is a diagram showing the 16 × 16 image of FIG. 9A in the case of obtaining the 5 × 4 image according to the first embodiment of the present invention;

FIG. 10 is a diagram showing a configuration for generating a 1/3-resolution image along the flow of wavelet transform and inverse wavelet transform according to the present invention;

FIG. 11 is a block diagram for illustrating an image data generator according to a second embodiment of the present invention;

FIG. 12 is a block diagram showing an image data generator according to a third embodiment of the present invention;

FIG. 13 is a block diagram showing another image data generator according to the third embodiment of the present invention;

FIG. 14 is a flowchart for illustrating the basic flow of an operation of generating a size-reduced image in an image data generator according to a fourth embodiment of the present invention;

FIG. 15 is a diagram showing a code configuration according to the fourth embodiment of the present invention;

FIG. 16 is a diagram showing the relationship between decomposition level and resolution level according to the fourth embodiment of the present invention;

FIG. 17 is a flowchart for illustrating an LL generating operation performed on each component according to the fourth embodiment of the present invention;

FIG. 18 is a flowchart for illustrating the operation of FIG. 17 in detail according to the fourth embodiment of the present invention;

FIG. 19 is a flowchart for illustrating a horizontal pixel position determining and horizontal filtering operation performed on each component according to the fourth embodiment of the present invention;

FIG. 20 is a flowchart for illustrating the operation of FIG. 19 in detail according to the fourth embodiment of the present invention;

FIG. 21 is a flowchart for illustrating a vertical pixel position determining and vertical filtering operation performed on each component according to the fourth embodiment of the present invention;

FIG. 22 is a flowchart for illustrating the operation of FIG. 21 in detail according to the fourth embodiment of the present invention;

FIG. 23 is a diagram for illustrating an inverse color conversion operation according to the fourth embodiment of the present invention;

FIG. 24A is a diagram showing pixels to be obtained in the case of obtaining a 2/3-resolution image of interleaved coefficients and FIG. 24B is a diagram showing pixels to be obtained in the case of generating a 10 × 8 image of the interleaved coefficients according to the fourth embodiment of the present invention;

FIG. 25A is another diagram showing the pixels to be obtained in the case of obtaining the 2/3-resolution image of the interleaved coefficients and FIG. 25B is another diagram showing the pixels to be obtained in the case of generating the 10 × 8 image of the interleaved coefficients according to the fourth embodiment of the present invention;

FIG. 26 is a block diagram showing an image data generator according to a fifth embodiment of the present invention;

FIG. 27A is a diagram showing coefficients of a 2LL sub-band, and FIG. 27B is a diagram showing the coefficients divided into bit planes according to a sixth embodiment of.the present invention;

FIG. 28 is a diagram showing a code configuration according to the sixth embodiment of the present invention;

FIG. 29 is a flowchart for illustrating the basic flow of a size-reduced image generating operation performed in an image data generator according to the sixth embodiment of the present invention;

FIG. 30 is a flowchart for expatiating partial decoding in the operation of FIG. 29 according to the sixth embodiment of the present invention;

FIG. 31 is another flowchart for expatiating the partial decoding in the operation of FIG. 29 according to the sixth embodiment of the present invention;

FIG. 32 is another flowchart for expatiating the partial decoding in the operation of FIG. 29 according to the sixth embodiment of the present invention; and

FIG. 33 is a flowchart for illustrating the basic flow of another size-reduced image generating operation performed in the image data generator according to the sixth embodiment of the present invention.

DETAILED DESCRIPTION OF THE PREFERRED EMBODIMENTS

A description will now be given, with reference to the accompanying drawings, of embodiments of the present invention.

First, a description will be given, with respect to the present invention, of the reason a decoded image of a desired resolution can be generated with a reduced amount of processing by performing inverse wavelet transform only on the coefficients that relate to pixels desired to be finally obtained, focusing on the correspondence between wavelet coefficients and their pixel positions.

In the following description, a vertical direction refers to upward and downward directions and a horizontal direction refers to rightward and leftward directions in the accompanying drawings.

FIGS. 2 through 5 are diagrams for illustrating a process of performing wavelet transform called a 5 × 3 transform employed in JPEG 2000 two-dimensionally (in the vertical and horizontal directions) on a 16 × 16 monochrome image. FIG. 2 is a diagram showing an original image and a coordinate system therefor. FIG. 3 is a diagram showing an array of coefficients after filtering in the vertical direction. FIG. 4 is a diagram showing an array of coefficients after filtering in the horizontal direction. FIG. 5 is a diagram showing an array of coefficients after rearrangement. JPEG 2000 provides two types of wavelet transform, that is, 5 × 3 wavelet transform and 9 × 7 wavelet transform. In the following description, only the 5 × 3 wavelet transform is given as an example of wavelet transform. The present invention, however, is also applicable to other wavelet transforms including the 9 × 7 wavelet transform.

As shown in FIG. 2, an X-Y coordinate plane is formed on the image with the horizontal direction being the X-axis, the vertical direction being the Y-axis, and the uppermost leftmost point being the origin. The pixel value of a pixel having a Y-coordinate value $y$ for an X-coordinate value $x$ is expressed as $P(y)$ ($0 \leq y \leq 15$). In JPEG 2000, first, with respect to each X-coordinate value $x$, high-pass filtering is performed vertically (in the positive direction of the Y-axis) on each pixel having an odd Y-coordinate value $y$ ($y = 2i+1$) using its adjacent pixels, so that a coefficient $C(2i+1)$ is obtained. Next, low-pass filtering is performed on each pixel having an even Y-coordinate value $y$ ($y = 2i$) using its adjacent coefficients, so that a coefficient $C(2i)$ is obtained. The high-pass filtering and the low-pass filtering are given by the following equations (1) and (2), respectively:

$$C(2i+1) = P(2i+1) - \lfloor (P(2i)+P(2i+2))/2 \rfloor \quad (1)$$

$$C(2i) = P(2i) + \lfloor (C(2i-1)+C(2i+1)+2)/4 \rfloor \quad (2)$$

where the symbol |_x_| represents a floor function of x that replaces a real number x with the largest of all the integers smaller than or equal to x. In the edge parts of the image, a pixel in the center may lack an adjacent pixel. In this case, an appropriate pixel value is supplemented in accordance with a predetermined rule, which is irrelevant to the essence of the present invention so that a description thereof will be omitted.

If, for the purpose of simplification, the coefficients obtained by high-pass filtering are expressed as H, and the coefficients obtained by low-pass filtering are expressed as L, then, a coefficient array 1 of FIG. 2 is converted to a coefficient array 2 of H and L coefficients as shown in FIG. 3 by the above-described vertical conversion.

Next, high-pass filtering is performed horizontally (in the positive direction of the X-axis) on each coefficient of an odd X-coordinate value x (x = 2i+1) using its adjacent coefficients in the coefficient array 2 of FIG. 3, and then, low-pass filtering is performed on each coefficient of an even X-coordinate value x (x = 2i) using its adjacent coefficients. This process is performed on each Y-coordinate value y. In this case, $P(2i)$, $P(2i+1)$, ... in the above-described equations (1) and (2) are understood to mean their corresponding coefficients.

If, for the purpose of simplification, the coefficients obtained by performing low-pass filtering on the above-described coefficients L using its adjacent coefficients are expressed as LL, the coefficients obtained by performing high-pass filtering on the above-described coefficients L using its adjacent coefficients are expressed as HL, the coefficients obtained by performing low-pass filtering on the above-described coefficients H using its adjacent coefficients are expressed as LH, and the coefficients obtained by performing high-pass filtering on the above-described coefficients H using its adjacent coefficients are expressed as HH, then, the coefficient array 2 of FIG. 3 is converted to a coefficient array 3 of FIG. 4. Here, a group of coefficients assigned the same symbol (LL, for instance) is called a sub-band, and the image of FIG. 4 is composed of four sub-bands.

Thereby, one wavelet transform operation (one decomposition) is completed. At this point, only the LL coefficients are collected. That is, as a coefficient array 4 of FIG. 5, the coefficients are collected according to the sub-bands (LL sub-band $4_1$, HL sub-band $4_2$, LH sub-band $4_3$, and HH sub-band $4_4$), and only the LL sub-band $4_1$ is extracted. Thereby, a half-resolution "image" of the original image is just obtained. Such grouping by the sub-band is referred to as deinterleaving, while the coefficients arranged in the state of FIG. 4 are described as "interleaved." The above-described prior art employs the expression of "scanned and rearranged" to describe the same. The second wavelet transform operation may consider the LL sub-band $4_1$ as an original image and perform the same conversion as described above. In this case, when the coefficients are rearranged, a typical coefficient array 5 (of LL sub-band $5_1$, HL sub-band $5_2$, LH sub-band $5_3$, HH sub-band $5_4$, HL sub-band $4_2$, LH sub-band $4_3$, and HH sub-band $4_4$) shown in FIG. 6 is obtained. In the case of FIG. 6, there exist seven types of sub-bands from 2LL to 1HH in total. In FIGS. 5 and 6, the prefix of 1 or 2 to the coefficients indicates the number of wavelet transform operations by which the coefficients are obtained. This number is referred to as a decomposition level. The levels in FIG. 1 refer to the decomposition levels. A sub-band of a higher decomposition level has a lower resolution.

In the above description, in the case of performing wavelet transform only one-dimensionally, wavelet transform may be performed in either a horizontal or a vertical direction.

On the other hand, inverse wavelet transform is performed by first performing inverse low-pass filtering horizontally on each coefficient of an even X-coordinate value $x$ ($x = 2i+1$) using its adjacent coefficients and then performing inverse high-pass filtering on each coefficient of an odd X-coordinate value $x$ ($x = 2i$) using its adjacent results of inverse low-pass filtering in the interleaved coefficient array 3 shown in FIG. 4. This process is performed on each Y-coordinate value $y$. The inverse low-pass filtering and the inverse high-pass filtering are given by the following equations (3) and (4), respectively:

$$P(2i) = C(2i) - \lfloor (C(2i-1)+C(2i+1)+2)/4 \rfloor \quad (3)$$

$$P(2i+1) = C(2i+1) + \lfloor (P(2i)+P(2i+2))/4 \rfloor \quad (4)$$

As in the above-described case of wavelet transform, in the edge parts of the image, a pixel in the center may lack an adjacent pixel. In this case, an appropriate pixel value is supplemented in accordance with a predetermined rule, which is irrelevant to the essence of the present invention so that a description thereof will be omitted.

Thereby, the coefficient array 3 of FIG. 4 is converted to the coefficient array 2, that is, the coefficient array 3 is inversely converted. Likewise, successively thereafter, inverse low-pass filtering is performed vertically on each coefficient of an even Y-coordinate value $y$ ($y = 2i$) using its adjacent coefficients, and then, inverse high-pass filtering is performed on each coefficient of an odd Y-coordinate value ($y = 2i+1$) using its adjacent results of inverse low-pass filtering. This process is performed on each X-coordinate value $x$. Thereby, one inverse wavelet transform operation is completed, so that the coefficient array 2 of FIG. 3 is returned to the coefficient array 1 of the image of FIG. 2. That is, the coefficient array 1 of the original image is restructured. When a plurality of wavelet transform operations are performed, the same inverse wavelet transform operation may be repeated using the HL and other coefficients, considering the coefficient array 1 of FIG. 2 as the LL sub-band. A description of the way each sub-band is generated and restructured by wavelet transform and inverse wavelet transform will be given later (see FIG. 10).

At this point, it can be understood that the result of inverse low-pass filtering is obtained from three coefficients including a coefficient of the filtering center (that is, a coefficient desired to be subjected to filtering), and it can also be understood that the result of inverse high-pass filtering is obtained from a coefficient of the filtering center and the two adjacent results of inverse low-pass filtering. The two results of inverse low-pass filtering are calculated from five coefficients including the coefficient of the filtering center. Therefore, the result of inverse high-pass filtering is obtained from five coefficients. As is apparent from the above-described understanding, in order to obtain one pixel, it is sufficient to perform inverse wavelet transform centered on the target pixel, and it is not necessary to perform inverse wavelet transform on pixels irrelevant to the inverse wavelet transform on the target pixel. Accordingly, by performing inverse wavelet transform using only those required to finally obtain a desired pixel of all of the coefficients in the same sub-band, a decoded image of a desired resolution can be generated with a reduced amount of processing without obtaining pixels to be subtracted.

FIG. 7 is a block diagram showing an image data generator 10 according to a first embodiment of the present invention.

The image data generator 10 of this embodiment includes an inverse wavelet transform part 11 and a coefficient selecting part 12. The inverse wavelet transform part 11 performs inverse wavelet transform on wavelet coefficients obtained by performing wavelet transform on an original image one or a plurality of times, so that the image data generator 10 generates data on a size-reduced image of the original image. The original image includes an image obtained after performing conversion such as color conversion on the original image.

The coefficient selecting part 12 selects those to be subjected to inverse wavelet transform of the coefficients in the same sub-band. In other words, all of the coefficients before selection can also be defined as all of the coefficients in one LL sub-band, which may be data on the original image. That is, the LL sub-band may be four sub-bands having a decomposition level higher than that of the LL sub-band by one. The selecting operation in this embodiment is different from the conventional technique of, for instance, selecting 2LL, 2HL, 2LH, and 2HH sub-bands but not selecting (that is, not performing inverse wavelet transform on) 1HL, 1LH, and 1HH sub-bands. Practically, as will be later described, the selecting operation can be performed more simply if the coefficients before selection are interleaved. The inverse wavelet transform part 11 performs inverse wavelet transform only on the coefficients selected by the coefficient selecting part 12 from the above-described wavelet coefficients in the same sub-band. Thereby, data on the size-reduced image is generated. For instance, in the case of performing inverse wavelet transform on the coefficients selected from the coefficients in the 2LL sub-band (that is, 3LL, 3HL, 3LH, and 3HH sub-bands) using the selective inverse wavelet transform of the present invention, the wavelet coefficients relating to other operations including an operation preceding the inverse wavelet transform, such as coefficients in the 3LL sub-band (composed of 4LL, 4HL, 4LH, and 4HH sub-bands and not processed through the coefficient selecting part 12) to be obtained as required in the preceding operation may be inversely converted by the inverse wavelet transform part 11. As described above, it may also be considered that the image data generator 10 according to this embodiment includes a part selectively subjecting coefficients in the same or a single sub-band to inverse wavelet transform. Here, the sub-band may be the entire original image. In the specification, coefficients to be inversely converted (or subjected to inverse wavelet transform) by the inverse wavelet transform part 11 are referred to as wavelet coefficients or simply as coefficients. Coefficients to be again inversely converted after being subjected to inverse wavelet transform are also referred to as wavelet coefficients or simply as coefficients. In the case of two-dimensional inverse wavelet transform, coefficients to be subjected to inverse wavelet transform in both directions and coefficients to be subjected to inverse wavelet transform in one direction are also referred to as wavelet coefficients or simply as coefficients.

FIG. 8A is a diagram showing a 16 × 16 image generated by performing inverse wavelet transform on all of the coefficients obtained after performing 5 × 3 wavelet transform on the original image of FIG. 2.

Here, the size of the original image is defined as 16 × 16, and a 1/3 scale image, or an image reduced to one third of the original image vertically and horizontally in size, is generated from the original image as previously described in the first prior art and the second prior art. Here, the 1/3 scale image is a 5 × 5 image since 16 is not divisible by three. FIG. 8A shows a coefficient array (equal to the coefficient array 1 of FIG. 2) of the 16 × 16 image generated by subjecting all of the coefficients to inverse wavelet transform first horizontally and then vertically. In order to generate a 5 × 5 image, inverse wavelet transform may be performed centered only on the coefficients of the underlined pixels of all of the coefficients in FIG. 8A. This embodiment employs a 5 × 3 transform, so that the result of vertical inverse high-pass filtering can be obtained from a coefficient of the filtering center and its two adjacent results of inverse low-pass filtering. Therefore, finally, it is sufficient to (vertically) perform inverse wavelet transform only for the 45 shaded pixels in FIG. 8A. Pixels to be obtained in the case of employing a 5 × 3 transform and performing three-to-one scaling as in this embodiment are the 25 underlined pixels, so that at the preceding stage, that is, at the stage after performing horizontal filtering (before vertical filtering) at the time of an inverse wavelet transform operation, it is sufficient that only the 45 shaded pixels have been obtained. This means that it is sufficient to select pixels equivalent to less than 18 % of the entire image and obtain the coefficients of the 25 pixels by vertical filtering at the time of an inverse wavelet transform operation. The 45 pixels shown shaded herein do not have the coefficients shown in FIG. 8A before the vertical inverse wavelet transform. The coefficient values in the pixel positions illustrated in FIG. 8A are obtained only after performing inverse wavelet transform horizontally and vertically. According to this embodiment, a size-reduced image can be generated with a reduced amount of calculation. Additionally, in order to generate a 5 × 4 image from the 16 × 16 image, inverse wavelet transform may be performed centered only on the coefficients of the underlined pixels of all of the coefficients in FIG. 8B. This embodiment employs a 5 × 3 transform, so that the result of vertical inverse high-pass filtering can be obtained from a coefficient of the filtering center and its two adjacent results of inverse low-pass filtering. Therefore, finally, it is sufficient to (vertically) perform inverse wavelet transform only for the 20 shaded pixels in FIG. 8B. This means that it is sufficient to select pixels equivalent to less than 8 % of the entire image and obtain the coefficients of the 20 pixels by vertical filtering at the time of an inverse wavelet transform operation.

The coefficient selecting part 12 may include a part selecting at least all of the wavelet coefficients relating to the pixels of a size-reduced image to be generated (or desired to be finally obtained). Further, the coefficient selecting part 12 may include a part selecting only the wavelet coefficients relating to the pixels of a size-reduced image to be generated (or desired to be finally obtained). That is, inverse wavelet transform may be performed only on the wavelet coefficients relating to the pixels of a size-reduced image desired to be finally obtained. Here, the term "relating" refers to a relationship originating from the nature of wavelet transform, such as a relationship derived from the above-described equations (1) through (4) (the shaded pixels to the underlined pixels in FIG. 8A). According to this configuration, a size-reduced image can be generated with the smallest amount of calculation.

It should be noted that a finally obtained image as a result of performing inverse wavelet transform only on the coefficients relating to the pixels of a size-reduced image desired to be finally obtained is mathematically equivalent to a size-reduced image generated by thinning out or reducing an image obtained by performing inverse wavelet transform on all of the wavelet coefficients. In the case of thinning out the wavelet coefficients themselves and performing inverse wavelet transform on the remaining wavelet coefficients, a size-reduced image of the same size can be obtained. In this case, however, the inverse wavelet transform is performed using coefficients different from those obtained in the "forward" wavelet transform. Therefore, the obtained size-reduced image has no mathematical grounds.

On the other hand, according to the present invention, a totally equivalent image having mathematical grounds can be obtained.

As previously described, in order to obtain the underlined 25 pixels of FIG. 8A, it is required that in addition to the 25 pixels, the shaded pixels surrounding the 25 pixels have been obtained as the coefficients in the state where horizontal filtering is completed (before vertical filtering) at the time of an inverse wavelet transform operation. If it is complicated to determine whether a pixel corresponds to the "surrounding pixel," all the pixels in each vertical straight line (column) including an underlined pixel may be selected.

Accordingly, all of the coefficients positioned on a straight line extending in one direction (in which inverse wavelet transform is performed finally in an inverse wavelet transform operation) which straight line includes a coefficient corresponding to a pixel position of a size-reduced image desired to be generated may be obtained. The coefficient selecting part 12 may include a part selecting, of the above-described wavelet coefficients in the same sub-band (in the interleaved state), all of the coefficients positioned on a straight line extending in one direction (in the vertical direction in the above-described case) in which inverse wavelet transform is performed finally, the straight line including a wavelet coefficient in a position of a pixel of a size-reduced image desired to be generated. By this selecting operation, all of these selected wavelet coefficients are subjected to inverse wavelet transform in the inverse wavelet transform part 11, and as a result of this inverse wavelet transform, all of the coefficients positioned on each of the above-described straight lines including the coefficients of the pixel positions of the size-reduced image desired to be generated. The pixels composed of the obtained coefficients are thinned out as required as described above, so that the desired size-reduced image is obtained. According to this configuration, the actual application can be simplified in generating a size-reduced image.

FIG. 9A is a diagram showing a 16 × 16 image generated by performing horizontal filtering, at the time of an inverse wavelet transform operation, on all of the coefficients obtained after performing 5 × 3 wavelet transform on the original image of FIG. 1. A coefficient array 7 of FIG. 9A corresponds to the coefficient array 2 of FIG. 3. FIG. 9B is a diagram showing the 16 × 16 image of FIG. 9A in the case of obtaining its 5 × 4 image.

In order to obtain the coefficients of the shaded pixel positions of FIG. 8A, it is required that the pixels of the shaded parts of FIG. 9A be selected as the coefficients in the state before horizontal filtering is performed at the time of an inverse wavelet transform operation. The 126 shaded pixels shown in FIG. 9A do not have the coefficients shown therein, which are obtained only after horizontal filtering at the time of an inverse wavelet transform operation. As in the above-described case, the actual application may also be simplified without making determination as to the "surrounding pixels" in the case of FIG. 9A. Likewise, in order to obtain the underlined 20 pixels of FIG. 8B, it is required that in addition to the 20 pixels, the shaded pixels surrounding the 20 pixels in FIG. 9B have been obtained as the coefficients in the state where horizontal filtering is completed (before vertical filtering) at the time of an inverse wavelet transform operation. If it is complicated to determine whether a pixel corresponds to the "surrounding pixel," all the pixels in each vertical straight line (column) including an underlined pixel in FIG. 9B may be selected to simplify the implementation.

Accordingly, inverse wavelet transform may be performed two-dimensionally, and all of the coefficients positioned on straight lines perpendicular to the direction in which the first inverse wavelet transform in an inverse wavelet transform operation is performed may be obtained, the straight lines including the coefficients corresponding to the positions of the pixels of the size-reduced image and the positions relating to the positions of the pixels. The coefficient selecting part 12 of this embodiment may include a part that, at the time of selecting coefficients for inverse wavelet transform performed in one direction (in the horizontal direction in the above-described case) in which the inverse wavelet transform is performed first in an inverse wavelet transform operation, selects, of the above-described wavelet coefficients in the same sub-band (in the interleaved state), all of the coefficients on straight lines perpendicular to the direction in which the inverse wavelet transform is performed first, the straight lines including the coefficients corresponding to the positions of the pixels of the size-reduced image to be generated and the positions of pixels necessary for obtaining the positions of the pixels of the size-reduced image. As a result of employing this part of the coefficient selecting part 12, the selected coefficients are subjected to inverse wavelet transform in the direction in which inverse wavelet transform is performed first, and are subjected to inverse wavelet transform in the other direction and thinned out as required. Thereby, the coefficients of the pixel positions of the size-reduced image desired to be generated are obtained. According to this configuration, the actual application can be simplified in generating a size-reduced image.

In FIG. 1 of the second prior art, an image having the same resolution as the original image is first generated and then reduced to one third of the original image. In principle, however, it takes less time to obtain a one-third image based on the 1/2-resolution image of the original image. FIG. 10 is a diagram showing a configuration for generating a 1/3-resolution image along the flow of wavelet transform and inverse wavelet transform according to the present invention. In the case of generating a 1/3-resolution image, the LL coefficients of a resolution lower than a desired resolution, that is, the 2LL coefficients of a one-fourth resolution, may be obtained by performing inverse wavelet transform. Then, the obtained 2LL coefficients are selectively subjected to inverse wavelet transform using the coefficients of the 2HL, 2LH, and 2HH sub-bands, so that a 1/3-resolution image can be finally obtained.

Therefore, according to the present invention, inverse wavelet transform may be performed on all of the coefficients of up to the resolution closest to a desired resolution. That is, the coefficient selecting part 12 of the present invention may include a part that selects all of the wavelet coefficients in the sub-bands of the same decomposition level higher than that of the LL sub-band having the highest resolution below the resolution of a size-reduced image to be obtained so that the LL sub-band is obtained by inverse wavelet transform.

As shown in the shaded parts of FIG. 8A, in the above-described 5 × 3 transform, the number of adjacent pixels to be obtained differs depending on whether an underlined pixel desired to be finally obtained is located in an odd or even position. As previously described, this results from the difference in tap length between the low-pass filter and the high-pass filter. In this case, therefore, by selecting pixels desired to be finally obtained so that the desired pixels are located in even positions as much as possible, the number of adjacent pixels to be obtained can be minimized, so that processing can be performed at high speed. In order to select pixels desired to be finally obtained so that the desired pixels are located in even positions, a vertex pixel of the pixels desired to be obtained, that is, the pixel of -3 in FIG. 8A, may be located in an even position. There is also an alternate method of not arranging the underlined pixels regularly in a grid-like manner.

Therefore, according to the present invention, the coefficients of pixels in such positions as to reduce the sum of the tap lengths of the filters may be selected. In FIG. 8A, in the case of selecting a position whose X-coordinate and Y-coordinate values are both even numbers, the tap length for inverse wavelet transform per direction becomes Tlow, namely, a minimum length. On the other hand, in the case of selecting a position whose X-coordinate and Y-coordinate values are both odd numbers, the, tap length for inverse wavelet transform per direction becomes Thigh, namely, a maximum length. Accordingly, in order to reduce the amount of processing, it is effective to select a position so that the tap length for inverse wavelet transform per direction becomes smaller than the average of the minimum and maximum values, that is, (Tlow + Thigh)/2. The high-pass filter and the low-pass filter may have different tap lengths for inverse wavelet transform, so that the sum of the tap lengths of the high-pass and low-pass filters that perform filtering centered on the coefficients corresponding to the pixel positions of a size-reduced image to be .generated of all of the above-described coefficients in the same sub-band (in the interleaved state) is smaller than d·n(Tlow + Thigh)/2, where d is the dimensional number of inverse wavelet transform, n is the number of pixels of the size-reduced image, Tlow is the tap length of the low-pass filter, and Thigh is the tap length of the high-pass filter. According to this configuration, processing can be performed at high speed in generating a size-reduced image by inverse wavelet transform. In the case of performing inverse wavelet transform two-dimensionally, a step of performing inverse wavelet transform selectively on the coefficients in the same (or a single) sub-band, and a step of causing the sum of the tap lengths of the high-pass and low-pass filters to be smaller than n(Tlow + Thigh), the high-pass and low-pass filters having different tap lengths for inverse wavelet transform and performing filtering centered on the coefficients corresponding to the pixel positions of a size-reduced image of all of the coefficients in the interleaved state may be provided. In the case of generating a size-reduced image by performing inverse wavelet transform two-dimensionally, processing can also be performed at high speed.

In the case of generating the 1/3-resolution size-reduced image of an original image from wavelet coefficients divided into 3LL, 3HL, 3LH, 3HH, 2HL, 2LH, 2HH, 1HL, 1LH, and 1HH sub-bands, using the above-described configurations suitably, the following processes (a) through (c) may be performed as main procedures to which the selective inverse wavelet transform of the present invention is applied. In the case of performing inverse wavelet transform on two-dimensional coefficients in the horizontal and vertical directions, it may be determined based on the direction in which inverse wavelet transform is performed whether the selective inverse wavelet transform of the present invention is employed.

(a) The conventional inverse wavelet transform, which does not employ the selective inverse wavelet transform of the present invention, that is, which selects all of the coefficients, is performed on the coefficients of the 2LL sub-band, that is, the coefficients of the four sub-bands of decomposition level 3 (3LL, 3HL, 3LH, and 3HH). Thereby, the 2LL sub-band is obtained. Then, the coefficients of the 1LL sub-band, that is, the coefficients of the four sub-bands of decomposition level 2 (2LL, 2HL, 2LH, and 2HH) in the interleaved state, are selectively subjected to inverse wavelet transform, so that a new LL sub-band is extracted. Thereby, a size-reduced image is obtained.

(b) Coefficients are selected, in consideration of two inverse wavelet transform operations, from the coefficients of the 2LL sub-band, that is, the coefficients of the four sub-bands of decomposition level 3 (3LL, 3HL, 3LH, and 3HH), in the interleaved state, and the selected coefficients are subjected to inverse wavelet transform twice using the coefficients of the 2HL, 2LH, and 2HH sub-bands. Thereby, a size-reduced image is obtained.

(c) The selection of coefficients in each of the processes (a) and (b) is simplified, and the unnecessary coefficients after the inverse wavelet transform operations are subtracted so that a size-reduced image is obtained.

In the case of compressing an original image, which is, for instance, a color image formed of three components of R, G, and B, normally, in order to increase the compression rate, color conversion is performed on the R, G, and B components so that the R, G, and B components are converted to three new components of one luminance and two color differences, and wavelet transform is performed on each of the new components obtained after the color conversion.

Color conversion called RCT (Reversible Component Transform), which is one of color conversion methods employed in JPEG 2000, is given by the following:

$$\text{Luminance } Y = \lfloor (R+2G+B)/4 \rfloor$$

$$\text{Color difference } Cr = R - G$$

$$\text{Color difference } Cb = B - G \qquad (5)$$

The inverse conversion of RCT is given by the following:

$$R = G + Cr$$

$$G = Y - \lfloor (Cr+Cb)/4 \rfloor$$

$$B = Cb + G \qquad (6)$$

FIG. 11 is a block diagram for illustrating an image data generator according to a second embodiment of the present invention and for illustrating a DWT (Discrete Wavelet Transform) image compression and decompression algorithm in JPEG 2000.

JPEG 2000 is an image compression and decompression method standardized internationally in 2001 as a successor to JPEG. The image data generator of FIG. 11 includes a two-dimensional wavelet transform and inverse transform part 22, a quantization and inverse quantization part 23, and an entropy coding and decoding part 24. Of these parts, the two-dimensional wavelet transform and inverse transform part 22 relates to the present invention. In the specification, the two-dimensional wavelet transform and inverse transform part 22 is described mainly as an inverse wavelet transform part. The two-dimensional wavelet transform and inverse transform part 22, the quantization and inverse quantization part 23, and the entropy coding and decoding part 24 are provided as a part receiving an input from and transmitting an output to a color space conversion and inverse conversion part 21 and a tag processing part 25. Each of these parts may have independent configurations for the forward (compression) and inverse (decompression) operations. Further, each of these parts may perform processing component by component. At the time of performing decompression in the JPEG 2000 configuration of FIG. 11, the wavelet coefficients of each of the components obtained through entropy decoding and inverse quantization are subjected to inverse wavelet transform. Thereafter, the wavelet coefficients are subjected to color conversion so as to be returned to the R, G, and B pixel values.

When the effect of each component on image quality is considered, normally, the color-difference components are more quantized in the quantization process of FIG. 11 than the luminance component because, generally, luminance has a greater effect than color difference. By applying this technique to the generation of a size-reduced image so that inverse wavelet transform is performed with the color-difference components having a lower resolution than the luminance component and inverse color conversion is performed with (virtual) interpolation being performed on the color-difference components, a size-reduced image can be generated at high speed with the effect on image quality being controlled. Further, the color differences Cr and Cb do not affect image quality to exactly the same degree. For instance, experiments show that the color difference Cb has a smaller effect than the color difference Cr. Therefore, the color-difference components may have different resolutions.

Therefore, according to this embodiment, an apparatus for generating a size-reduced image of an original image by performing inverse wavelet transform on the wavelet coefficients of a plurality of components may include a part that performs inverse wavelet transform on the components to different resolutions so that the resolution differs between the components when inverse wavelet transform is performed. That is, inverse wavelet transform may be performed with a difference between the resolutions of the components. The image data generator of this embodiment may be an apparatus for generating data on a size-reduced image of an original image, the apparatus including an inverse wavelet transform part that performs inverse wavelet transform on the wavelet components of a plurality of components. The inverse wavelet transform part performs inverse wavelet transform component by component with the resolution differing between at least one of the components and the rest of the components. According to this embodiment, a size-reduced image formed of a plurality of components can be generated at high speed with a reduced amount of processing using the characteristic between the components.

Moreover, by applying the characteristics of this embodiment to the above-described image data generator of the first embodiment relating to the selective inverse wavelet transform of the present invention, processing speed can be further increased and the actual application can be further simplified.

Further, with respect to each of the wavelet coefficient luminance component and the wavelet coefficient color-difference component of the above-described plural components, the coefficients of the LL sub-band having the highest resolution below the resolution of a size-reduced image to be generated may be obtained. According to this configuration, a size-reduced image formed of a plurality of components can be generated at higher speed with more simplicity.

Further, in the image data generator of this embodiment, the above-described components may be a luminance component and a color-difference component, and the luminance component is subjected to inverse wavelet transform to a resolution higher than a resolution to which the color-difference component is subjected to inverse wavelet transform. As a result, the color-difference component has a lower resolution. According to this configuration, a size-reduced image formed of luminance and color-difference components can be generated at higher speed with a reduced amount of processing while the effect on image quality is controlled.

Further, according-to this embodiment, the above-described components may include two color-difference components, and the two color-difference components may be subjected to inverse wavelet transform to different resolutions. According to this configuration, a size-reduced image formed of a plurality of components may be generated at higher speed by setting a lower resolution for one of the color-difference components than for the other one of the color-difference components, using the characteristic between the color-difference components.

Further, in this embodiment, the resolution of the color-difference components may be set to a half of the resolution of the luminance component. Generally, this resolution combination, which corresponds to subsampling color difference to one-fourth of luminance, provides a good balance between image quality and processing speed. According to this configuration, a size-reduced image formed of a plurality of components can be generated with image quality and processing speed being in balance with each other.

The foregoing embodiments are described, focusing on the image data generators according to the present invention. The present invention can also be realized as: an image data generating method including the processing steps performed in the image data generators; a program for causing a computer to function as any of the above-described image data generators or as each part thereof or a program for causing a computer to execute the image data generating method (a computer program with the contents of the processing steps); and a computer-readable recording medium recording the program (a computer-readable information recording medium recording the contents of the processing steps). As is apparent from a later-described embodiment, by this image data generating method of the present invention, a size-reduced image can be generated with a reduced amount of calculation and/or a size-reduced image can be generated at high speed using the characteristics between components. Further, this program makes it possible to provide a system that can generate a size-reduced image with a reduced amount of calculation, can generate a size-reduced image simply with high image quality, and can generate a size-reduced image at high speed using the characteristics between components by the operations corresponding to the above-described embodiments. Further, this recording medium makes it possible to provide a system that can generate a size-reduced image with a reduced amount of calculation, can generate a size-reduced image simply with high image quality, and can generate a size-reduced image at high speed using the characteristics between components with the configurations corresponding to the above-described embodiments. It is apparent that this program and this recording medium can be realized easily based on the later-described embodiment in addition to the above-described embodiments.

A description will be given of a recording medium storing a program or data for realizing the image data generating function of the present invention according to a third embodiment of the present invention.

Specifically, the recording medium may be any of a CD-ROM, a magneto-optical disk, a DVD-ROM, a FD, a flash memory, and other various ROMs and RAMs. The recording medium is recorded with a program for causing a computer to execute the functions relating to the above-described embodiments according to the present invention so as to realize the image data generating function of the present invention. By distributing this recording medium, the above-described functions can be realized easily. Then, the image data generating function according to the present invention can be performed by loading the recording medium into an information processing apparatus such as a computer and causing the information processing apparatus to read out the program or by storing the program in a recording medium provided in an information processing apparatus and reading out the program as required.

An expatiation will be given of the third embodiment of the present invention.

FIG. 12 is a block diagram showing an image data generator according to the third embodiment of the present invention.

According to the image data generator of FIG. 12, a RAM 31, a CPU 32, and an HDD 34 are connected via a data bus 33. A size-reduced image is generated from a compressed image of an original resolution and stored in the HDD 34 in the following process.

In step S201, compressed image data of an original resolution recorded on the HDD 34 is read into the RAM 31 by a command transmitted from the CPU 32. Next, in step S202, the CPU 32 reads the compressed image data recorded in the RAM 31 only for an amount corresponding to a predetermined resolution, and obtains wavelet coefficients. The CPU 32 performs processing on the wavelet coefficients according to the present invention, thereby generating a size-reduced image. In step S203, the CPU 32 writes the generated size-reduced image to another region in the RAM 31. In step S204, the size-reduced image is recorded on the HDD 34 by a command transmitted from the CPU 32.

FIG. 13 is a block diagram showing another image data generator according to the third embodiment of the present invention.

According to the image data generator of FIG. 13, a RAM 35 inside a personal computer (PC), a CPU 36 inside the PC, an HDD 38, and a monitor 39 such as a CRT or LCD monitor are connected via a data bus 39. By an instruction from a user, a size-reduced image is generated at high speed from image data of an original resolution and displayed on the monitor 39.

In step S211, compressed image data of an original resolution recorded on the HDD 38 is read into the RAM 35 by a command transmitted from the CPU 36. Next, in step S212, the CPU 36 reads the compressed image data recorded on the RAM 35 only for an amount corresponding to a predetermined resolution, and obtains wavelet coefficients. Then, the CPU 36 performs processing on the wavelet coefficients according to the present invention, thereby generating a size-reduced image. In step S213, the CPU 36 writes the generated size-reduced image to another region in the RAM 35. In step S214, the size-reduced image is transmitted to and displayed on the monitor 39 by a command transmitted from the CPU 36.

FIG. 14 is a flowchart for illustrating the basic flow of an operation of generating a size-reduced image in an image data generator according to a fourth embodiment of the present invention. FIG. 15 is a diagram showing a code configuration according to the fourth embodiment of the present invention. FIG. 16 is a diagram showing the relationship between decomposition level and resolution level according to the fourth embodiment of the present invention.

A description will be given of the case where a size-reduced image is generated based on an image defined by the even number of rows of pixels and the even number of columns of pixels, the image being compressed in compliance with a JPEG-2000 format using the color conversion of the equations (5) and 5 × 3 wavelet transform in an image data generator having the above-described configuration according to the present invention.

In the operation of generating a size-reduced data in this embodiment, first, in step S1, the resolution level of a size-reduced image to be generated is set to (resolution level) r based on a resolution (1/k) specified by a user. It is preferable that the image data generator include a part that allows the user to specify a desired resolution. Then, in step S2, (resolution level) i is set to zero. In steps S3 through S5, i is incremented until i reaches r. During this process, in step S4, the entropy codes of all components are decoded with respect to each resolution level i. The decoding of the entropy codes is the decoding of variable length codes, and an MQ-coder is employed for the decoding in JPEG 2000. Since the decoding of the entropy codes is irrelevant to the point of this embodiment, a description thereof will be omitted.

FIG. 15 shows the codes of the components arranged in the following order: component 0 (luminance), component 1 (color difference Cb), and component 2 (color difference Cr) of resolution 0 (minimum resolution), components 0, 1, and 2 of resolution 1, components 0, 1, and 2 of resolution 2, .... As is well known, in JPEG 2000, the codes of all components can be arranged in the order of resolutions as shown in FIG. 15. Therefore, it is possible to extract only the wavelet coefficients from the lowest resolution up to a desired resolution with ease (steps S1 through S5).

In this specification, the expression of a 1/3 "resolution" is frequently used, while in JPEG 2000, a quantity called "resolution level" is employed as a quantity similar to "resolution." The lowest resolution is 0, and the second lowest resolution is 1. FIG. 16 shows the relationship between decomposition level and resolution level. Each "LL" sub-band takes an exceptional value in this relationship. That is, the resolution level of 3LL is resolution level 0, the resolution level of 3HL, 3LH, and 3HH is resolution level 1, the resolution level of 2HL, 2LH, and 2HH is resolution level 2, and the resolution level of 1HL, 1LH, and 1HH is resolution level 3. Further, the resolution level of 2LL is resolution level 1, and the resolution level of 1LL is resolution level 2.

The ratio of the resolution of revolution level r to the resolution of an original image depends on the maximum value of the decomposition level. If the maximum value of the decomposition level is d, the resolution of the wavelet coefficients (sub-band) of resolution level r ($r > 0$) with respect to the original image is $1/2^{(d-r+1)}$. Therefore, the value of r that should be set in step S1 in order to generate a 1/k scale image of the original image is given by:

$$r = d - (\log_2 k - 1) \qquad (7)$$

Accordingly, when the desired resolution (1/k) with respect to the original image is provided by the user, the value of r is calculated by the equation (7) to be set in step S1. In the case of generating a size-reduced image having an aspect ratio different from that of its original image as shown in FIG. 8B, if the resolution of the size-reduced image is specified by a user as 1/kh horizontally and 1/kv vertically with respect to the original image, the smaller of kh and kv is defined as k. Then, r is calculated by the equation (7) to be set in step S1, so that the operation of FIG. 14 is performed.

Normally, the wavelet coefficients are quantized, and therefore, should be inversely quantized before being subjected to inverse wavelet transform. Therefore, when the decoding is completed in each resolution level i lower than resolution level r (that is, "NO" in step S3), in step S6, all of the decoded wavelet coefficients are inversely quantized. Thereafter, in step S7, the inversely quantized wavelet coefficients are subjected to a selected inverse wavelet transform operation. The selected inverse wavelet transform operation of step S7, which forms an important part of the present invention, is composed of an LL generating operation performed shown in FIG. 17, a horizontal pixel position determining and horizontal filtering operation performed shown in FIG. 19, and a vertical pixel position determining and vertical filtering operation performed shown in FIG. 21, which will be described later. Each of the operations of FIGS. 17, 19, and 21 according to this embodiment is performed with respect to each component. In step S8, an inverse color conversion operation is performed when there are two or more components.

FIG. 17 is a flowchart for illustrating the LL generating operation performed on each component according to the fourth embodiment of the present invention. FIG. 18 is a flowchart for illustrating the operation of FIG. 17 in detail. FIG. 18 illustrates an operation of obtaining the coefficients of an LL sub-band having a resolution lower than that of a size-reduced image to be generated.

According to this embodiment, first, in step S11 of FIG. 17, the LL generating operation is performed on the luminance Y. Next, in step S12, r is decremented by two (r = r-2), and the LL generating operation is performed on the color difference Cb. Then, in step S13, r is incremented by one (r = r+1), and the LL generating operation is performed on the color difference Cr. Similarly, when the resolution of luminance is reduced in the ratio of k : 1, the resolution of Cr and the resolution of Cb are reduced in the ratio of 2k : 1 and 4k : 1, respectively. Then, as far as Cr and Cb are concerned, k in FIGS. 20 and 22 are treated as 2k and 4k, respectively.

FIG. 18 shows that by using the wavelet coefficients of four sub-bands, (new) LL coefficients of a decomposition level lower than that of the four sub-bands by one are generated. By recursively repeating this operation, all of the LL coefficients that have the highest resolution below the desired resolution level r can be obtained. That is, according to the LL generating operation performed on each component, in step S14 of FIG. 18, i is set to one (i = 1). Then, in steps S15 through S17, i is incremented until i reaches r. During this process, in step S16, with respect to each resolution level i, using an LL sub-band and three HL, LH, and HH sub-bands of resolution level i, inverse wavelet transform is performed to generate a new LL sub-band for a specified component. When the generation of a new LL sub-band is completed in each resolution level i below resolution level r (that is, "NO" in step S15), in step S18, the number of vertical pixels (rows) LLheight and the number of horizontal pixels (columns) LLwidth of the new LL sub-band are retained. Then, in step S19, the LL generating operation ends. Thereby, all of the wavelet coefficients of the LL sub-band having the highest resolution below the resolution of a size-reduced image to be generated are obtained.

As described in step S12, with respect to the color difference Cb, the LL sub-band is generated using the sub-bands of up to a resolution level lower than that of the luminance Y by two. With respect to the color difference Cr, the LL sub-band is generated using the sub-bands of up to a resolution level higher than that of the color difference Cb by one. In the case of FIG. 17, the resolution of the color difference Cr is set to a half of the resolution of the luminance Y.

FIG. 19 is a flowchart for illustrating the horizontal pixel position determining and horizontal filtering operation performed on each component according to the fourth embodiment of the present invention. FIG. 20 is a flowchart for illustrating the operation of FIG. 19 in detail.

According to this embodiment, first, in step S21 of FIG. 19, the horizontal pixel position determining and horizontal filtering operation is performed on the luminance Y. Next, in step S22, the horizontal pixel position determining and horizontal filtering operation is performed on the color difference Cb. Then, in step S23, the horizontal pixel position determining and horizontal filtering operation is performed on the color difference Cr.

FIG. 20 shows the operation of obtaining the maximum value p of $2^n$ smaller than k, obtaining the horizontal positions of the above-described "pixels desired to be finally obtained" with k/p being employed as a unit (a horizontal position determining operation), and performing horizontal filtering on all of the vertical positions of each of the horizontal positions. Although horizontal filtering is performed on all of the vertical positions, the wavelet coefficients can be selected so as to be selectively subjected to inverse wavelet transform. This is because the horizontal position determining operation is performed. That is, according to'the horizontal pixel position determining and horizontal filtering operation, first, in step S24 of FIG. 20, the maximum value p of $2^n$ smaller than k is obtained based on the resolution 1/k specified by the user. Next, in step S25 i is set to zero (i = 0). Then, in step S26, a horizontal position xs is determined by xs = |_ik/p_|. Thereafter, in steps S27 and S28, i is incremented until xs equals 2 × LLwidth (xs = 2 × LLwidth), while step S26 is performed. During this process, in step S29, horizontal filtering is performed on all of the vertical positions of each column whose X-coordinate value is xs. If the result of step S27 is "NO", the operation ends. As stated above, when the aspect ratio of a size-reduced image is different from that of the original image, if a desired resolution (1/kh horizontally and 1/kv vertically) with respect to the original image is provided by a user, the value of r is calculated by the equation (7) using the smaller of kh and kv as k.

At this point, the number of adjacent pixels to be obtained can be reduced by first selecting (0, 0) of FIG. 2, that is, a horizontally and vertically even-numbered position, as the "vertex pixel of the pixels desired to be finally obtained" of each component.

FIG. 21 is a flowchart for illustrating the vertical pixel position determining and vertical filtering operation performed on each component according to the fourth embodiment of the present invention. FIG. 22 is a flowchart for illustrating the operation of FIG. 21 in detail.

According to this embodiment, first, in step S31, the vertical pixel position determining and vertical filtering operation is performed on the luminance Y. Next, in step S32, the vertical pixel position determining and vertical filtering operation is performed on the color difference Cb. Then, in step S33, the vertical pixel position determining and vertical filtering operation is performed on the color difference Cr.

The vertical pixel position determining and vertical filtering operation, which is similar to the horizontal pixel position determining and horizontal filtering operation of FIGS. 19 and 20, is performed only on necessary pixel positions. As previously described, the necessity of a pixel is determined based on whether the vertical position of the pixel is even-numbered or odd-numbered. That is, according to this embodiment, first in step S41, i and j are set to zero (i = j = 0). Then, in step S42, a horizontal position xs is determined by xs = |_ik/p_|. In step S43, it is determined whether xs < 2 × LLwidth holds. If xs < 2 × LLwidth (that is, "YES" in step S43), steps S44 and S45 (will be later described) are performed. In the case of "NO" in step S45, in step S46, i is incremented by one and j is set to zero (j = 0). If xs ≥ 2 × LLwidth (that is, "NO" in step S43), the operation ends. In step S44, a vertical position ys is determined by ys = |_jk/p_|. In step S45, it is determined whether ys < 2 × LLheight holds. If ys < 2 × LLheight (that is, "YES" in step S45), steps S48 and S49 (will be later described) are performed, and in step S47, j is incremented by one (i = j+1), and the operation returns to step S44. This process continues until ys equals 2 X LLheight. If ys ≥ 2 × LLheight (that is, "NO" in step S45), in step S46, i is incremented by one and j is set to zero (j = 0), and the operation returns to step S42. In step S48, vertical filtering is performed only on each pixel position whose Y-coordinate value is ys. In step S49, each pixel value after the filtering is stored in the position (i, j) in a buffer for reduced component. Thereafter, as previously described, step S47 is performed. In FIG. 22, the operation of obtaining xs may be omitted. In this case, the vertical filtering is performed with respect to each horizontal position (column). Besides, when the aspect ratio of a size-reduced image is different from that of the original image, if a desired resolution (1/kh horizontally and 1/kv vertically) with respect to the original image is provided by a user, the horizontal position xs is determined by xs = |_ikh/p_| in step S42 and the vertical position ys is determined by ys = |_jkv/p_| in step S44.

FIG. 23 is a diagram for illustrating the inverse color conversion operation according to this embodiment.

The maximum value of the decomposition level and the number of vertical pixels (height) and the number of horizontal pixels (width) of an original image can be read from the headers of the codes, and the number of vertical pixels and the number of horizontal pixels of a size-reduced image to be finally generated are given by |_height/k_| and |_width/k_|, respectively, and also used in the inverse color conversion operation. The color difference components are subjected to inverse wavelet transform only up to resolutions lower than that of the luminance component by one or more levels. Therefore, the number of pixels of the size-reduced image to be generated is defined by the following:

Color difference Cb:

Vertical pixels |_height/4k_|,
Horizontal pixels |_width/4k_| ;

Color difference Cr:

Vertical pixels |_height/2k_|,
Horizontal pixels |_width/2k_|.

Similarly, when the aspect ratio of a size-reduced image is different from the original image, the number of pixels of the size-reduced image to be generated is defined by the following:

Color difference Cb:

Vertical pixels |_height/4kv_|,
Horizontal pixels |_width/4kh_|;

Color difference Cr:

Vertical pixels |_height/2kv_|,
Horizontal pixels |_width/2kh_|.

In the inverse color conversion operation, if i < |_height/k_| and j < |_width/k_|, later-described steps S55 through S59 are performed. That is, first, in step S51 of FIG. 23, i and j are zero (i = j = 0). Then, (in the case of "YES" in step S52) in step S54, i is incremented by one until i equals |_height/k_| with j being set to zero (j = 0). During this operation, below-described operations are performed, and if it is determined in step S52 that i ≥ |_height/k_|, the operation ends. The operations performed during the above-described operation are as follows. In the case of "YES" in step S53, steps S55 through S59 are performed until j equals |_width/k_|. If it is determined in step S53 that j ≥ |_width/k_| (that is, "NO" in step S53), i is incremented and j is set to zero (j = 0), and the operation returns to step S52. In step S55, with respect to the luminance Y, Y is determined to be the value of the position (i, j) in the buffer for reduced component of the luminance Y. In step S56, with respect to the color difference Cb, Cb is determined to be the value of the position (i/4, j/4) in the buffer for reduced component of the color difference Cb. In step S57, with respect to the color difference Cr, Cr is determined to be the value of the position (i/2, j/2) in the buffer for reduced component of the color difference Cr. Next, in step S58, inverse color conversion is performed by the above-described equations (6), and in step S59, the R, G, and B values are stored in the position (i, j) in a buffer for size-reduced image.

As previously described, in the case of obtaining the 1/3-resolution image of an original image, the wavelet coefficients of up to an LL sub-band (and HL, LH, and HH sub-bands) that may be interleaved to have a resolution (or pixels) half the resolution (or pixels) of the original image are obtained, and the 2/3-resolution image of the interleaved coefficients of the LL sub-band is generated by the processing of the present invention.

FIGS. 24A and 25A are diagrams showing pixels to be obtained in the case of generating the 2/3-resolution image of the interleaved coefficients. In FIG. 24A, those pixels in the state after horizontal filtering at the time of an inverse wavelet transform operation are indicated by shading. In FIG. 25A, those pixels in the state after vertical filtering at the time of the inverse wavelet transform operation are indicated by shading. Further, in FIGS. 24A and 25A, the pixels to be finally obtained are shown underlined as in FIG. 8A. In a coefficient array 8 of FIG. 24A and a coefficient array 9 of FIG. 25A, as in FIGS. 9A and 8A, the "coefficient positions to be obtained" are indicated by shading as the state after horizontal filtering and the state after vertical filtering, respectively, at the time of the inverse wavelet transform operation. The coefficient values of FIGS. 24A and 25A correspond to those of FIGS. 3 and 2, respectively. The number of pixels of the original image in FIGS. 24A and 25A is different from that in FIGS. 8A and 9A. FIGS. 24B and 25B show pixels to be obtained in the case of generating a $10 \times 8$ image of the $16 \times 16$ interleaved coefficients (sub-band). In FIG. 24B, the coefficient positions to be subjected to horizontal inverse wavelet transform are indicated by shading, and in FIG. 25B, the coefficient positions to be subjected to vertical inverse wavelet transform are indicated by shading.

The above description is given of the selective inverse wavelet transform operation according to the present invention. A description will now be given of an image data generator, an image data generating method, and an image data generating program for generating decoded image data of a desired resolution (desired size-reduced image data), balancing decoding speed and decoded image quality by decoding part of the codes of wavelet coefficients in an entropy decoding part in generating a size-reduced image. A description will also be given of a recording medium storing such a program.

Decoding is often employed in generating a size-reduced image to be displayed on a display unit having a small screen. In this case, since the display unit is limited in representation performance, the image quality of the size-reduced image itself may not be strictly questioned. Rather, decoding time may become an issue. Further, due to the limited representation performance of the display unit, the degradation of data on the size-reduced image often cannot be observed visually.

In a method that can make a selection as to not only resolution (band) but also the ratio of codes to be decoded (code-decoding ratio) in an entropy decoding part, such as JPEG 2000, the entropy decoding of wavelet coefficients can be performed at high speed by limiting the code-decoding ratio. In the case of JPEG 2000, since the binary representation of a wavelet coefficient is decoded bit by bit from MSB (Most Significant Bit) to LSB (Least Significant Bit), decoding image quality and decoding speed can be optimized by selecting an appropriate bit up to which the decoding is to be performed. In the case of displaying an image on a display unit having a limited display capability as previously described, it is often the case that it is not necessary to decode all codes.

FIG. 26 is a block diagram showing an image data generator 40 according to this embodiment.

The image data generator 40, which generates data on a size-reduced image of an original image, includes a coefficient decoding part 41 decoding coded wavelet coefficients and a code omitting part 42.

The code omitting part 42 omits, of the codes of the same sub-band, the codes that are not to be decoded. The coefficient decoding part 41 decodes the codes other than those omitted in the code omitting part 42. That is, the coefficient decoding part 41 decodes part of the codes of the same sub-band. As will be later described, the image data generator 40 may decode part of a layer and obtain a size-reduced image based on the decoded data. According to this embodiment, it is possible to generate size-reduced data, balancing decoding speed and decoded image quality. The partial decoding according to the present invention excludes the case of performing no decoding, which case is equivalent to the case of omitting decoding by band restriction.

In realizing the above-described optimization, it is important to reduce the amount of codes to be decoded while controlling the effect on image quality. It is well known that in the case of wavelet transform, quantization error generated in coefficients affects image quality differently in each sub-band (each of LL, HL, LH, and HH). The LL sub-band has the'largest effect on image quality, and generally, HL ≈ LH > HH holds in terms of the magnitude of the effect on image quality. Accordingly, normally, the LL sub-band is least quantized while the HH sub-band is most quantized. Further, as in the above-described case of JPEG 2000, decoding only a number of high-order bit planes (will be later described) with the remaining low-order bit planes being left undecoded is equivalent to losing lower bits by quantization. This means that it is possible to provide a greater code-decoding ratio to the LL sub-band and a smaller code-decoding ratio to the HH sub-band.

Further, it is well know that in the case of wavelet transform, the effect of quantization error generated in coefficients on image quality differs depending on the decomposition level. The effect becomes greater as the decomposition level becomes higher.

Therefore, according to this embodiment, the sub-bands may be provided with different code-decoding ratios. That is, the amount or ratio of codes to be omitted (not to be decoded) in the code omitting part 42 may be caused to differ among the sub-bands. According to this configuration, by considering the effect on image quality by each sub-band, a size-reduced image can be generated with decoding speed and decoded image quality being optimized.

Further, according to this embodiment, the LL, HL, LH, and HH sub-bands may be provided with different code-decoding ratios. That is, the amount or ratio of codes to be omitted in the code omitting part 42 may be caused to differ among the sub-bands of the same decomposition level. According to this configuration, by considering the effect on image quality by each of the sub-bands of the same decomposition level, a size-reduced image can be generated with decoding speed and decoded image quality being optimized.

Further, according to this embodiment, the decomposition levels may be provided with different code-decoding ratios. That is, the amount or ratio of codes to be omitted in the code omitting part 42 may be caused to differ among the decomposition levels. According to this configuration, by considering the effect on image quality by each decomposition level, a size-reduced image can be generated with decoding speed and decoded image quality being optimized.

In the case of compressing an original image, which is, for instance, a color image formed of three components of R, G, and B, normally, in order to increase the compression rate, color conversion is performed on the R, G, and B components so that the R, G, and B components are converted to three new components of one luminance and two color differences, and wavelet transform is performed independently on each of the new components obtained after the color conversion.

As previously described, RCT, which is one of color conversion methods employed in JPEG 2000, is given by the following:

$$\text{Luminance } Y = \lfloor (R+2G+B)/4 \rfloor$$

$$\text{Color difference } Cr = R - G$$

$$\text{Color difference } Cb = B - G \qquad (8)$$

The inverse conversion of RCT is given by the following:

$$R = G + Cr$$

$$G = Y - \lfloor (Cr+Cb)/4 \rfloor$$

$$B = Cb + G \qquad (9)$$

where the symbol |_x_| represents a floor function of x that replaces a real number x with the largest of all the integers smaller than or equal to x.

In this case, it is well known that the effect of quantization error generated in coefficients on image quality differs among the components. In the case of the luminance-color difference system, the luminance exerts the largest effect. Further, it is also well known that the effect differs between the color differences. In the case of no color conversion, the G component has the largest effect.

Therefore, according to the present invention, in an apparatus decoding the wavelet coefficients of a plurality of components, the components may be provided with different code-decoding ratios. That is, decoding may be performed component by component, and the amount or ratio of codes to be omitted in the code omitting part 42 may be caused to differ among the components. According to this configuration, by considering the effect on image quality by each component, a size-reduced image can be generated with decoding speed and decoded image quality being optimized.

Further, according to this embodiment, the LL sub-band may be provided with the smallest amount or ratio of codes not to be decoded. According to this configuration, by considering the effect on image quality by the LL sub-band, a size-reduced image can be generated with decoding speed and decoded image quality being optimized.

Further, according to this embodiment, the HH sub-band may be provided with the largest amount or ratio of codes not to be decoded. According to this configuration, by considering the effect on image quality by the HH sub-band, a size-reduced image can be generated with decoding speed and decoded image quality being optimized.

Further, according to this embodiment, a higher decomposition level may be provided with a smaller amount or ratio of codes not to be decoded. According to this configuration, by considering the effect on image quality by the decomposition level, a size-reduced image can be generated with decoding speed and decoded image quality being optimized.

Further, according to this embodiment, in an apparatus decoding a luminance component, the luminance component may be provided with the smallest amount or ratio of codes not to be decoded of all components. According to this configuration, by considering the effect on image quality by luminance, a size-reduced image can be generated with decoding speed and decoded image quality being optimized.

Further, according to this embodiment, in an apparatus decoding a plurality of color-difference components, the color-difference components may be provided with different amounts or ratios of codes not to be decoded. According to this configuration, by considering the effect on image quality by each color-difference component, a size-reduced image can be generated with decoding speed and decoded image quality being optimized.

Further, according to this embodiment, in an apparatus decoding a luminance component Y and two color-difference components Cb and Cr, Y < Cr < Cb may hold in terms of the amount or ratio of codes not to be decoded. It is empirically known that in light of human visual characteristics, Cb has a smaller effect than Cr. According to this configuration, by considering the effect on image quality by each of Cb and Cr, a size-reduced image can be generated with decoding speed and decoded image quality being optimized.

Normally, in order to generate a size-reduced image of a desired size, codes are decoded to a size larger than the desired size and thinned out after being subjected to inverse wavelet transform, or codes are decoded to a size smaller than the desired size and subjected to interpolation. When these decoding cases are compared at the same decomposition level (to be subjected to decoding), the code-decoding ratio should be set higher in the latter case (with interpolation processing) than in the former case (with thinning-out processing).

Therefore, the image data generator 40 of this embodiment may include a part decoding only a sub-band of a size smaller than or equal to a desired image size. In other words, the codes are extracted in the size of an LL sub-band. According to this configuration, by restricting the size of a sub-band to be decoded, a size-reduced image can be generated with decoding speed and decoded image quality being optimized.

Further, the image data generator 40 of this embodiment may include a part decoding only a sub-band of a size smaller than a desired image size and a part thinning out the decoded sub-band. According to this configuration, by restricting the size of a sub-band to be decoded, a size-reduced image can be generated with decoding speed and decoded image quality being optimized.

Further, the image data generator 40 of this embodiment may include a part decoding sub-bands of up to the maximum of sizes smaller than or equal to a desired image size and a part performing interpolation. According to this configuration, by restricting the size of a sub-band to be decoded, a size-reduced image can be generated with decoding speed and decoded image quality being optimized.

The above description is given, focusing on the image data generator performing the partial decoding of the present invention. The present invention may also be realized as: an image data generating method including the processing steps performed in the image data generator; a program for causing a computer to function as the above-described image data generator or as each part thereof or a program for causing a computer to execute the image data generating method (a computer program with the contents of the processing steps); and a computer-readable recording medium recording the program (a computer-readable information recording medium recording the contents of the processing steps). As is apparent from a later-described embodiment, by this image data generating method of the present invention, a size-reduced image can be generated with decoding speed and decoded image quality being balanced or optimized. Further, this program makes it possible to provide a system that can generate a size-reduced image, balancing or optimizing decoding speed and decoded image quality, by the operations corresponding to the above-described embodiment. Further, this recording medium makes it possible to provide a system that can generate a size-reduced image, balancing or optimizing decoding speed and decoded image quality, with the configurations corresponding to the above-described embodiment. It is apparent that this program and this recording medium can be realized easily based on the later-described embodiment in addition to the above-described embodiment.

A description will be given of a recording medium storing a program or data for realizing the image data generating function of the present invention according to a sixth embodiment of the present invention.

Specifically, the recording medium may be any of a CD-ROM, a magneto-optical disk, a DVD-ROM, a FD, a flash memory, and other various ROMs and RAMs. The recording medium is recorded with a program for causing a computer to execute the functions relating to the above-described embodiment according to the present invention so as to realize the image data generating function of the present invention. By distributing this recording medium, the above-described functions can be realized easily. Then, the image data generating function according to the present invention can be performed by loading the recording medium into an information processing apparatus such as a computer and causing the information processing apparatus to read out the program or by storing the program in a recording medium provided in an information processing apparatus and reading out the program as required.

A specific description will be given of the partial decoding operation of the present invention.

As will be later described, the amount or ratio of codes not to be decoded in the partial decoding operation of the present invention means, for instance, the "number of bit planes not to be decoded" or the "number of bit planes not to be decoded against the total number of coded bit planes."

Since this embodiment employs an apparatus configuration equal to those described with reference to FIGS. 12 and 13, a description thereof will be omitted.

In this embodiment, JPEG 2000 selecting the $5 \times 3$ wavelet transform is employed. Therefore, a description will first be given of the outline of the JPEG 2000 operation. The application range of the present invention is not limited to JPEG 2000.

Referring again to FIG. 11, the rightward arrow (→) and the leftward arrow (←) in the JPEG 2000 encoding and decoding processes indicate the direction of encoding (compression) and the direction of decoding (decompression), respectively. FIG. 11 shows that at the time of decoding, the wavelet coefficients of each component obtained through entropy decoding and inverse quantization (as required) are subjected component by component to inverse wavelet transform and then inverse color conversion to be returned to the R, G, and B pixel values.

Since the color space conversion and inverse conversion part 21 is previously described, a description will now be given of a size-reduced image generating operation according to this embodiment while defining "sub-band" and "decomposition level."

Since wavelet transform and inverse wavelet transform themselves are described with reference to FIGS. 2 through 6, 10, 11, and 15, a description thereof will be omitted.

A description will be given of the encoding of the wavelet coefficients of each sub-band. As is well known, in JPEG 2000, it is possible to code the coefficients from MSB to LSB in bit planes in each sub-band. Strictly, the encoding is performed by subdividing each bit plane, a description of which is omitted.

FIG. 27A is a diagram showing the coefficients of a 2LL sub-band, and FIG. 27B is a diagram showing the coefficients divided into bit planes. FIG. 28 is a diagram showing a code configuration according to the sixth embodiment. FIG. 28 shows that codes can be arranged in the order the codes are arranged from top to bottom in FIG. 28.

Here, it is supposed that the coefficients of the 2LL sub-band $5_1$ of FIG. 6 take the values shown in FIG. 27A. These values are expressed in binary numbers and the binary numbers of the same digit position are grouped into a bit plane. The coefficients of FIG. 27A can be divided into the four bit planes of FIG. 27B. The decimal number 15 is expressed as a binary 1111, so that a binary 1 occupies the position corresponding to 15 in each bit plane.

In JPEG 2000, each bit plane is individually coded. That is, it is possible to generate codes with the configuration of FIG. 28. FIG. 28 shows that the codes start from the 2LL sub-band and end at the 1HH sub-band. The bit planes are coded in order from the MSB bit plane to the LSB bit plane, and the decoder can recognize the total number of coded bit planes. Therefore, the decoder can easily omit the decoding of the LSB bit plane or the decoding of the two bit planes counted from the LSB bit plane.

Based on the above, a description will be given of the basic flow of a size-reduced image generating operation to which the partial decoding of the present invention is applied.

FIG. 29 is a flowchart for illustrating the basic flow of the size-reduced image generating operation performed in an image data generator according to the sixth embodiment of the present invention. FIGS. 30 through 32 are flowcharts for expatiating the partial decoding in the operation of FIG. 29, showing the partial decoding in the luminance component Y, the color difference component Cr, and the color difference component Cb, respectively.

A description will be given, with reference to FIGS. 29 through 32, of an operation of generating a size-reduced image based on image data compressed losslessly using the color conversion of the equations (8) and $5 \times 3$ wavelet transform in the image data generator having the configuration of FIG. 12 or 13 according to the sixth embodiment of the present invention. Since the image data is compressed by lossless compression, all of the bit planes of all of the sub-bands are coded.

According to the size-reduced image generating operation of this embodiment, first, in step S71 of FIG. 29, the resolution level of a size-reduced image to be generated is set to (resolution level) $\underline{r}$ based on a resolution (1/k) specified by a user. Then, in step S72, (resolution level) $\underline{i}$ is set to zero ($\underline{i}$ = 0) and $\underline{r}$ is decreased by one ($\underline{r}$ = r-1). In steps S73 through S75, $\underline{i}$ is incremented while $\underline{i}$ satisfies $\underline{i} \leq \underline{r}$. During this process, in step S74, the entropy codes of all components are decoded with respect to each resolution level $\underline{i}$. Additionally, as stated above, when the aspect ratio of a size-reduced image is different from that of the original image, if a desired resolution (1/kh horizontally and 1/kv vertically) with respect to the original image is provided by a user, the value of $\underline{r}$ is calculated by the equation (7) using the smaller of kh and kv as $\underline{k}$. It is clear that the following examples can be modified to the above case easily.

FIG. 28 shows the codes of the components arranged in the following order: component 0 (luminance), component 1 (color difference V), and component 2 (color difference U) of resolution 0 (minimum resolution), components 0, 1, and 2 of resolution 1, components 0, 1, and 2 of resolution 2, .... As is well known, in JPEG 2000, the codes of all components can be arranged in the order of resolutions as shown in FIG. 28. Therefore, it is possible to extract only the wavelet coefficients from the lowest resolution up to a desired resolution with ease (steps S71 through S75).

In this specification, the expression of a 1/3 "resolution" is frequently used, while in JPEG 2000, a quantity called "resolution level" is employed as a quantity similar to "resolution." The lowest resolution is 0, and the second lowest resolution is 1. FIG. 16 shows the relationship between decomposition level and resolution level. Each "LL" sub-band takes an exceptional value in this relationship. That is, the resolution level of 3LL is resolution level 0, the resolution level of 3HL, 3LH, and 3HH is resolution level 1, the resolution level of 2HL, 2LH, and 2HH is resolution level 2, and the resolution level of 1HL, 1LH, and 1HH is resolution level 3. Further, the resolution level of 2LL is resolution level 1, and the resolution level of 1LL is resolution level 2.

The ratio of the resolution of revolution level r to the resolution of an original image depends on the maximum value of the decomposition level. If the maximum value of the decomposition level is d, the resolution of the wavelet coefficients (sub-band) of resolution level r (r > 0) with respect to the original image is $1/2^{(d-r+1)}$. Therefore, the value of r that should be set in step S71 in order to generate a 1/k scale image of the original image is given by the above-described equation:

$$r = d - (\log_2 k - 1) \qquad (7)$$

Accordingly, when the desired resolution (1/k) with respect to the original image is provided by the user, the value of r is calculated by the equation (7) to be set in step S71.

Normally, the wavelet coefficients are quantized, and therefore, should be inversely quantized before being subjected to inverse wavelet transform. Therefore, when the decoding is completed in each resolution level i lower than resolution level r (that is, "NO" in step S73), in step S76, all of the decoded wavelet coefficients are inversely quantized. Thereafter, in step S77, the inversely quantized wavelet coefficients are subjected to an inverse wavelet transform operation. The above-described selected inverse wavelet transform operation may be applied as the inverse wavelet transform operation of step S77. Next, in step S78, it is determined whether i equals r. If i does not equal r in step S78, in step S79, thinning-out processing is performed. In the case of a plurality of components, when i equals r (that is, "YES" in step S78) or after thinning-out processing (step S79), in step S80, inverse color conversion is performed and the operation ends.

Partial decoding, which is one feature of the present invention, is the operation of step S74. According to this embodiment, the wavelet coefficients of each component are obtained by partially decoding the codes of each component in the following manner, depending on the value of i of the resolution level (or depending on the decomposition level).

Referring to FIG. 30, first, in step S81, it is determined whether the component is the luminance Y. If the component is other than the luminance Y, the operation of FIG. 31 or 32 is started. With respect to the luminance Y (that is, in the case of "YES" in step S81), in step S82, it is determined whether i ≤ r-2 is satisfied, and in step S84, it is determined whether i ≤ r-1 is satisfied. Based on the results of determination of these steps, the codes of the luminance Y are partially decoded so that the wavelet coefficients of the luminance Y are obtained.

When i ≤ r-2 (that is, "YES" in step S82), in step S83, the codes of all of the bit planes are decoded with respect to each sub-band. Since the LL sub-band exists only at resolution level 0, all of the codes of the LL sub-band are decoded as a result of step S83, so that the amount of codes not to be decoded is minimized.

When r-2 < i ≤ r-1 (that is, "NO" in step S82 and "YES" in step S84), in step S85, decoding is performed on the bit planes of the sub-bands except for the two bit planes counted from the LSB bit plane (that is, the LSB bit plane and the next low-order bit plane) with respect to the HL and LH sub-bands and the three bit planes counted from the LSB bit plane with respect to the HH sub-band.

When r-1 < i ≤ r (that is, "NO" in step S82 and "NO" in step S84), in step S86, decoding is performed on the bit planes of the sub-bands except for the three bit planes counted from the LSB bit plane with respect to the HL and LH sub-bands and the four bit planes counted from the LSB bit plane with respect to the HH sub-band.

With respect to the codes of the color difference Cr, in step S91 of FIG. 31, it is determined whether the component is the color difference Cr. If the component is other than the color difference Cr, the operation of FIG. 32 (or 30) is started. With respect to the color difference Cr (that is, in the case of "YES" in step S91), in step S92, it is determined whether i ≤ r-3 is satisfied, in step S94, it is determined whether i ≤ r-2 is satisfied, and in step S96, it is determined whether i ≤ r-1 is satisfied. Based on the results of determination of these steps, the codes of the color difference Cr are partially decoded so that the wavelet coefficients of the color difference Cr are obtained. With respect to the codes of the color difference Cr, the wavelet coefficients are obtained by further omitting the decoding of one more bit plane than with respect to the codes of the luminance Y.

When i ≤ r-3 (that is, "YES" in step S92), in step S93, the codes of all of the bit planes are decoded with respect to each sub-band.

When r-3 < i ≤ r-2 (that is, "NO" in step S92 and "YES" in step S94), in step S95, decoding is performed on the bit planes of the sub-bands except for the two bit planes counted from the LSB bit plane with respect to the HL and LH sub-bands and the three bit planes counted from the LSB bit plane with respect to the HH sub-band.

When r-2 < i ≤ r-1 (that is, "NO" in step 392, "NO" in step S94, and "YES" in step S96), in step S97, decoding is performed on the bit planes of the sub-bands except for the three bit planes counted from the LSB bit plane with respect to the HL and LH sub-bands and the four bit planes counted from the LSB bit plane with respect to the HH sub-band.

When r-1 < i ≤ r (that is, "NO" in steps S92, S94, and S96), in step S98, decoding is performed on the bit planes of the sub-bands except for the four bit planes counted from the LSB bit plane with respect to the HL and LH sub-bands and the five bit planes counted from the LSB bit plane with respect to the HH sub-band.

With respect to the codes of the color difference Cb, in step S101 of FIG. 32, it is determined whether the component is the color difference Cb. If the component is other than the color difference Cb, the operation of FIG. 30 or 31 is started. With respect to the color difference Cb (that is, in the case of "YES" in step S101), in step S102, it is determined whether i ≤ r-3 is satisfied, in step S104, it is determined whether i ≤ r-2 is satisfied, and in step S106, it is determined whether i ≤ r-1 is satisfied. Based on the results of determination of these steps, the codes of the color difference Cb are partially decoded so that the wavelet coefficients of the color difference Cb are obtained. With respect to the codes of the color difference Cb, the wavelet coefficients are obtained by further omitting the decoding of one more bit plane than with respect to the codes of the color difference Cr.

When i ≤ r-3 (that is, "YES" in step S102), in step S103, the codes of all of the bit planes are decoded with respect to each sub-band.

When r-3 < i ≤ r-2 (that is, "NO" in step S102 and "YES" in step S104), in step S105, decoding is performed on the bit planes of the sub-bands except for the three bit planes counted from the LSB bit plane with respect to the HL and LH sub-bands and the four bit planes counted from the LSB bit plane with respect to the HH sub-band.

When r-2 < i ≤ r-1 (that is, "NO" in step S102, "NO" in step S104, and "YES" in step S106), in step S107, decoding is performed on the bit planes of the sub-bands except for the four bit planes counted from the LSB bit plane with respect to the HL and LH sub-bands and the five bit planes counted from the LSB bit plane with respect to the HH sub-band.

When r-1 < i ≤ r (that is, "NO" in steps S102, S104, and S106), in step S108, decoding is performed on the bit planes of the sub-bands except for the five bit planes counted from the LSB bit plane with respect to the HL and LH sub-bands and the six bit planes counted from the LSB bit plane with respect to the HH sub-band.

Thus, Y < Cr < Cb holds among the components in terms of the amount of codes not to be decoded. Further, the amount of codes not to be decoded is smaller at a higher decomposition level. When each sub-band has the same total number of coded bit planes, the amount of codes not to be decoded is directly equal to the ratio of codes not to be decoded.

In the case of JPEG 2000, an MQ-coder is employed as an entropy coder. In the partial decoding of the present invention, it is important that the code configuration allow partial omission of decoding. Since the details of the entropy decoder have no direct relation to that nature of the partial decoding of the present invention, a description thereof will be omitted.

Referring back to FIG. 29, if i = r+1 in step S78 (that is, "YES" in step S78), the resolution specified by the user matches the resolution level of wavelet transform. Therefore, after performing inverse quantization and inverse wavelet transform, inverse color conversion is performed without thinning-out processing so that a desired size-reduced image is generated. On the other hand, if i = r in step S78 (that is, "NO" in step S78), the resolution level of wavelet transform is higher than the resolution specified by the user. Therefore, in step S79, each of Y, Cr, and Cb is converted to a desired size by well-known thinning-out processing after being subjected to inverse quantization and inverse wavelet transform. In this embodiment, in order to reduce the amount of. processing, thinning-out processing is performed before inverse color conversion instead of thinning out the R, G, and B values obtained after inverse color conversion.

Omitting the decoding of the LSB bit plane is equivalent to dividing (quantizing) the wavelet coefficients by two. Omitting the decoding of the n bit planes counted from the LSB bit plane is equivalent to quantizing the wavelet coefficients by $2^n$. Therefore, in the case of omitting the decoding of bit planes, multiplying the decoded wavelet coefficients by $2^n$ is equivalent to performing inverse quantization on the decoded wavelet coefficients.

In this embodiment, the equations (8) are employed to calculate Y, Cr, and Cb. In the case calculating Y, Cr, and Cb using the well known equations provided by CCIR 601, however, the technique of this embodiment is also applicable. Further, the nearest neighbor method, which is widely used, is taken as an example of thinning-out processing. Since the algorithm of thinning-out processing itself does not affect the theme of the partial decoding of the present invention, an expatiation of the algorithm will be omitted. For the details of the algorithm, "Introduction to Computer Image Processing" (by Hideyuki Tamura, Soken Publishing Ltd., 1985) may be referred to.

FIG. 33 is a flowchart for illustrating the basic flow of another size-reduced image generating operation performed in the image data generator according to this embodiment to which method the partial decoding of the present invention is applied.

In the above-described case, the conditional expression of step S73 is i ≤ r. Therefore, the resolution level of the extracted wavelet coefficients is equal to or higher by one than the resolution specified by the user. If the conditional expression of step S73 is changed to i < r, however, the resolution level lower than the resolution level specified by the user by one can be extracted, so that each of Y, Cr, and Cb is converted to a desired size by well known interpolation processing after being subjected to inverse wavelet transform.

According to the size-reduced image generating operation of FIG. 33 according to this embodiment, first, in step S111, the resolution level of a size-reduced image to be generated is set to(resolution level) r based on a resolution (1/k) specified by the user. Then, in step S112, (resolution level) i is set to zero (i = 0) and r is decreased by one (r = r-1). In steps S113 through S115, i is incremented while i satisfies i ≤ r. During this process, in step S114, the entropy codes of all components are decoded with respect to each resolution level i. As in the above-described case, the operations described with reference to FIGS. 30 through 32 are applicable to the partial decoding operation on Y, Cr, and Cb of step S114.

Normally, the wavelet coefficients are quantized, and therefore, should be inversely quantized before being subjected to inverse wavelet transform. Therefore, when the decoding is completed in each resolution level i lower than resolution level r (that is, "NO" in step S113), in step S116, all of the decoded wavelet coefficients are inversely quantized. Thereafter, in step S117, the inversely quantized wavelet coefficients are subjected to an inverse wavelet transform operation. The above-described selected inverse wavelet transform operation may be applied as the inverse wavelet transform operation of step S117. Next, in step S118, interpolation is performed. The nearest neighbor method, which is widely used, is taken as an example of interpolation. For the expatiation of the algorithm of interpolation, the above-described "Introduction to Computer Image Processing" may be referred to. In the case of a plurality of components, in step S119, inverse color conversion is performed and the operation ends.

Thus, according to the present invention, the wavelet coefficients are subjected to inverse wavelet transform, and in the case of generating a size-reduced image of an original image, the wavelet coefficients in the same sub-band are selectively subjected to inverse wavelet transform. Therefore, the size-reduced image can be generated with a reduced amount of calculation.

Further, according to the present invention, the wavelet coefficients in the same sub-band are partially decoded in performing inverse wavelet transform on the wavelet coefficients and generating a size-reduced image of an original image. Therefore, the size-reduced image can be generated with decoding speed and decoded image quality being balanced with each other.

The present invention is not limited to the specifically disclosed embodiments, but variations and modifications may be made without departing from the scope of the present invention.

The present application is based on Japanese priority application No. 2002-072696 filed on March 15, 2002, the entire contents of which are hereby incorporated by reference.

## Claims

1. An image data generator for generating data on a size-reduced image of an original image, the image data generator including an inverse wavelet transform part performing inverse wavelet transform on wavelet coefficients, **characterized by**:

    a coefficient selecting part selecting, of wavelet coefficients in a sub-band, wavelet coefficients to be subjected to the inverse wavelet transform,
    the image data generator being **characterized in that** said inverse wavelet transform part performs the inverse wavelet transform only on the wavelet coefficients selected in said coefficient selecting part with respect to the wavelet coefficients in the sub-band.

2. The image data generator as claimed in claim 1, **characterized in that** said coefficient selecting part comprises a part selecting at least all of wavelet coefficients relating to pixels of the size-reduced image to be generated.

3. The image data generator as claimed in claim 1, **characterized in that** said coefficient selecting part comprises a part selecting only wavelet coefficients relating to pixels of the size-reduced image to be generated.

4. The image data generator as claimed in any of claims 1 to 3, **characterized in that**:

    the inverse wavelet transform comprises a plurality of inverse wavelet transforms; and
    said coefficient selecting part comprises a part selecting, of the wavelet coefficients in the sub-band in an interleaved state, all of wavelet coefficients positioned on straight lines extending in a direction in which the last one of the inverse wavelet transforms is performed, the straight lines each including a wavelet coefficient corresponding to a pixel position of the size-reduced image to be generated.

5. The image data generator as claimed in any of claims 1 to 3, **characterized in that**:

said inverse wavelet transform is performed two-dimensionally in first and second directions perpendicular to each other in an order described; and

said coefficient selecting part comprises a part that, in selecting wavelet coefficients to be subjected to the inverse wavelet transform performed in the first direction, selects, of the wavelet coefficients in the sub-band in an interleaved state, all of wavelet coefficients positioned on straight lines extending in the second direction, the straight lines including a wavelet coefficient corresponding to a pixel position of the size-reduced image to be generated or a wavelet coefficient required to obtain the pixel position by the inverse wavelet transform in the first direction.

**6.** The image data generator as claimed in any of claims 1 to 5, **characterized in that** said coefficient selecting part comprises a part selecting all of wavelet coefficients in sub-bands of a decomposition level higher than a decomposition level of an LL sub-band having a maximum resolution below a resolution of the size-reduced image to be generated, so that the LL sub-band is obtained by the inverse wavelet transform.

**7.** The image data generator as claimed in any of claims 1 to 6, further **characterized by** a high-pass filter and a low-pass filter having different tap lengths for the inverse wavelet transform,

the image data generator being **characterized in that** the sum of the tap lengths of the high-pass and low-pass filters performing filtering centered on wavelet coefficients corresponding to pixel positions of the size-reduced image to be generated of the wavelet coefficients in the sub-band in an interleaved state is smaller than $d \cdot n(Tlow + Thigh)/2$ where d is a dimensional number of the inverse wavelet transform, n is the number of pixels of the size-reduced image, Tlow is the tap length of the low-pass filter, and Thigh is the tap length of the high-pass filter.

**8.** The image data generator as claimed in any of claims 1 to 7, **characterized in that** the inverse wavelet transform is performed independently on each of a plurality of components with at least one of the components having a resolution set therefor, the resolution being set different from a resolution set for the rest of the components.

**9.** An image data generator for generating data on a size-reduced image of an original image, **characterized by**:

an inverse wavelet transform part performing inverse wavelet transform on wavelet coefficients of a plurality of components, the inverse wavelet transform part performing the inverse wavelet transform independently on each of the components with at least one of the components having a resolution set therefor, the resolution being set different from a resolution set for the rest of the components.

**10.** The image data generator as claimed in claim 8 or 9, **characterized in that**:

the components comprises a luminance component and two color-difference components; and

the luminance component is subjected to the inverse wavelet transform to a resolution higher than the color-difference components.

**11.** An image data generator for generating data on a size-reduced image of an original image, the image data generator including a coefficient decoding part decoding codes into which wavelet coefficients are coded, **characterized by**:

a code omitting part omitting codes not to be decoded of codes in a sub-band,

the image data generator being **characterized in that** said coefficient decoding part decodes codes other than those omitted in said code omitting part.

**12.** The image data generator as claimed in claim 11, further **characterized by** a part causing the amount or ratio of codes omitted in said code omitting part to differ between sub-bands.

**13.** The image data generator as claimed in claim 11 or 12, further **characterized by** a part causing the amount or ratio of codes omitted in said code omitting part to differ between sub-bands of a decomposition level.

**14.** The image data generator as claimed in any of claims 11 to 13, further **characterized by** a part causing the amount or ratio of codes omitted in said code omitting part to differ between decomposition levels.

**15.** The image data generator as claimed in any of claims 11 to 14, further **characterized by** a part causing the amount or ratio of codes omitted in said code omitting part to differ between a plurality of components,

the image data generator being **characterized in that** said coefficient decoding part decodes the codes component by component.

**16.** A method of generating data on a size-reduced image of an original image, the method **characterized by** the steps of:

(a) selecting, of wavelet coefficients in a sub-band, wavelet coefficients to be subjected to inverse wavelet transform; and
(b) performing the inverse wavelet transform on wavelet coefficients,

wherein said step (b) performs the inverse wavelet transform only on the wavelet coefficients selected in said step (a) with respect to the wavelet coefficients in the sub-band.

**17.** A method of generating data on a size-reduced image of an original image, the method **characterized by** the step of:

performing inverse wavelet transform on wavelet coefficients of a plurality of components,

wherein the inverse wavelet transform is performed independently on each of the components with at least one of the components having a resolution set therefor, the resolution being set different from a resolution set for the rest of the components.

**18.** A method of generating data on a size-reduced image of an original image, the method **characterized by** the steps of:

(a) decoding codes into which wavelet coefficients are coded;
(b) omitting codes not to be decoded of codes in a sub-band; and
(c) decoding codes other than those omitted in said step (b).

**19.** A program for causing a computer to execute a method of generating data on a size-reduced image of an original image, the method **characterized by** the steps of:

(a) selecting, of wavelet coefficients in a sub-band, wavelet coefficients to be subjected to inverse wavelet transform; and
(b) performing the inverse wavelet transform on wavelet coefficients,

wherein said step (b) performs the inverse wavelet transform only on the wavelet coefficients selected in said step (a) with respect to the wavelet coefficients in the sub-band.

**20.** A program for causing a computer to execute a method of generating data on a size-reduced image of an original image, the method **characterized by** the step of:

performing inverse wavelet transform on wavelet coefficients of a plurality of components,

wherein the inverse wavelet transform is performed independently on each of the components with at least one of the components having a resolution set therefor, the resolution being set different from a resolution set for the rest of the components.

**21.** A program for causing a computer to execute a method of generating data on a size-reduced image of an original image, the method **characterized by** the steps of:

(a) decoding codes into which wavelet coefficients are coded;
(b) omitting codes not to be decoded of codes in a sub-band; and
(c) decoding codes other than those omitted in said step (b).

**22.** A computer-readable recording medium storing a program for causing a computer to execute a method of generating data on a size-reduced image of an original image, the method **characterized by** the steps of:

(a) selecting, of wavelet coefficients in a sub-band, wavelet coefficients to be subjected to inverse wavelet transform; and
(b) performing the inverse wavelet transform on wavelet coefficients,

wherein said step (b) performs the inverse wavelet transform only on the wavelet coefficients selected in said step (a) with respect to the wavelet coefficients in the sub-band.

**23.** A computer-readable recording medium storing a program for causing a computer to execute a method of generating data on a size-reduced image of an original image, the method **characterized by** the step of:

performing inverse wavelet transform on wavelet coefficients of a plurality'of components,

wherein the inverse wavelet transform is performed independently on each of the components with at least one of the components having a resolution set therefor, the resolution being set different from a resolution set for the rest of the components.

**24.** A computer-readable recording medium storing a program for causing a computer to execute a method of generating data on a size-reduced image of an original image, the method **characterized by** the steps of:

(a) decoding codes into which wavelet coefficients are coded;
(b) omitting codes not to be decoded of codes in a sub-band; and
(c) decoding codes other than those omitted in said step (b).

FIG.1 PRIOR ART

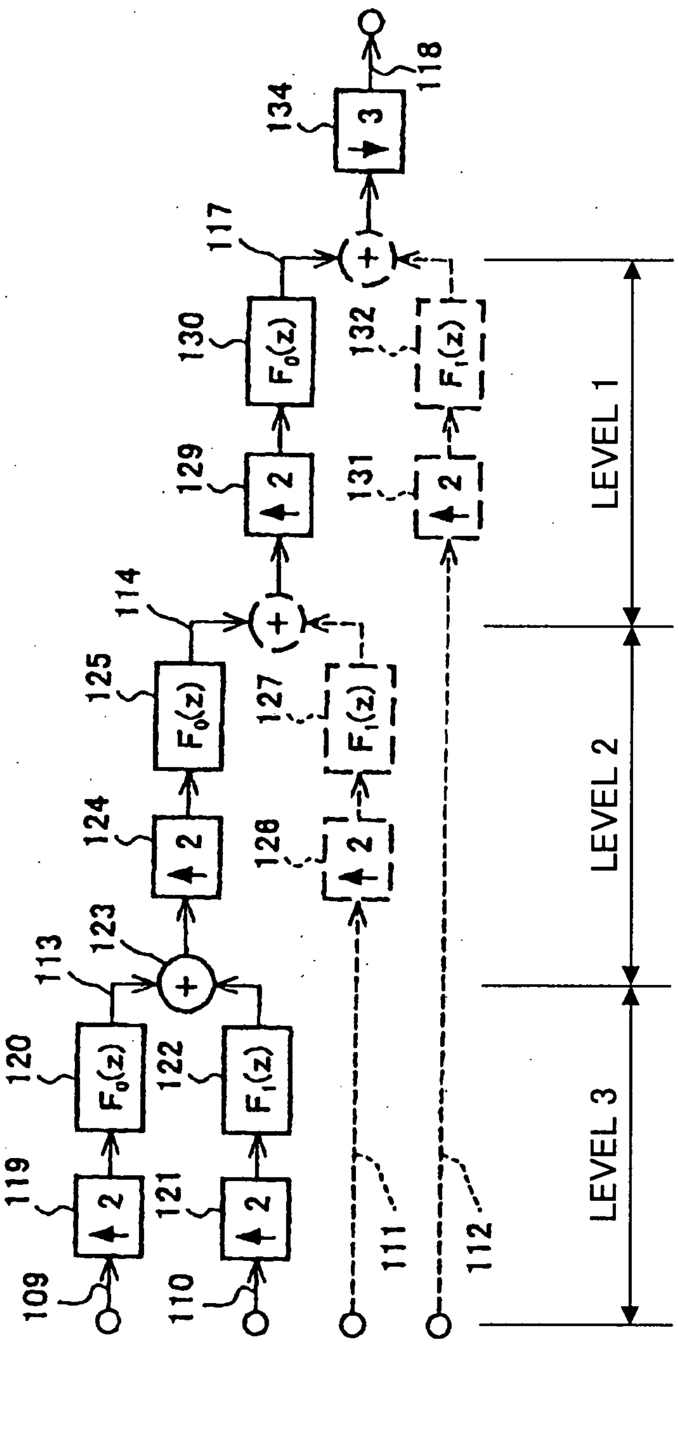

# FIG.2

1

P(0)

X

| | | | | | | | | | | | | | | | | | |
|---|---|---|---|---|---|---|---|---|---|---|---|---|---|---|---|---|---|
| LOW-PASS | EVEN | -3 | -16 | -19 | -42 | -51 | -59 | -70 | -77 | -73 | -68 | -62 | -49 | -38 | -27 | -15 | -10 |
| HIGH-PASS | ODD | -3 | -10 | -24 | -32 | -44 | -65 | -70 | -79 | -79 | -77 | -68 | -53 | -46 | -32 | -22 | -17 |
| | EVEN | -2 | -10 | -23 | -34 | -45 | -64 | -76 | -80 | -83 | -76 | -75 | -60 | -48 | -39 | -25 | -17 |
| Y | ODD | -2 | -7 | -22 | -31 | -45 | -60 | -73 | -78 | -83 | -78 | -77 | -66 | -55 | -42 | -29 | -25 |
| | EVEN | 0 | -6 | -21 | -31 | -50 | -66 | -74 | -81 | -86 | -81 | -76 | -68 | -64 | -42 | -30 | -28 |
| | ODD | 2 | -13 | -27 | -35 | -45 | -61 | -74 | -84 | -85 | -86 | -79 | -69 | -64 | -52 | -44 | -24 |
| | EVEN | -4 | -15 | -23 | -38 | -46 | -60 | -74 | -84 | -89 | -82 | -81 | -75 | -69 | -57 | -46 | -27 |
| | ODD | 1 | -10 | -25 | -36 | -47 | -62 | -72 | -83 | -80 | -65 | -75 | -80 | -78 | -66 | -47 | -33 |
| | EVEN | 3 | -10 | -23 | -38 | -46 | -63 | -72 | -78 | -83 | -88 | -84 | -72 | -63 | -64 | -64 | -42 |
| | ODD | -1 | -11 | -24 | -35 | -43 | -65 | -69 | -80 | -78 | -84 | -81 | -68 | -68 | -73 | -72 | -60 |
| | EVEN | -2 | -11 | -24 | -36 | -41 | -61 | -72 | -76 | -79 | -81 | -80 | -83 | -85 | -77 | -74 | -70 |
| | ODD | -3 | -15 | -23 | -35 | -40 | -60 | -72 | -80 | -80 | -85 | -85 | -81 | -82 | -83 | -73 | -72 |
| | EVEN | -4 | -12 | -18 | -34 | -43 | -56 | -69 | -65 | -74 | -77 | -82 | -83 | -85 | -80 | -80 | -70 |
| | ODD | -5 | -15 | -22 | -32 | -43 | -56 | -67 | -76 | -80 | -75 | -83 | -82 | -86 | -82 | -80 | -76 |
| | EVEN | -4 | -13 | -22 | -32 | -45 | -56 | -68 | -76 | -74 | -76 | -82 | -82 | -83 | -83 | -78 | -75 |
| | ODD | -6 | -11 | -23 | -34 | -45 | -54 | -70 | -75 | -78 | -84 | -79 | -81 | -84 | -85 | -85 | -78 |

P(15)

FIG.3

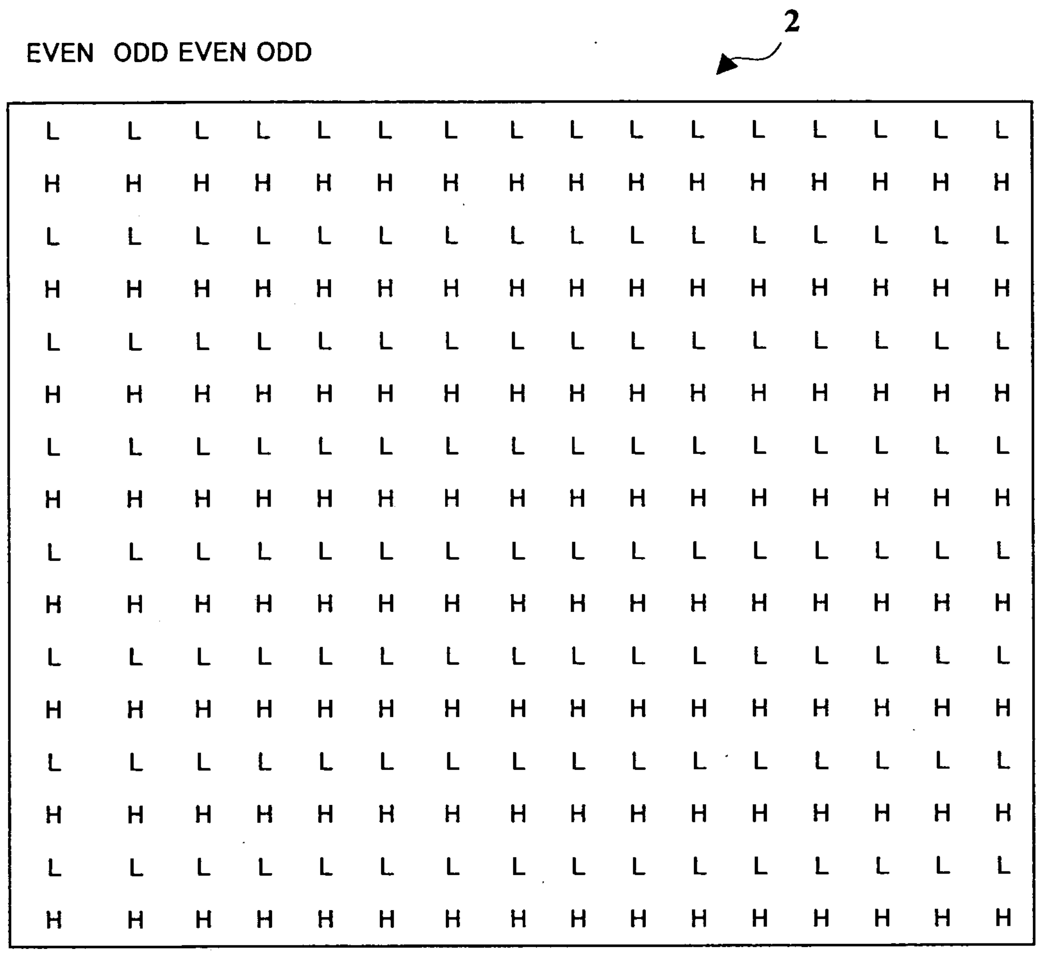
2
EVEN ODD EVEN ODD
L L L L L L L L L L L L L L L L
H H H H H H H H H H H H H H H H
L L L L L L L L L L L L L L L L
H H H H H H H H H H H H H H H H
L L L L L L L L L L L L L L L L
H H H H H H H H H H H H H H H H
L L L L L L L L L L L L L L L L
H H H H H H H H H H H H H H H H
L L L L L L L L L L L L L L L L
H H H H H H H H H H H H H H H H
L L L L L L L L L L L L L L L L
H H H H H H H H H H H H H H H H
L L L L L L L L L L L L L L L L
H H H H H H H H H H H H H H H H
L L L L L L L L L L L L L L L L
H H H H H H H H H H H H H H H H

FIG.4

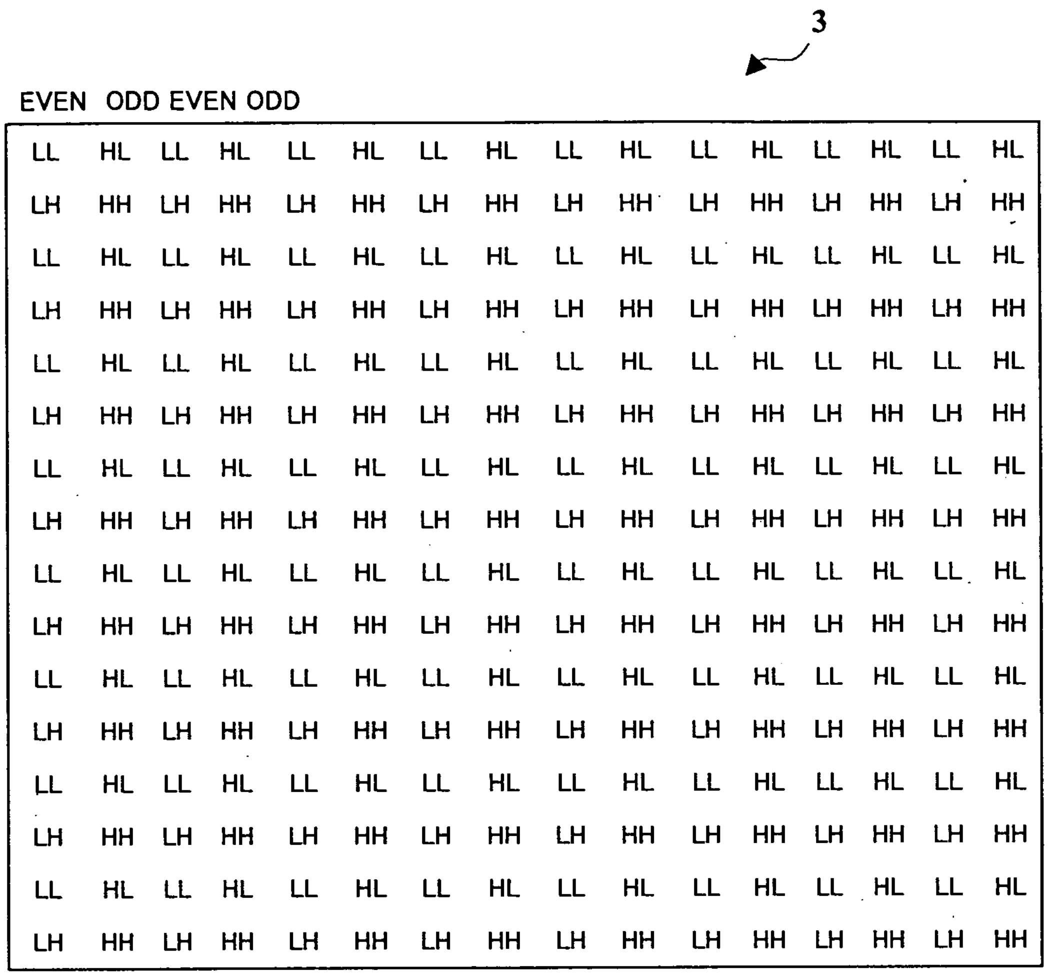
3
EVEN ODD EVEN ODD
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH
LL HL LL HL LL HL LL HL LL HL LL HL LL HL LL HL
LH HH LH HH LH HH LH HH LH HH LH HH LH HH LH HH

FIG.5

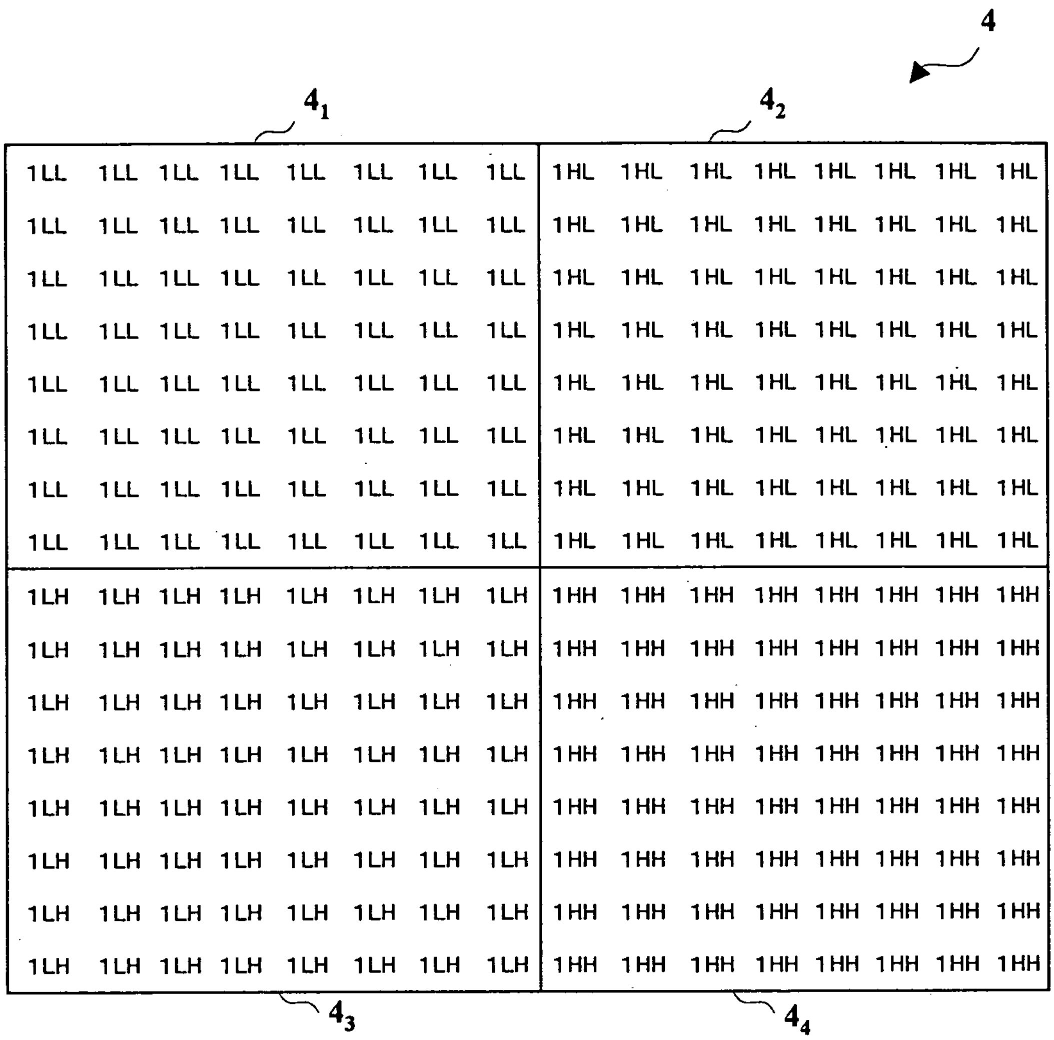
4
$4_1$
$4_2$
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LL 1LL 1LL 1LL 1LL 1LL 1LL 1LL 1HL 1HL 1HL 1HL 1HL 1HL 1HL 1HL
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
$4_3$
$4_4$

FIG.6

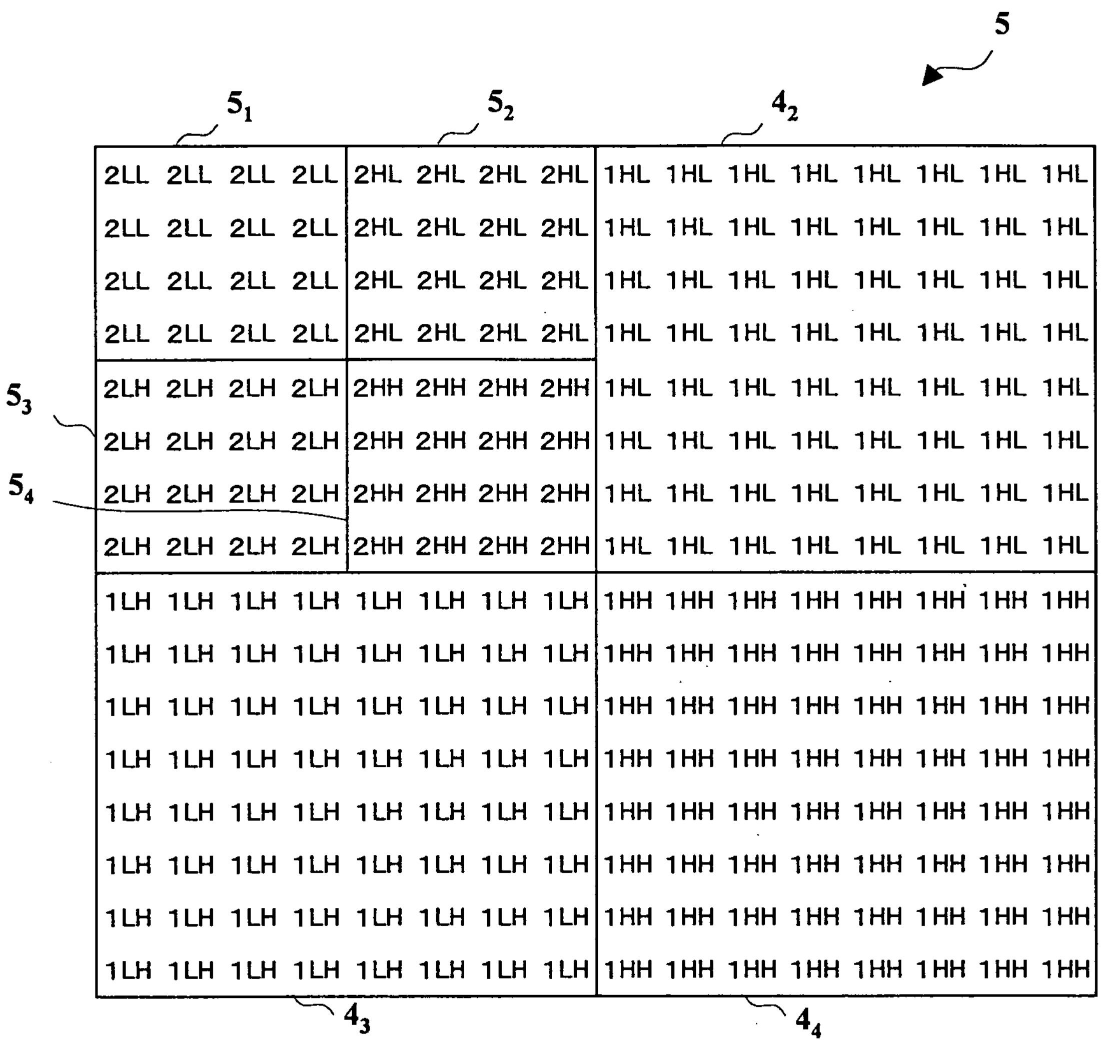
5
$5_1$
$5_2$
$4_2$
$5_3$
$5_4$
$4_3$
$4_4$
2LL 2LL 2LL 2LL 2HL 2HL 2HL 2HL 1HL 1HL 1HL 1HL 1HL 1HL 1HL 1HL
2LL 2LL 2LL 2LL 2HL 2HL 2HL 2HL 1HL 1HL 1HL 1HL 1HL 1HL 1HL 1HL
2LL 2LL 2LL 2LL 2HL 2HL 2HL 2HL 1HL 1HL 1HL 1HL 1HL 1HL 1HL 1HL
2LL 2LL 2LL 2LL 2HL 2HL 2HL 2HL 1HL 1HL 1HL 1HL 1HL 1HL 1HL 1HL
2LH 2LH 2LH 2LH 2HH 2HH 2HH 2HH 1HL 1HL 1HL 1HL 1HL 1HL 1HL 1HL
2LH 2LH 2LH 2LH 2HH 2HH 2HH 2HH 1HL 1HL 1HL 1HL 1HL 1HL 1HL 1HL
2LH 2LH 2LH 2LH 2HH 2HH 2HH 2HH 1HL 1HL 1HL 1HL 1HL 1HL 1HL 1HL
2LH 2LH 2LH 2LH 2HH 2HH 2HH 2HH 1HL 1HL 1HL 1HL 1HL 1HL 1HL 1HL
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH
1LH 1LH 1LH 1LH 1LH 1LH 1LH 1LH 1HH 1HH 1HH 1HH 1HH 1HH 1HH 1HH

FIG.7

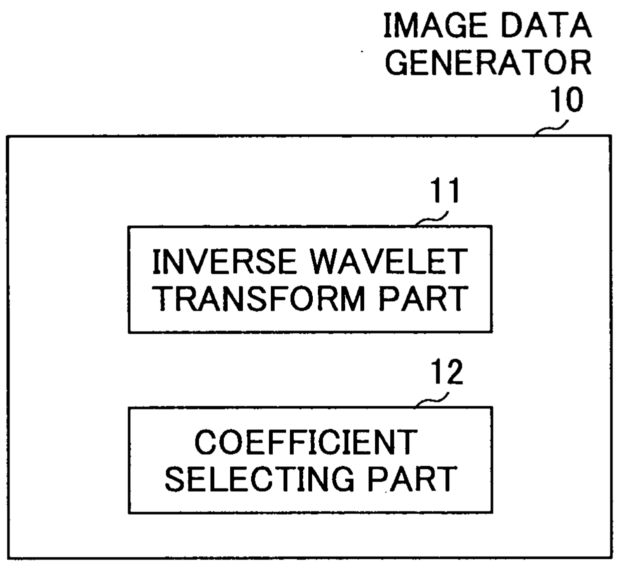
IMAGE DATA
GENERATOR
10
11
INVERSE WAVELET
TRANSFORM PART
12
COEFFICIENT
SELECTING PART

# FIG.8A

| | | | | | | | | | | | | | | | | |
|---|---|---|---|---|---|---|---|---|---|---|---|---|---|---|---|---|
| EVEN | -3 | -16 | -19 | -42 | -51 | -59 | -70 | -77 | -73 | -68 | -62 | -49 | -38 | -27 | -15 | -10 |
| | -3 | -10 | -24 | -32 | -44 | -65 | -70 | -79 | -79 | -77 | -68 | -53 | -46 | -32 | -22 | -17 |
| | -2 | -10 | -23 | -34 | -45 | -64 | -76 | -80 | -83 | -76 | -75 | -60 | -48 | -39 | -25 | -17 |
| ODD | -2 | -7 | -22 | -31 | -45 | -60 | -73 | -78 | -83 | -78 | -77 | -66 | -55 | -42 | -29 | -25 |
| | 0 | -6 | -21 | -31 | -50 | -66 | -74 | -81 | -86 | -81 | -76 | -68 | -64 | -42 | -30 | -28 |
| | 2 | -13 | -27 | -35 | -45 | -61 | -74 | -84 | -85 | -86 | -79 | -69 | -64 | -52 | -44 | -24 |
| EVEN | -4 | -15 | -23 | -38 | -46 | -60 | -74 | -84 | -89 | -82 | -81 | -75 | -69 | -57 | -46 | -27 |
| | 1 | -10 | -25 | -36 | -47 | -62 | -72 | -83 | -80 | -65 | -75 | -80 | -78 | -66 | -47 | -33 |
| | 3 | -10 | -23 | -38 | -46 | -63 | -72 | -78 | -83 | -88 | -84 | -72 | -63 | -64 | -64 | -42 |
| ODD | -1 | -11 | -24 | -35 | -43 | -65 | -69 | -80 | -78 | -84 | -81 | -68 | -68 | -73 | -72 | -60 |
| | -2 | -11 | -24 | -36 | -41 | -61 | -72 | -76 | -79 | -81 | -80 | -83 | -85 | -77 | -74 | -70 |
| | -3 | -15 | -23 | -35 | -40 | -60 | -72 | -80 | -80 | -85 | -85 | -81 | -82 | -83 | -73 | -72 |
| EVEN | -4 | -12 | -18 | -34 | -43 | -56 | -69 | -65 | -74 | -77 | -82 | -83 | -85 | -80 | -80 | -70 |
| | -5 | -15 | -22 | -32 | -43 | -56 | -67 | -76 | -80 | -75 | -83 | -82 | -86 | -82 | -80 | -76 |
| | -4 | -13 | -22 | -32 | -45 | -56 | -68 | -76 | -74 | -76 | -82 | -82 | -83 | -83 | -78 | -75 |
| | -6 | -11 | -23 | -34 | -45 | -54 | -70 | -75 | -78 | -84 | -79 | -81 | -84 | -85 | -85 | -78 |

# FIG.8B

| | | | | | | | | | | | | | | | | | |
|---|---|---|---|---|---|---|---|---|---|---|---|---|---|---|---|---|---|
| EVEN | L | -3 | -16 | -19 | -42 | -51 | -59 | -70 | -77 | -73 | -68 | -62 | -49 | -38 | -27 | -15 | -10 |
| | H | -3 | -10 | -24 | -32 | -44 | -65 | -70 | -79 | -79 | -77 | -68 | -53 | -46 | -32 | -22 | -17 |
| | | -2 | -10 | -23 | -34 | -45 | -64 | -76 | -80 | -83 | -76 | -75 | -60 | -48 | -39 | -25 | -17 |
| | | -2 | -7 | -22 | -31 | -45 | -60 | -73 | -78 | -83 | -78 | -77 | -66 | -55 | -42 | -29 | -25 |
| EVEN | | 0 | -6 | -21 | -31 | -50 | -66 | -74 | -81 | -86 | -81 | -76 | -68 | -64 | -42 | -30 | -28 |
| | | 2 | -13 | -27 | -35 | -45 | -61 | -74 | -84 | -85 | -86 | -79 | -69 | -64 | -52 | -44 | -24 |
| | | -4 | -15 | -23 | -38 | -46 | -60 | -74 | -84 | -89 | -82 | -81 | -75 | -69 | -57 | -46 | -27 |
| | | 1 | -10 | -25 | -36 | -47 | -62 | -72 | -83 | -80 | -65 | -75 | -80 | -78 | -66 | -47 | -33 |
| EVEN | | 3 | -10 | -23 | -38 | -46 | -63 | -72 | -78 | -83 | -88 | -84 | -72 | -63 | -64 | -64 | -42 |
| | | -1 | -11 | -24 | -35 | -43 | -65 | -69 | -80 | -78 | -84 | -81 | -68 | -68 | -73 | -72 | -60 |
| | | -2 | -11 | -24 | -36 | -41 | -61 | -72 | -76 | -79 | -81 | -80 | -83 | -85 | -77 | -74 | -70 |
| | | -3 | -15 | -23 | -35 | -40 | -60 | -72 | -80 | -80 | -85 | -85 | -81 | -82 | -83 | -73 | -72 |
| EVEN | | -4 | -12 | -18 | -34 | -43 | -56 | -69 | -65 | -74 | -77 | -82 | -83 | -85 | -80 | -80 | -70 |
| | | -5 | -15 | -22 | -32 | -43 | -56 | -67 | -76 | -80 | -75 | -83 | -82 | -86 | -82 | -80 | -76 |
| | | -4 | -13 | -22 | -32 | -45 | -56 | -68 | -76 | -74 | -76 | -82 | -82 | -83 | -83 | -78 | -75 |
| | | -6 | -11 | -23 | -34 | -45 | -54 | -70 | -75 | -78 | -84 | -79 | -81 | -84 | -85 | -85 | -78 |

# FIG.9A

| | | | | | | | | | | | | | | | | | |
|---|---|---|---|---|---|---|---|---|---|---|---|---|---|---|---|---|---|
| EVEN | L | -3 | -14 | -20 | -39 | -49 | -60 | -68 | -77 | -73 | -70 | -61 | -48 | -39 | -26 | -16 | -11 |
| | H | 0 | 3 | -3 | 6 | 4 | -3 | 3 | 0 | -1 | -5 | 1 | 2 | -3 | 1 | -2 | -3 |
| | | -2 | -9 | -24 | -32 | -43 | -63 | -75 | -79 | -83 | -77 | -75 | -60 | -48 | -39 | -26 | -18 |
| ODD | | -1 | 1 | 0 | 2 | 3 | 5 | 2 | 3 | 2 | 1 | -1 | -2 | 1 | -1 | -1 | -2 |
| | | 1 | -6 | -22 | -30 | -48 | -64 | -73 | -80 | -85 | -82 | -76 | -68 | -63 | -43 | -32 | -27 |
| | | 4 | -2 | -5 | 0 | 3 | 2 | 0 | -1 | 3 | -4 | 0 | 3 | 3 | -2 | -6 | 4 |
| EVEN | | -2 | -15 | -25 | -37 | -45 | -59 | -74 | -85 | -87 | -78 | -79 | -76 | -71 | -59 | -45 | -25 |
| | | 2 | 3 | -2 | 2 | -1 | 0 | 1 | -2 | 6 | 20 | 8 | -6 | -12 | -5 | 8 | 2 |
| | | 3 | -9 | -23 | -37 | -46 | -64 | -71 | -79 | -81 | -83 | -82 | -71 | -64 | -66 | -63 | -42 |
| ODD | | -1 | 0 | 0 | 2 | 1 | -3 | 3 | -3 | 3 | 1 | 1 | 10 | 6 | -2 | -3 | -4 |
| | | -2 | -12 | -24 | -35 | -40 | -62 | -71 | -79 | -79 | -82 | -81 | -80 | -83 | -78 | -74 | -71 |
| | | 0 | -3 | -2 | 0 | 2 | -1 | -1 | -9 | -3 | -6 | -4 | 2 | 3 | -4 | 4 | -2 |
| EVEN | | -4 | -13 | -19 | -34 | -42 | -56 | -69 | -68 | -76 | -78 | -83 | -82 | -85 | -81 | -79 | -71 |
| | | -1 | -2 | -2 | 1 | 1 | 0 | 2 | -5 | -6 | 2 | -1 | 1 | -2 | 0 | -1 | -3 |
| | | -5 | -13 | -23 | -32 | -45 | -55 | -68 | -77 | -76 | -77 | -81 | -81 | -84 | -83 | -80 | -76 |
| | | -2 | 2 | -1 | -2 | 0 | 2 | -2 | 1 | -4 | -8 | 3 | 1 | -1 | -2 | -7 | -3 |

# FIG.9B

EVEN ODD EVEN ODD EVEN

| | | | | | | | | | | | | | | | |
|---|---|---|---|---|---|---|---|---|---|---|---|---|---|---|---|
| -3 | -14 | -20 | -39 | -49 | -60 | -68 | -77 | -73 | -70 | -61 | -48 | -39 | -26 | -16 | -11 |
| 0 | 3 | -3 | 6 | 4 | -3 | 3 | 0 | -1 | -5 | 1 | 2 | -3 | 1 | -2 | -3 |
| -2 | -9 | -24 | -32 | -43 | -63 | -75 | -79 | -83 | -77 | -75 | -60 | -48 | -39 | -26 | -18 |
| -1 | 1 | 0 | 2 | 3 | -5 | 2 | 3 | 2 | -1 | -1 | -2 | 1 | -1 | -1 | -2 |
| 1 | -6 | -22 | -30 | -48 | -64 | -73 | -80 | -85 | -82 | -76 | -68 | -63 | -43 | -32 | -27 |
| 4 | -2 | -5 | 0 | 3 | 2 | 0 | -1 | 3 | -4 | 0 | 3 | 3 | -2 | -6 | 4 |
| -2 | -15 | -25 | -37 | -45 | -59 | -74 | -85 | -87 | -78 | -79 | -76 | -71 | -59 | -45 | -25 |
| 2 | 3 | -2 | 2 | -1 | 0 | 1 | -2 | 6 | 20 | 8 | -6 | -12 | -5 | 8 | 2 |
| 3 | -9 | -23 | -37 | -46 | -64 | -71 | -79 | -81 | -83 | -82 | -71 | -64 | -66 | -63 | -42 |
| -1 | 0 | 0 | 2 | 1 | -3 | 3 | -3 | 3 | 1 | 1 | 10 | 6 | -2 | -3 | -4 |
| -2 | -12 | -24 | -35 | -40 | -62 | -71 | -79 | -79 | -82 | -81 | -80 | -83 | -78 | -74 | -71 |
| 0 | -3 | -2 | 0 | 2 | -1 | 1 | -9 | -3 | -6 | -4 | 2 | 3 | -4 | 4 | -2 |
| -4 | -13 | -19 | -34 | -42 | -56 | -69 | -68 | -76 | -78 | -83 | -82 | -85 | -81 | -79 | -71 |
| -1 | -2 | -2 | 1 | 1 | 0 | 2 | -5 | -6 | 2 | -1 | 1 | -2 | 0 | -1 | -3 |
| -5 | -13 | -23 | -32 | -45 | -55 | -68 | -77 | -76 | -77 | -81 | -81 | -84 | -83 | -80 | -76 |
| -2 | 2 | -1 | -2 | 0 | 2 | -2 | 1 | -4 | -8 | 3 | 1 | -1 | -2 | -7 | -3 |

FIG.10

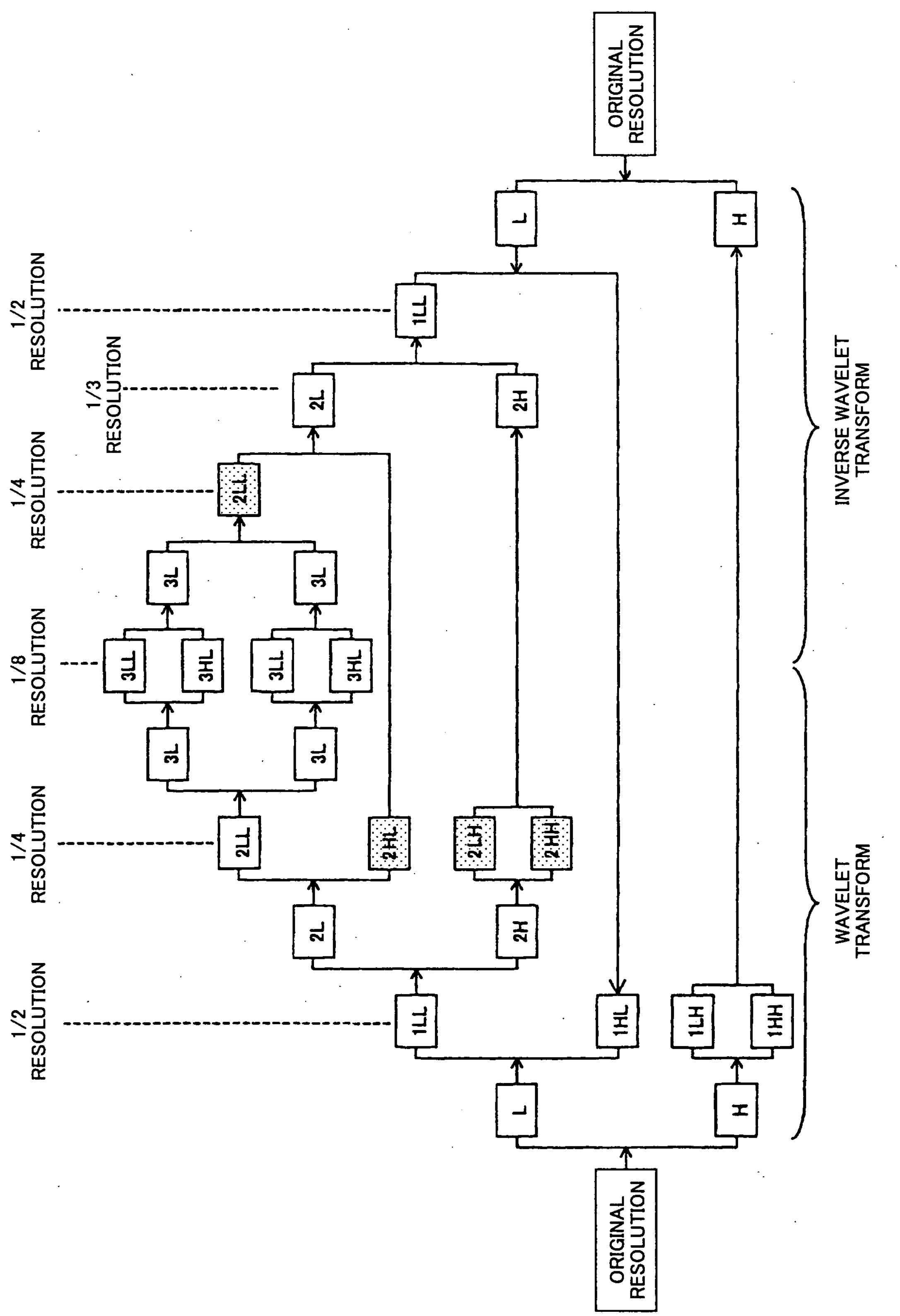
ORIGINAL RESOLUTION
L
H
1LL
1HL
1LH
1HH
2L
2H
2LL
2HL
2LH
2HH
3L
3LL
3HL
1/2 RESOLUTION
1/4 RESOLUTION
1/8 RESOLUTION
1/3 RESOLUTION
WAVELET TRANSFORM
INVERSE WAVELET TRANSFORM

FIG.11

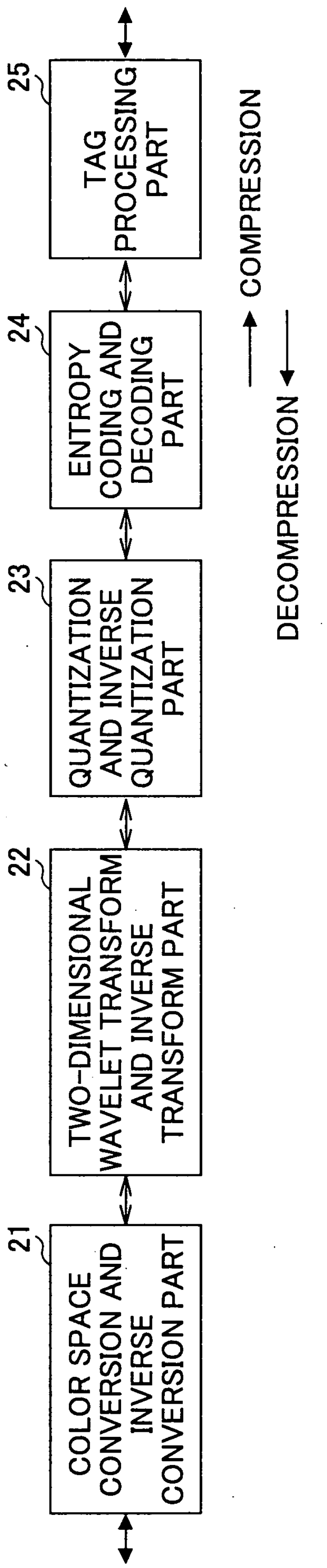
21
COLOR SPACE CONVERSION AND INVERSE CONVERSION PART
22
TWO-DIMENSIONAL WAVELET TRANSFORM AND INVERSE TRANSFORM PART
23
QUANTIZATION AND INVERSE QUANTIZATION PART
24
ENTROPY CODING AND DECODING PART
25
TAG PROCESSING PART
COMPRESSION
DECOMPRESSION

FIG.12

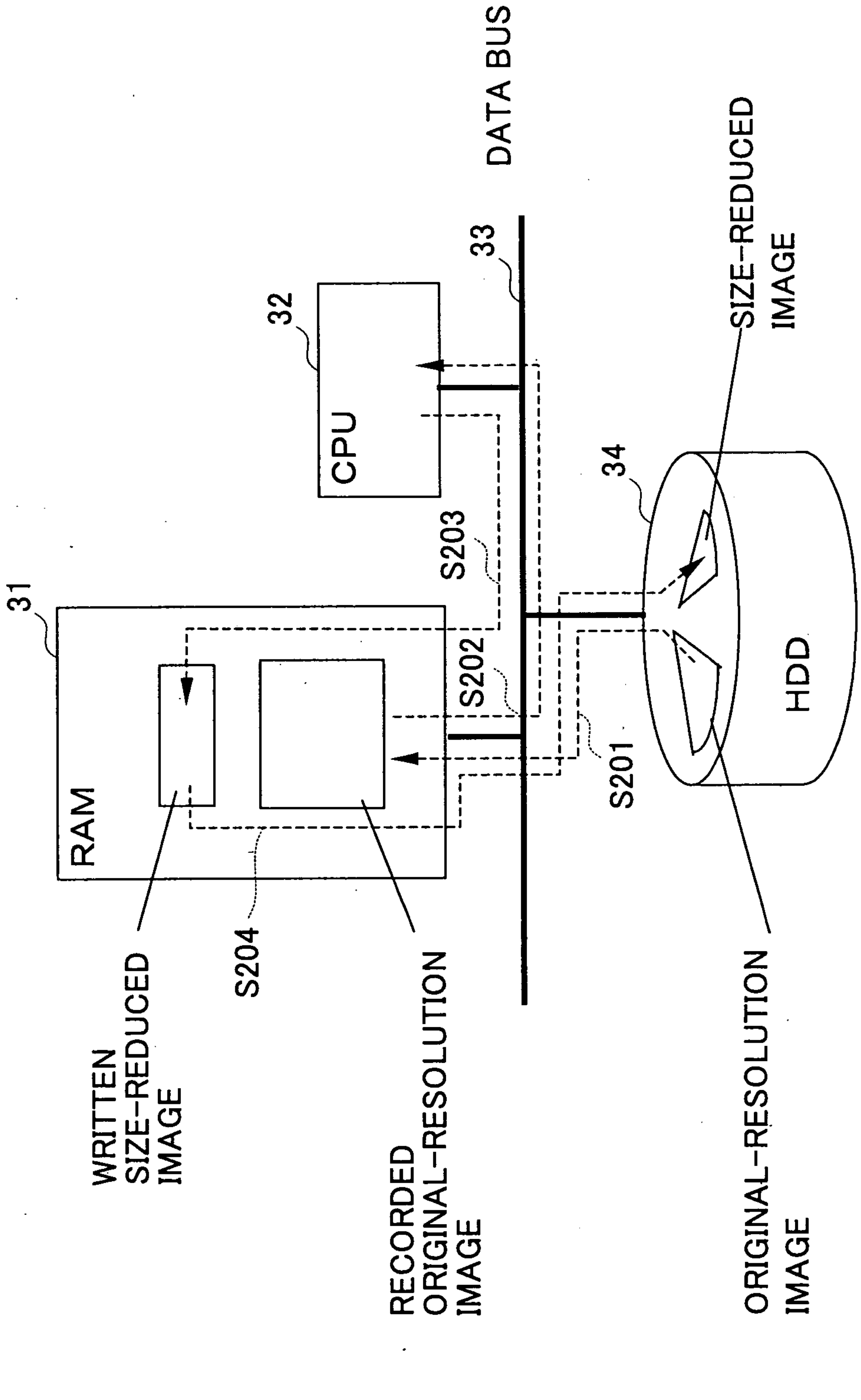
DATA BUS
33
32
CPU
S203
31
RAM
S202
S201
34
HDD
SIZE-REDUCED IMAGE
ORIGINAL-RESOLUTION IMAGE
S204
WRITTEN SIZE-REDUCED IMAGE
RECORDED ORIGINAL-RESOLUTION IMAGE

FIG.13

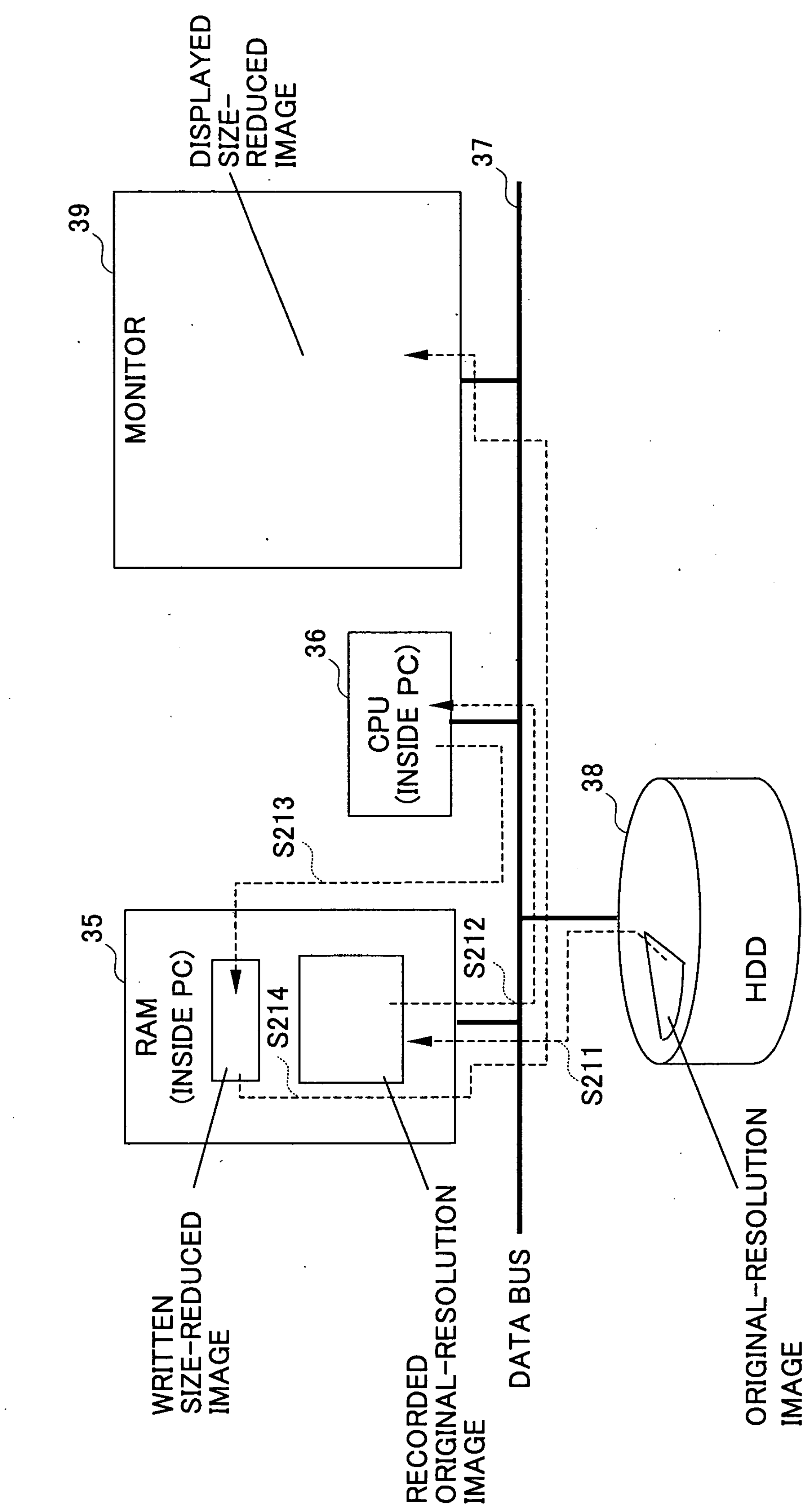
39
MONITOR
DISPLAYED SIZE-REDUCED IMAGE
37
36
CPU (INSIDE PC)
38
HDD
35
RAM (INSIDE PC)
S213
S212
S214
S211
WRITTEN SIZE-REDUCED IMAGE
RECORDED ORIGINAL-RESOLUTION IMAGE
DATA BUS
ORIGINAL-RESOLUTION IMAGE

FIG.14

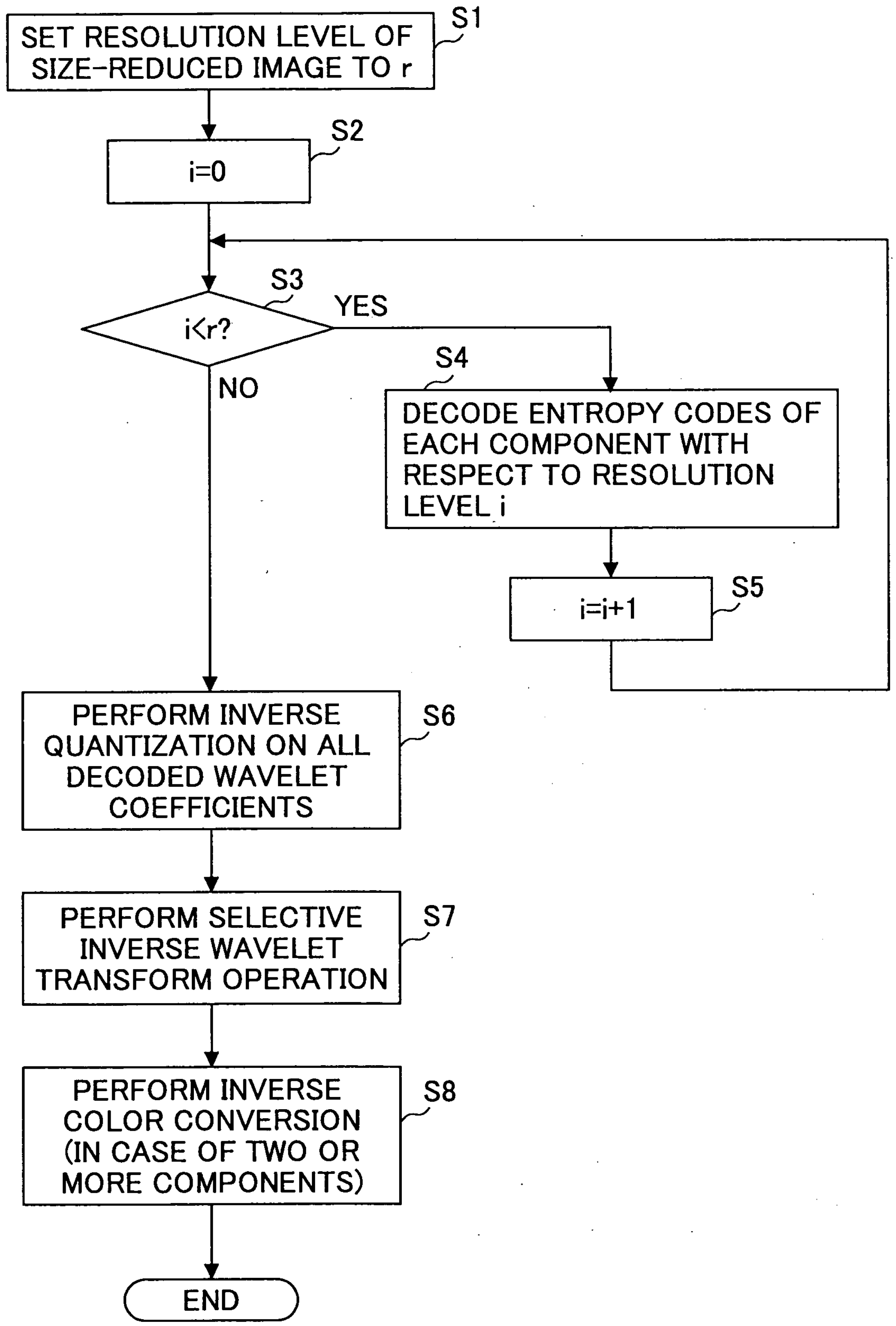
SET RESOLUTION LEVEL OF SIZE-REDUCED IMAGE TO r
S1
i=0
S2
S3
i<r?
YES
NO
S4
DECODE ENTROPY CODES OF EACH COMPONENT WITH RESPECT TO RESOLUTION LEVEL i
i=i+1
S5
PERFORM INVERSE QUANTIZATION ON ALL DECODED WAVELET COEFFICIENTS
S6
PERFORM SELECTIVE INVERSE WAVELET TRANSFORM OPERATION
S7
PERFORM INVERSE COLOR CONVERSION (IN CASE OF TWO OR MORE COMPONENTS)
S8
END

FIG.15

| | |
|---|---|
| RESOLUTION 0 (MIN.) | COMPONENT 0(LUMINANCE) |
| | COMPONENT 1(COLOR DIFFERENCE Cb) |
| | COMPONENT 2(COLOR DIFFERENCE Cr) |
| RESOLUTION 1 | COMPONENT 0 |
| | COMPONENT 1 |
| | COMPONENT 2 |
| RESOLUTION 2 | COMPONENT 0 |
| | COMPONENT 1 |
| | COMPONENT 2 |
| ... | ... |

FIG.16

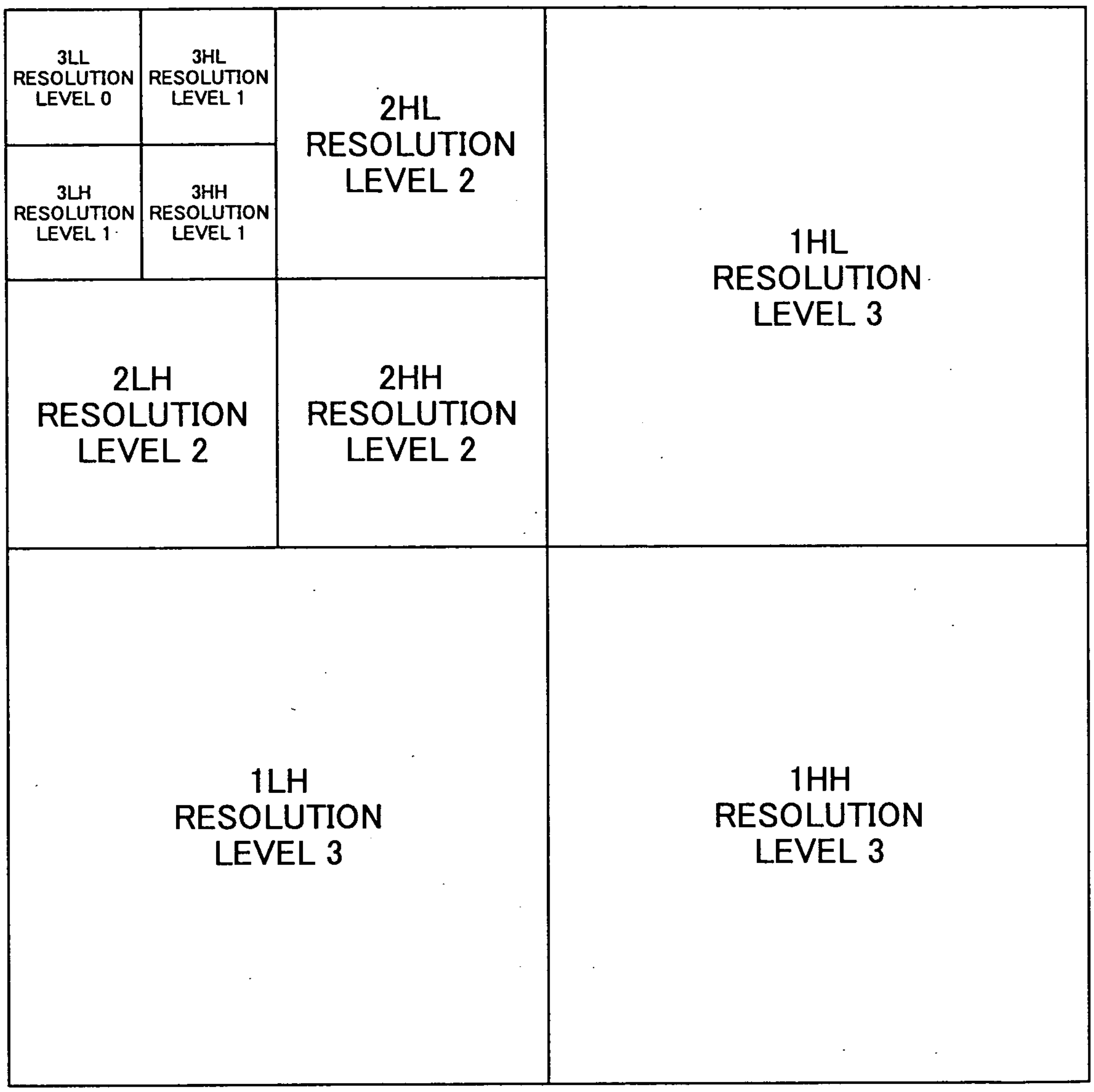
3LL
RESOLUTION
LEVEL 0
3HL
RESOLUTION
LEVEL 1
3LH
RESOLUTION
LEVEL 1
3HH
RESOLUTION
LEVEL 1
2HL
RESOLUTION
LEVEL 2
2LH
RESOLUTION
LEVEL 2
2HH
RESOLUTION
LEVEL 2
1HL
RESOLUTION
LEVEL 3
1LH
RESOLUTION
LEVEL 3
1HH
RESOLUTION
LEVEL 3

FIG.17

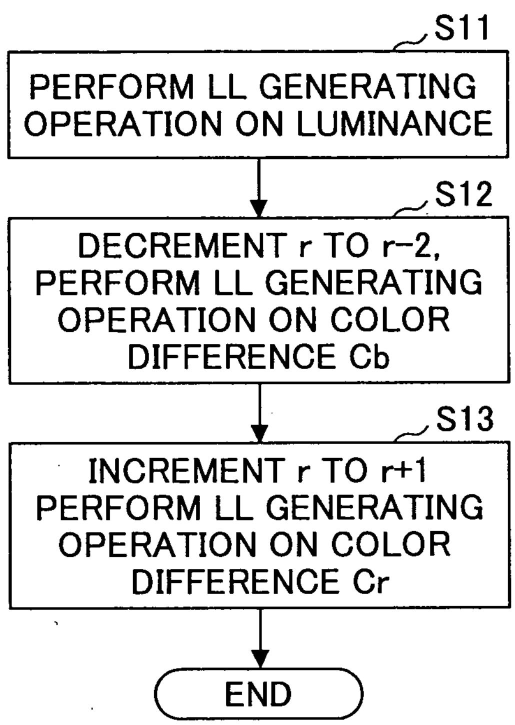
S11
PERFORM LL GENERATING OPERATION ON LUMINANCE
S12
DECREMENT r TO r−2, PERFORM LL GENERATING OPERATION ON COLOR DIFFERENCE Cb
S13
INCREMENT r TO r+1 PERFORM LL GENERATING OPERATION ON COLOR DIFFERENCE Cr
END

# FIG.18

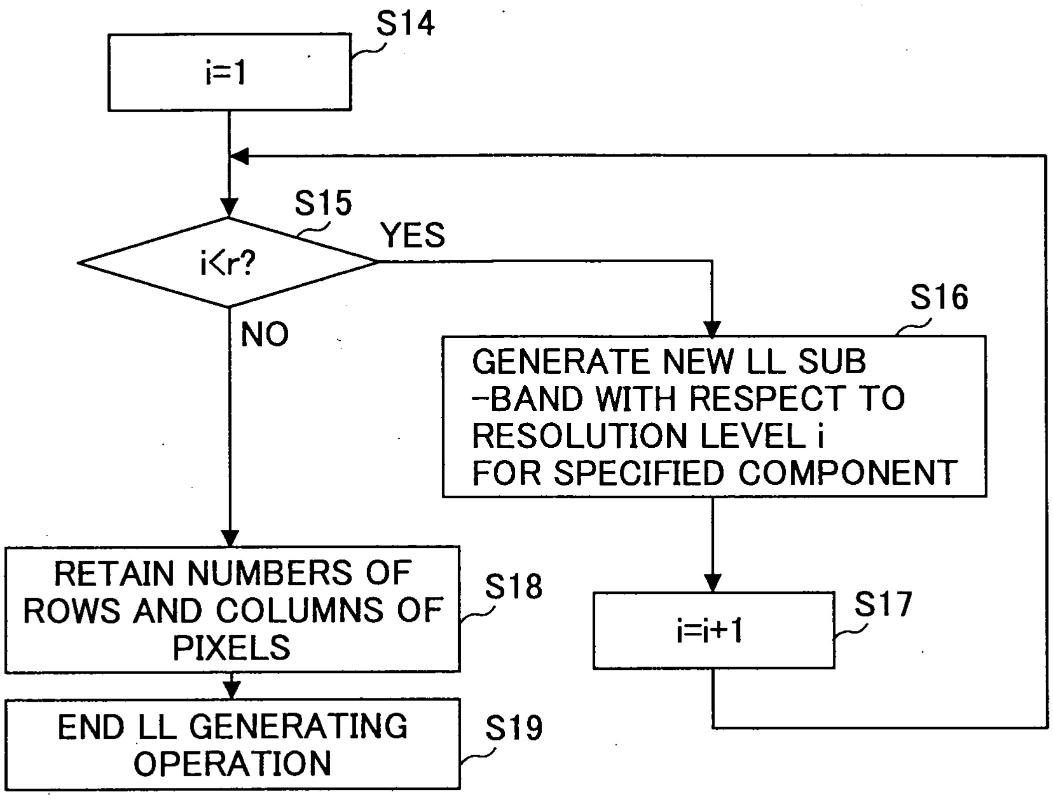
S14
i=1
S15
i<r?
YES
NO
S16
GENERATE NEW LL SUB
-BAND WITH RESPECT TO
RESOLUTION LEVEL i
FOR SPECIFIED COMPONENT
S17
i=i+1
S18
RETAIN NUMBERS OF
ROWS AND COLUMNS OF
PIXELS
S19
END LL GENERATING
OPERATION

FIG.19

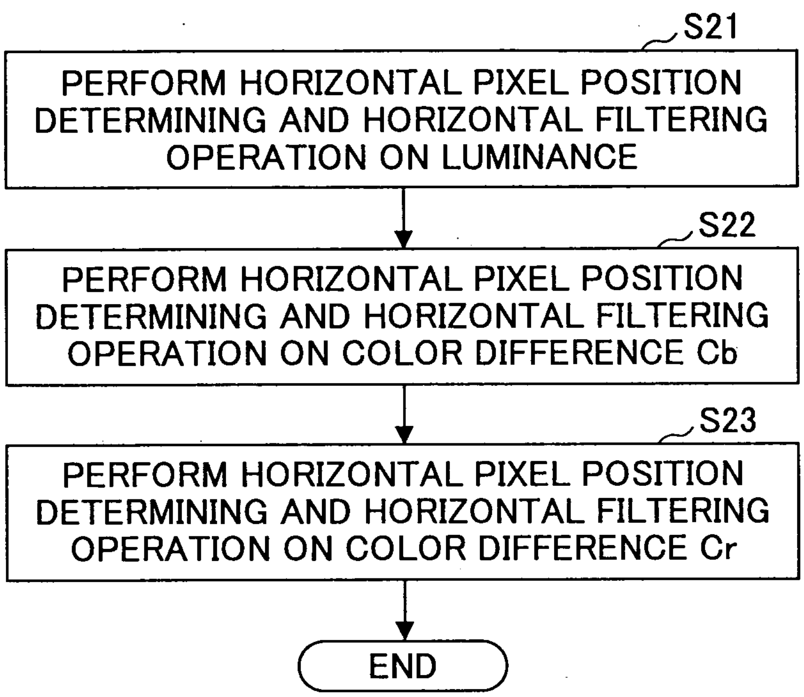
S21
PERFORM HORIZONTAL PIXEL POSITION DETERMINING AND HORIZONTAL FILTERING OPERATION ON LUMINANCE
S22
PERFORM HORIZONTAL PIXEL POSITION DETERMINING AND HORIZONTAL FILTERING OPERATION ON COLOR DIFFERENCE Cb
S23
PERFORM HORIZONTAL PIXEL POSITION DETERMINING AND HORIZONTAL FILTERING OPERATION ON COLOR DIFFERENCE Cr
END

FIG.20

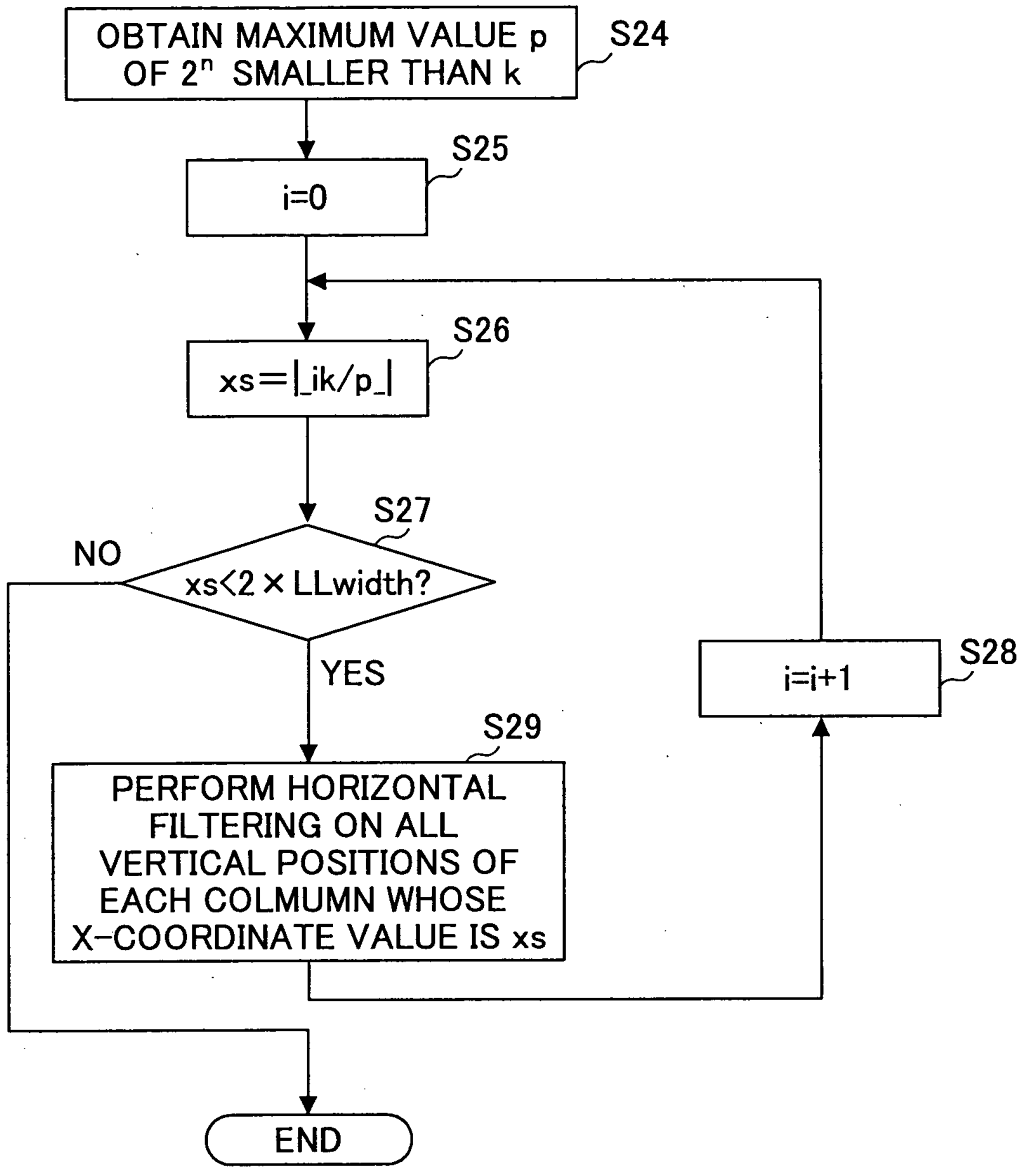
OBTAIN MAXIMUM VALUE p OF $2^n$ SMALLER THAN k
S24
i=0
S25
S26
xs=⌊ik/p⌋
S27
xs<2×LLwidth?
NO
YES
i=i+1
S28
S29
PERFORM HORIZONTAL FILTERING ON ALL VERTICAL POSITIONS OF EACH COLMUMN WHOSE X-COORDINATE VALUE IS xs
END

FIG.21

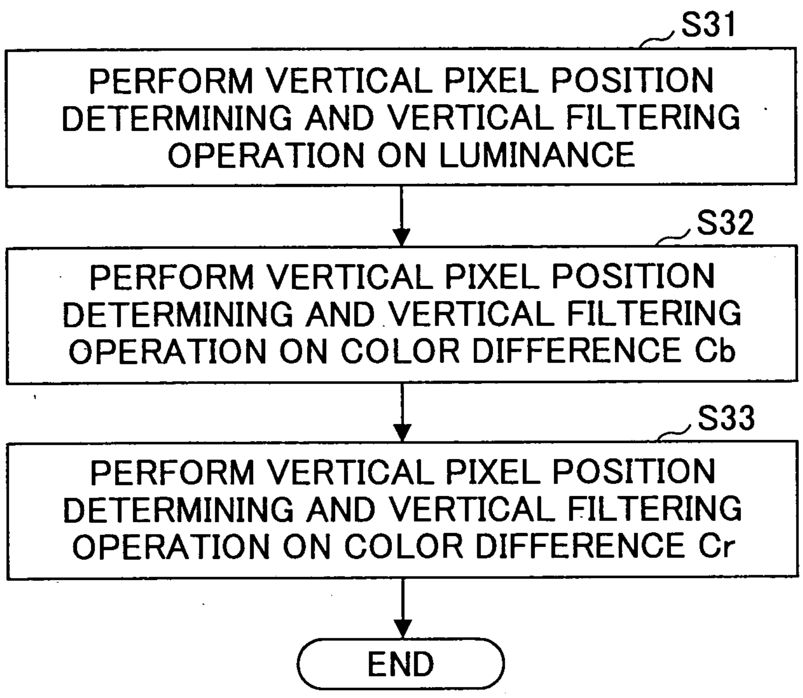
S31
PERFORM VERTICAL PIXEL POSITION DETERMINING AND VERTICAL FILTERING OPERATION ON LUMINANCE
S32
PERFORM VERTICAL PIXEL POSITION DETERMINING AND VERTICAL FILTERING OPERATION ON COLOR DIFFERENCE Cb
S33
PERFORM VERTICAL PIXEL POSITION DETERMINING AND VERTICAL FILTERING OPERATION ON COLOR DIFFERENCE Cr
END

FIG.22

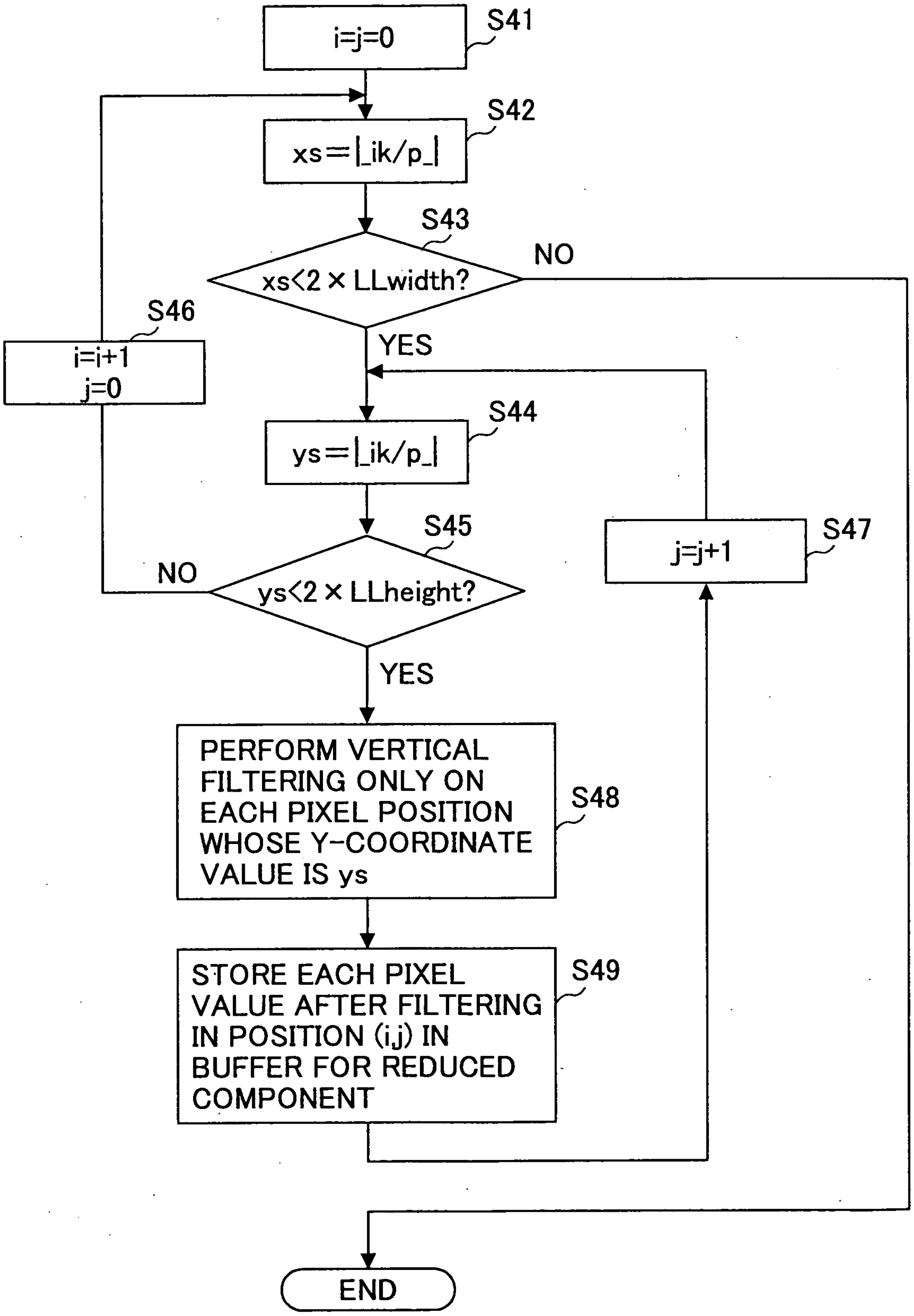
i=j=0
S41
xs=⌊ik/p⌋
S42
S43
xs<2×LLwidth?
NO
YES
S46
i=i+1
j=0
ys=⌊ik/p⌋
S44
S45
ys<2×LLheight?
NO
YES
j=j+1
S47
PERFORM VERTICAL FILTERING ONLY ON EACH PIXEL POSITION WHOSE Y-COORDINATE VALUE IS ys
S48
STORE EACH PIXEL VALUE AFTER FILTERING IN POSITION (i,j) IN BUFFER FOR REDUCED COMPONENT
S49
END

FIG.23

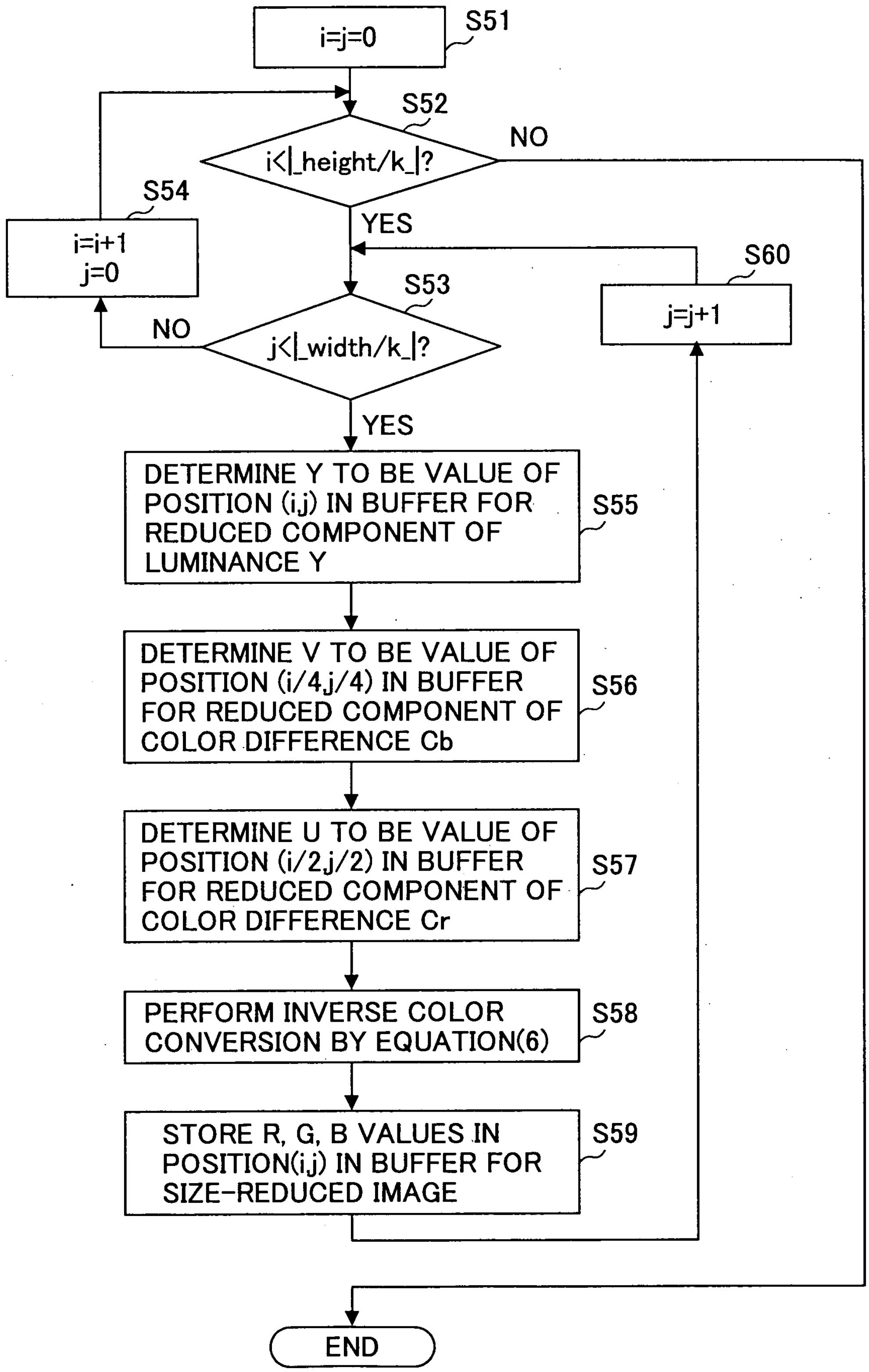
S51
i=j=0
S52
i<|_height/k_|?
NO
YES
S54
i=i+1
j=0
S53
j<|_width/k_|?
NO
YES
S60
j=j+1
DETERMINE Y TO BE VALUE OF POSITION (i,j) IN BUFFER FOR REDUCED COMPONENT OF LUMINANCE Y
S55
DETERMINE V TO BE VALUE OF POSITION (i/4,j/4) IN BUFFER FOR REDUCED COMPONENT OF COLOR DIFFERENCE Cb
S56
DETERMINE U TO BE VALUE OF POSITION (i/2,j/2) IN BUFFER FOR REDUCED COMPONENT OF COLOR DIFFERENCE Cr
S57
PERFORM INVERSE COLOR CONVERSION BY EQUATION(6)
S58
STORE R, G, B VALUES IN POSITION(i,j) IN BUFFER FOR SIZE-REDUCED IMAGE
S59
END

# FIG.24A

| | | | | | | | | | | | | | | | |
|---|---|---|---|---|---|---|---|---|---|---|---|---|---|---|---|
| -3 | -14 | -20 | -39 | -49 | -60 | -68 | -77 | -73 | -70 | -61 | -48 | -39 | -26 | -16 | -11 |
| 0 | 3 | -3 | 6 | 4 | -3 | 3 | 0 | -1 | -5 | 1 | 2 | -3 | 1 | -2 | -3 |
| -2 | -9 | -24 | -32 | -43 | -63 | -75 | -79 | -83 | -77 | -75 | -60 | -48 | -39 | -26 | -18 |
| -1 | 1 | 0 | 2 | 3 | 5 | 2 | 3 | 2 | 1 | -1 | -2 | 1 | -1 | -1 | -2 |
| 1 | -6 | -22 | -30 | -48 | -64 | -73 | -80 | -85 | -82 | -76 | -68 | -63 | -43 | -32 | -27 |
| 4 | -2 | -5 | 0 | 3 | 2 | 0 | -1 | 3 | -4 | 0 | 3 | 3 | -2 | -6 | 4 |
| -2 | -15 | -25 | -37 | -45 | -59 | -74 | -85 | -87 | -78 | -79 | -76 | -71 | -59 | -45 | -25 |
| 2 | 3 | -2 | 2 | -1 | 0 | 1 | -2 | 6 | 20 | 8 | -6 | -12 | -5 | 8 | 2 |
| 3 | -9 | -23 | -37 | -46 | -64 | -71 | -79 | -81 | -83 | -82 | -71 | -64 | -66 | -63 | -42 |
| -1 | 0 | 0 | 2 | 1 | -3 | 3 | -3 | 3 | 1 | 1 | 10 | 6 | -2 | -3 | -4 |
| -2 | -12 | -24 | -35 | -40 | -62 | -71 | -79 | -79 | -82 | -81 | -80 | -83 | -78 | -74 | -71 |
| 0 | -3 | -2 | 0 | 2 | -1 | -1 | -9 | -3 | -6 | -4 | 2 | 3 | -4 | 4 | -2 |
| -4 | -13 | -19 | -34 | -42 | -56 | -69 | -68 | -76 | -78 | -83 | -82 | -85 | -81 | -79 | -71 |
| -1 | -2 | -2 | 1 | 1 | 0 | 2 | -5 | -6 | 2 | -1 | 1 | -2 | 0 | -1 | -3 |
| -5 | -13 | -23 | -32 | -45 | -55 | -68 | -77 | -76 | -77 | -81 | -81 | -84 | -83 | -80 | -76 |
| -2 | 2 | -1 | -2 | 0 | 2 | -2 | 1 | -4 | -8 | 3 | 1 | -1 | -2 | -7 | -3 |

# FIG.24B

EVEN ODD EVEN ODD EVEN

| | | | | | | | | | | | | | | | |
|---|---|---|---|---|---|---|---|---|---|---|---|---|---|---|---|
| -3 | -14 | -20 | -39 | -49 | -60 | -68 | -77 | -73 | -70 | -61 | -48 | -39 | -26 | -16 | -11 |
| 0 | 3 | -3 | 6 | 4 | -3 | 3 | 0 | -1 | -5 | 1 | 2 | -3 | 1 | -2 | -3 |
| -2 | -9 | -24 | -32 | -43 | -63 | -75 | -79 | -83 | -77 | -75 | -60 | -48 | -39 | -26 | -18 |
| -1 | 1 | 0 | 2 | 3 | -5 | 2 | 3 | 2 | -1 | -1 | -2 | 1 | -1 | -1 | -2 |
| 1 | -6 | -22 | -30 | -48 | -64 | -73 | -80 | -85 | -82 | -76 | -68 | -63 | -43 | -32 | -27 |
| 4 | -2 | -5 | 0 | 3 | 2 | 0 | -1 | 3 | -4 | 0 | 3 | 3 | -2 | -6 | 4 |
| -2 | -15 | -25 | -37 | -45 | -59 | -74 | -85 | -87 | -78 | -79 | -76 | -71 | -59 | -45 | -25 |
| 2 | 3 | -2 | 2 | -1 | 0 | 1 | -2 | 6 | 20 | 8 | -6 | -12 | -5 | 8 | 2 |
| 3 | -9 | -23 | -37 | -46 | -64 | -71 | -79 | -81 | -83 | -82 | -71 | -64 | -66 | -63 | -42 |
| -1 | 0 | 0 | 2 | 1 | -3 | 3 | -3 | 3 | 1 | 1 | 10 | 6 | -2 | -3 | -4 |
| -2 | -12 | -24 | -35 | -40 | -62 | -71 | -79 | -79 | -82 | -81 | -80 | -83 | -78 | -74 | -71 |
| 0 | -3 | -2 | 0 | 2 | -1 | 1 | -9 | -3 | -6 | -4 | 2 | 3 | -4 | 4 | -2 |
| -4 | -13 | -19 | -34 | -42 | -56 | -69 | -68 | -76 | -78 | -83 | -82 | -85 | -81 | -79 | -71 |
| -1 | -2 | -2 | 1 | 1 | 0 | 2 | -5 | -6 | 2 | -1 | 1 | -2 | 0 | -1 | -3 |
| -5 | -13 | -23 | -32 | -45 | -55 | -68 | -77 | -76 | -77 | -81 | -81 | -84 | -83 | -80 | -76 |
| -2 | 2 | -1 | -2 | 0 | 2 | -2 | 1 | -4 | -8 | 3 | 1 | -1 | -2 | -7 | -3 |

# FIG.25A

| | | | | | | | | | | | | | | | | |
|---|---|---|---|---|---|---|---|---|---|---|---|---|---|---|---|---|
| | -3 | -16 | -19 | -42 | -51 | -59 | -70 | -77 | -73 | -68 | -62 | -49 | -38 | -27 | -15 | -10 |
| ODD | -3 | -10 | -24 | -32 | -44 | -65 | -70 | -79 | -79 | -77 | -68 | -53 | -46 | -32 | -22 | -17 |
| | -2 | -10 | -23 | -34 | -45 | -64 | -76 | -80 | -83 | -76 | -75 | -60 | -48 | -39 | -25 | -17 |
| ODD | -2 | -7 | -22 | -31 | -45 | -60 | -73 | -78 | -83 | -78 | -77 | -66 | -55 | -42 | -29 | -25 |
| | 0 | -6 | -21 | -31 | -50 | -66 | -74 | -81 | -86 | -81 | -76 | -68 | -64 | -42 | -30 | -28 |
| ODD | 2 | -13 | -27 | -35 | -45 | -61 | -74 | -84 | -85 | -86 | -79 | -69 | -64 | -52 | -44 | -24 |
| | -4 | -15 | -23 | -38 | -46 | -60 | -74 | -84 | -89 | -82 | -81 | -75 | -69 | -57 | -46 | -27 |
| ODD | 1 | -10 | -25 | -36 | -47 | -62 | -72 | -83 | -80 | -65 | -75 | -80 | -78 | -66 | -47 | -33 |
| | 3 | -10 | -23 | -38 | -46 | -63 | -72 | -78 | -83 | -88 | -84 | -72 | -63 | -64 | -64 | -42 |
| ODD | -1 | -11 | -24 | -35 | -43 | -65 | -69 | -80 | -78 | -84 | -81 | -68 | -68 | -73 | -72 | -60 |
| | -2 | -11 | -24 | -36 | -41 | -61 | -72 | -76 | -79 | -81 | -80 | -83 | -85 | -77 | -74 | -70 |
| ODD | -3 | -15 | -23 | -35 | -40 | -60 | -72 | -80 | -80 | -85 | -85 | -81 | -82 | -83 | -73 | -72 |
| | -4 | -12 | -18 | -34 | -43 | -56 | -69 | -65 | -74 | -77 | -82 | -83 | -85 | -80 | -80 | -70 |
| ODD | -5 | -15 | -22 | -32 | -43 | -56 | -67 | -76 | -80 | -75 | -83 | -82 | -86 | -82 | -80 | -76 |
| | -4 | -13 | -22 | -32 | -45 | -56 | -68 | -76 | -74 | -76 | -82 | -82 | -83 | -83 | -78 | -75 |
| | -6 | -11 | -23 | -34 | -45 | -54 | -70 | -75 | -78 | -84 | -79 | -81 | -84 | -85 | -85 | -78 |

# FIG.25B

| | | | | | | | | | | | | | | | | |
|---|---|---|---|---|---|---|---|---|---|---|---|---|---|---|---|---|
| EVEN | -3 | -16 | -19 | -42 | -51 | -59 | -70 | -77 | -73 | -68 | -62 | -49 | -38 | -27 | -15 | -10 |
| | -3 | -10 | -24 | -32 | -44 | -65 | -70 | -79 | -79 | -77 | -68 | -53 | -46 | -32 | -22 | -17 |
| EVEN | -2 | -10 | -23 | -34 | -45 | -64 | -76 | -80 | -83 | -76 | -75 | -60 | -48 | -39 | -25 | -17 |
| | -2 | -7 | -22 | -31 | -45 | -60 | -73 | -78 | -83 | -78 | -77 | -66 | -55 | -42 | -29 | -25 |
| | 0 | -6 | -21 | -31 | -50 | -66 | -74 | -81 | -86 | -81 | -76 | -68 | -64 | -42 | -30 | -28 |
| | 2 | -13 | -27 | -35 | -45 | -61 | -74 | -84 | -85 | -86 | -79 | -69 | -64 | -52 | -44 | -24 |
| | -4 | -15 | -23 | -38 | -46 | -60 | -74 | -84 | -89 | -82 | -81 | -75 | -69 | -57 | -46 | -27 |
| | 1 | -10 | -25 | -36 | -47 | -62 | -72 | -83 | -80 | -65 | -75 | -80 | -78 | -66 | -47 | -33 |
| | 3 | -10 | -23 | -38 | -46 | -63 | -72 | -78 | -83 | -88 | -84 | -72 | -63 | -64 | -64 | -42 |
| | -1 | -11 | -24 | -35 | -43 | -65 | -69 | -80 | -78 | -84 | -81 | -68 | -68 | -73 | -72 | -60 |
| | -2 | -11 | -24 | -36 | -41 | -61 | -72 | -76 | -79 | -81 | -80 | -83 | -85 | -77 | -74 | -70 |
| | -3 | -15 | -23 | -35 | -40 | -60 | -72 | -80 | -80 | -85 | -85 | -81 | -82 | -83 | -73 | -72 |
| | -4 | -12 | -18 | -34 | -43 | -56 | -69 | -65 | -74 | -77 | -82 | -83 | -85 | -80 | -80 | -70 |
| | -5 | -15 | -22 | -32 | -43 | -56 | -67 | -76 | -80 | -75 | -83 | -82 | -86 | -82 | -80 | -76 |
| | -4 | -13 | -22 | -32 | -45 | -56 | -68 | -76 | -74 | -76 | -82 | -82 | -83 | -83 | -78 | -75 |
| | -6 | -11 | -23 | -34 | -45 | -54 | -70 | -75 | -78 | -84 | -79 | -81 | -84 | -85 | -85 | -78 |

FIG.26

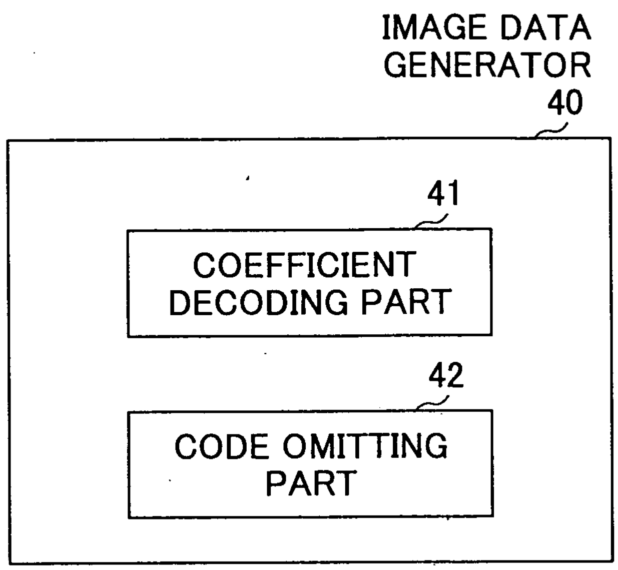
IMAGE DATA
GENERATOR
40
41
COEFFICIENT
DECODING PART
42
CODE OMITTING
PART

FIG.27A

| | | | |
|---|---|---|---|
| 0 | 1 | 2 | 3 |
| 4 | 5 | 6 | 7 |
| 8 | 9 | 10 | 11 |
| 12 | 13 | 14 | 15 |

FIG.27B

| | | | |
|---|---|---|---|
| 0 | 0 | 0 | 0 |
| 0 | 0 | 0 | 0 |
| 1 | 1 | 1 | 1 |
| 1 | 1 | 1 | 1 |

MSB BIT PLANE

| | | | |
|---|---|---|---|
| 0 | 0 | 0 | 0 |
| 1 | 1 | 1 | 1 |
| 0 | 0 | 0 | 0 |
| 1 | 1 | 1 | 1 |

| | | | |
|---|---|---|---|
| 0 | 0 | 1 | 1 |
| 0 | 0 | 1 | 1 |
| 0 | 0 | 1 | 1 |
| 0 | 0 | 1 | 1 |

| | | | |
|---|---|---|---|
| 0 | 1 | 0 | 1 |
| 0 | 1 | 0 | 1 |
| 0 | 1 | 0 | 1 |
| 0 | 1 | 0 | 1 |

LSB BIT PLANE

# FIG.28

| | | |
|---|---|---|
| 2LL (RESOLUTION LEVEL 0) | COMPONENT 0 (LUMINANCE) | MSB BIT PLANE |
| | | ・・・ |
| | | LSB BIT PLANE |
| | COMPONENT 1 (COLOR DIFFERENCE Cb) | MSB BIT PLANE |
| | | ・・・ |
| | | LSB BIT PLANE |
| | COMPONENT 2 (COLOR DIFFERENCE Cr) | MSB BIT PLANE |
| | | ・・・ |
| | | LSB BIT PLANE |
| 2HL (RESOLUTION LEVEL 1) | COMPONENT 0 (LUMINANCE) | MSB BIT PLANE |
| | | ・・・ |
| | | LSB BIT PLANE |
| | COMPONENT 1 (COLOR DIFFERENCE Cb) | MSB BIT PLANE |
| | | ・・・ |
| | | LSB BIT PLANE |
| | COMPONENT 2 (COLOR DIFFERENCE Cr) | MSB BIT PLANE |
| | | ・・・ |
| | | LSB BIT PLANE |

・・・

・・・

・・・

| | | |
|---|---|---|
| 1HH (RESOLUTION LEVEL 2) | COMPONENT 0 (LUMINANCE) | MSB BIT PLANE |
| | | ・・・ |
| | | LSB BIT PLANE |
| | COMPONENT 1 (COLOR DIFFERENCE Cb) | MSB BIT PLANE |
| | | ・・・ |
| | | LSB BIT PLANE |
| | COMPONENT 2 (COLOR DIFFERENCE Cr) | MSB BIT PLANE |
| | | ・・・ |
| | | LSB BIT PLANE |

FIG.29

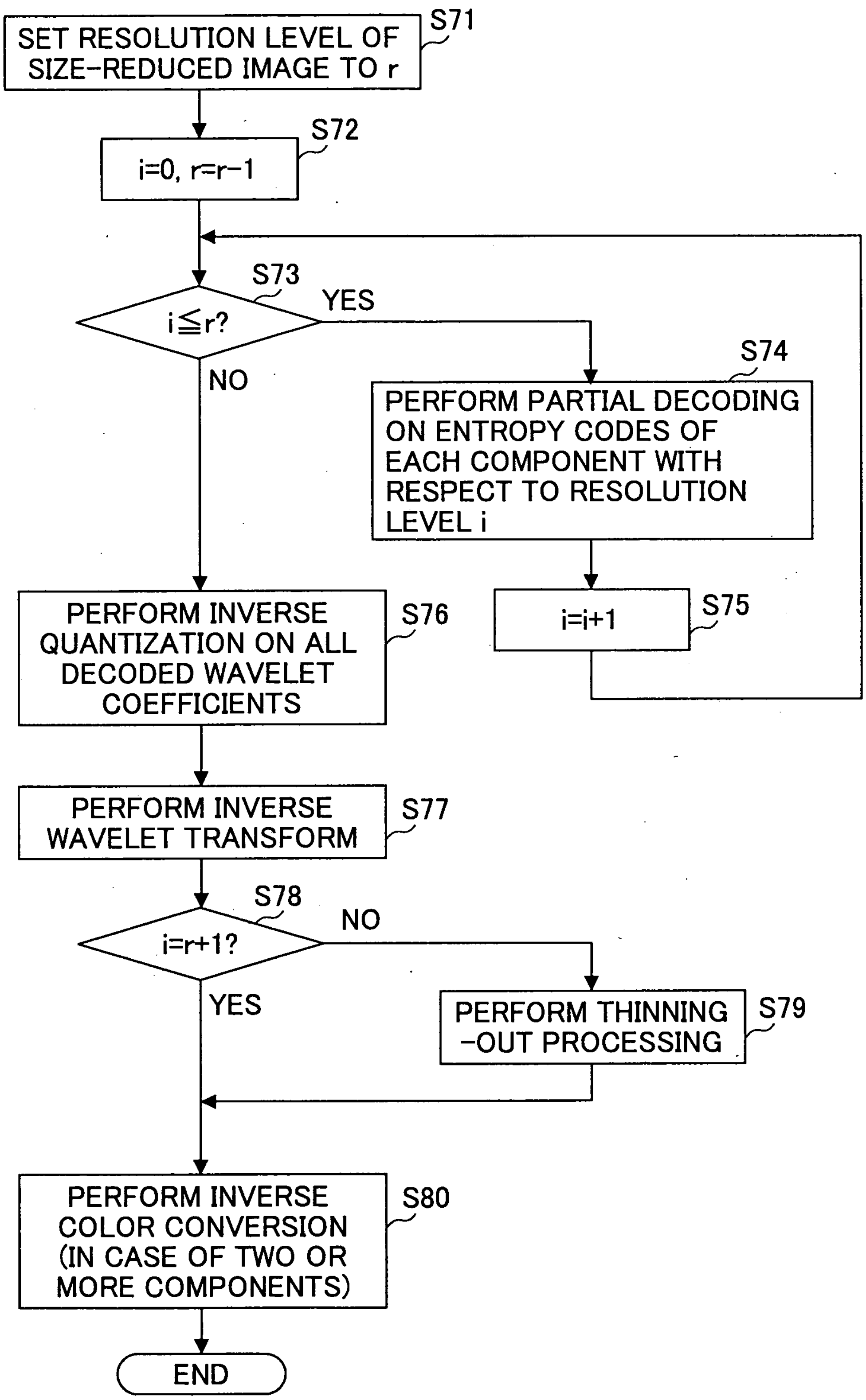
SET RESOLUTION LEVEL OF SIZE-REDUCED IMAGE TO r
S71
i=0, r=r−1
S72
S73
i≦r?
YES
NO
PERFORM PARTIAL DECODING ON ENTROPY CODES OF EACH COMPONENT WITH RESPECT TO RESOLUTION LEVEL i
S74
i=i+1
S75
PERFORM INVERSE QUANTIZATION ON ALL DECODED WAVELET COEFFICIENTS
S76
PERFORM INVERSE WAVELET TRANSFORM
S77
S78
i=r+1?
NO
YES
PERFORM THINNING-OUT PROCESSING
S79
PERFORM INVERSE COLOR CONVERSION (IN CASE OF TWO OR MORE COMPONENTS)
S80
END

FIG.30

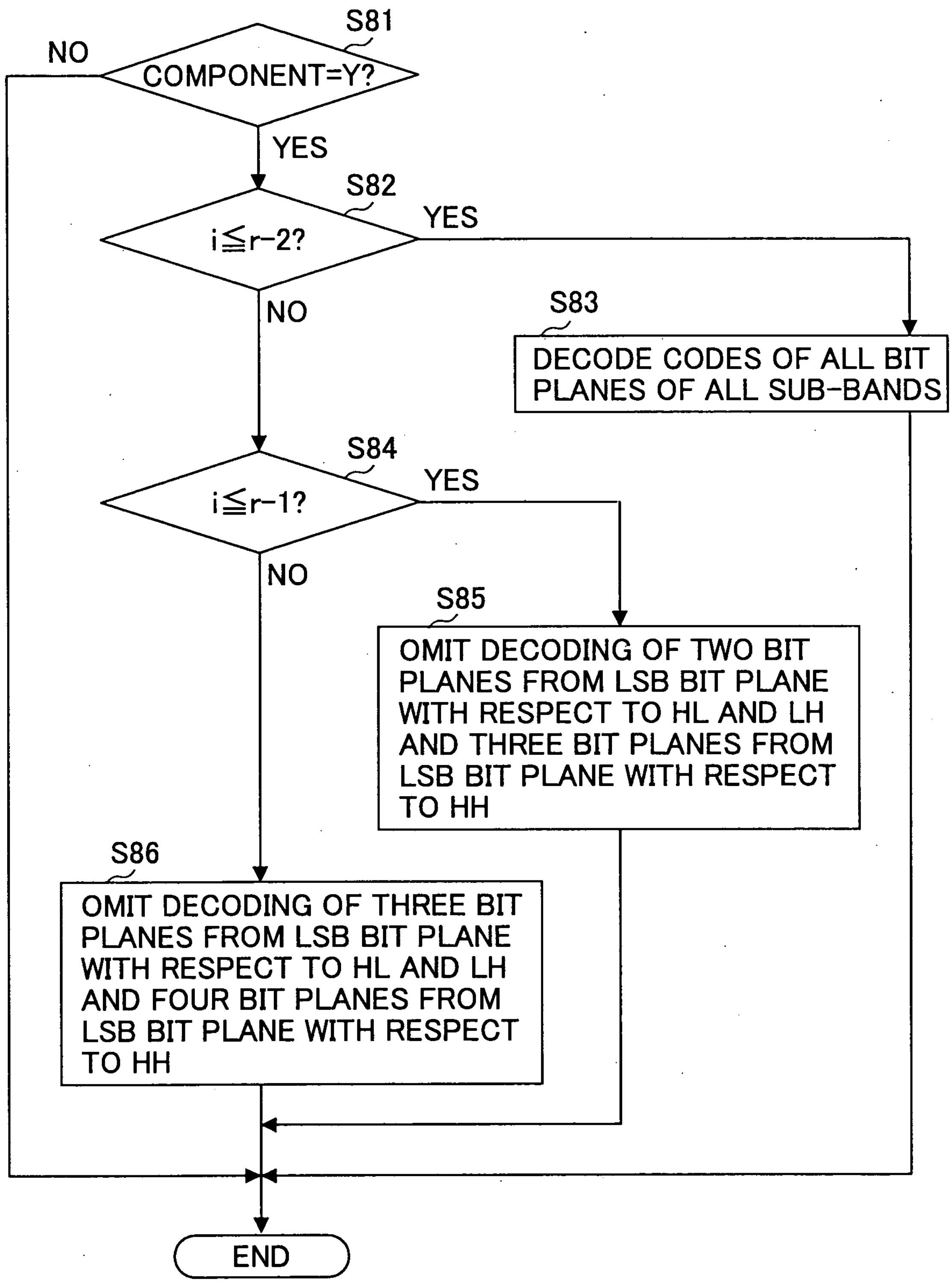
S81
NO
COMPONENT=Y?
YES
S82
YES
i≦r−2?
NO
S83
DECODE CODES OF ALL BIT PLANES OF ALL SUB-BANDS
S84
YES
i≦r−1?
NO
S85
OMIT DECODING OF TWO BIT PLANES FROM LSB BIT PLANE WITH RESPECT TO HL AND LH AND THREE BIT PLANES FROM LSB BIT PLANE WITH RESPECT TO HH
S86
OMIT DECODING OF THREE BIT PLANES FROM LSB BIT PLANE WITH RESPECT TO HL AND LH AND FOUR BIT PLANES FROM LSB BIT PLANE WITH RESPECT TO HH
END

FIG.31

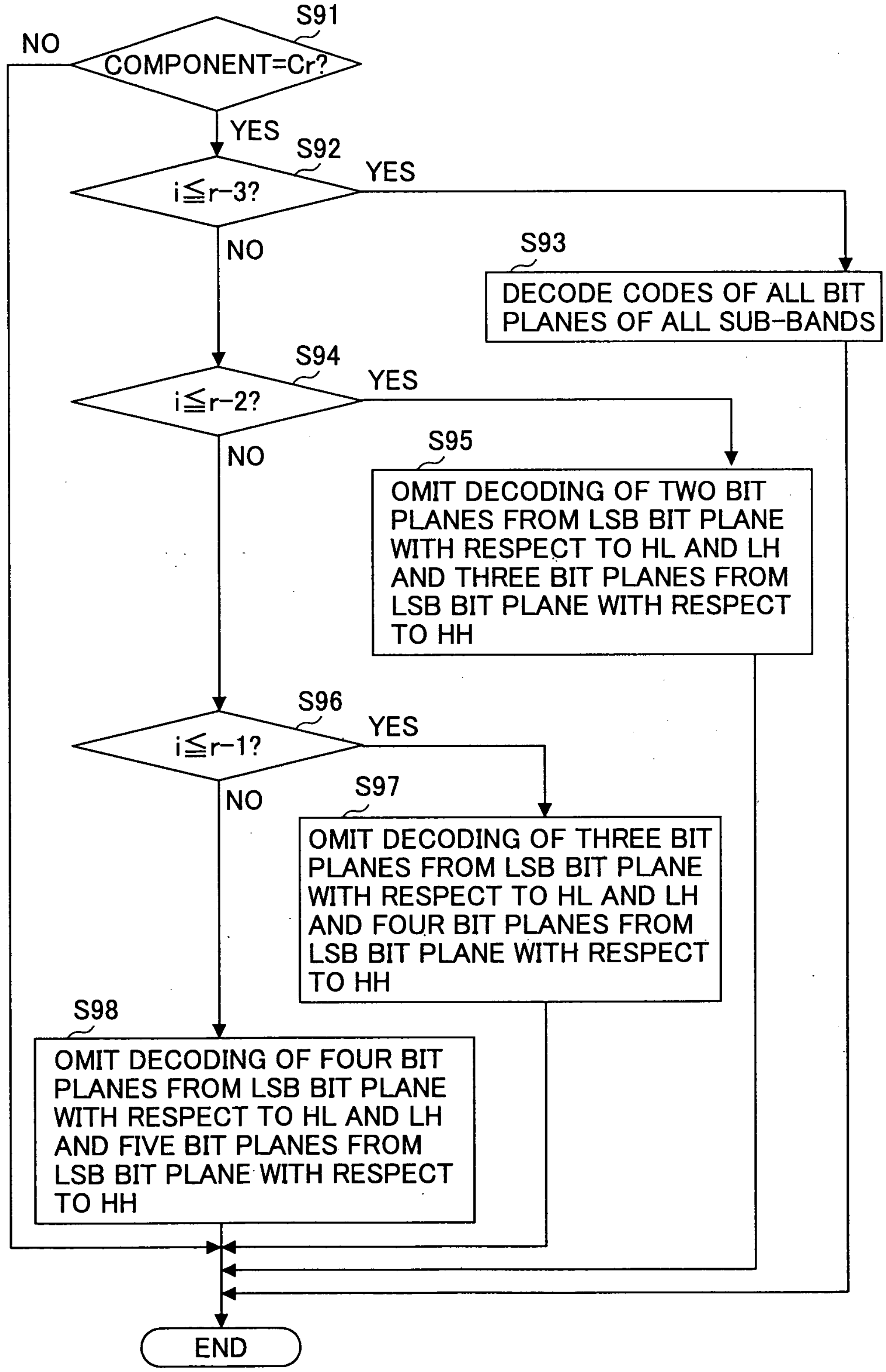
S91
COMPONENT=Cr?
NO
YES
S92
i≦r−3?
YES
NO
S93
DECODE CODES OF ALL BIT PLANES OF ALL SUB-BANDS
S94
i≦r−2?
YES
NO
S95
OMIT DECODING OF TWO BIT PLANES FROM LSB BIT PLANE WITH RESPECT TO HL AND LH AND THREE BIT PLANES FROM LSB BIT PLANE WITH RESPECT TO HH
S96
i≦r−1?
YES
NO
S97
OMIT DECODING OF THREE BIT PLANES FROM LSB BIT PLANE WITH RESPECT TO HL AND LH AND FOUR BIT PLANES FROM LSB BIT PLANE WITH RESPECT TO HH
S98
OMIT DECODING OF FOUR BIT PLANES FROM LSB BIT PLANE WITH RESPECT TO HL AND LH AND FIVE BIT PLANES FROM LSB BIT PLANE WITH RESPECT TO HH
END

FIG.32

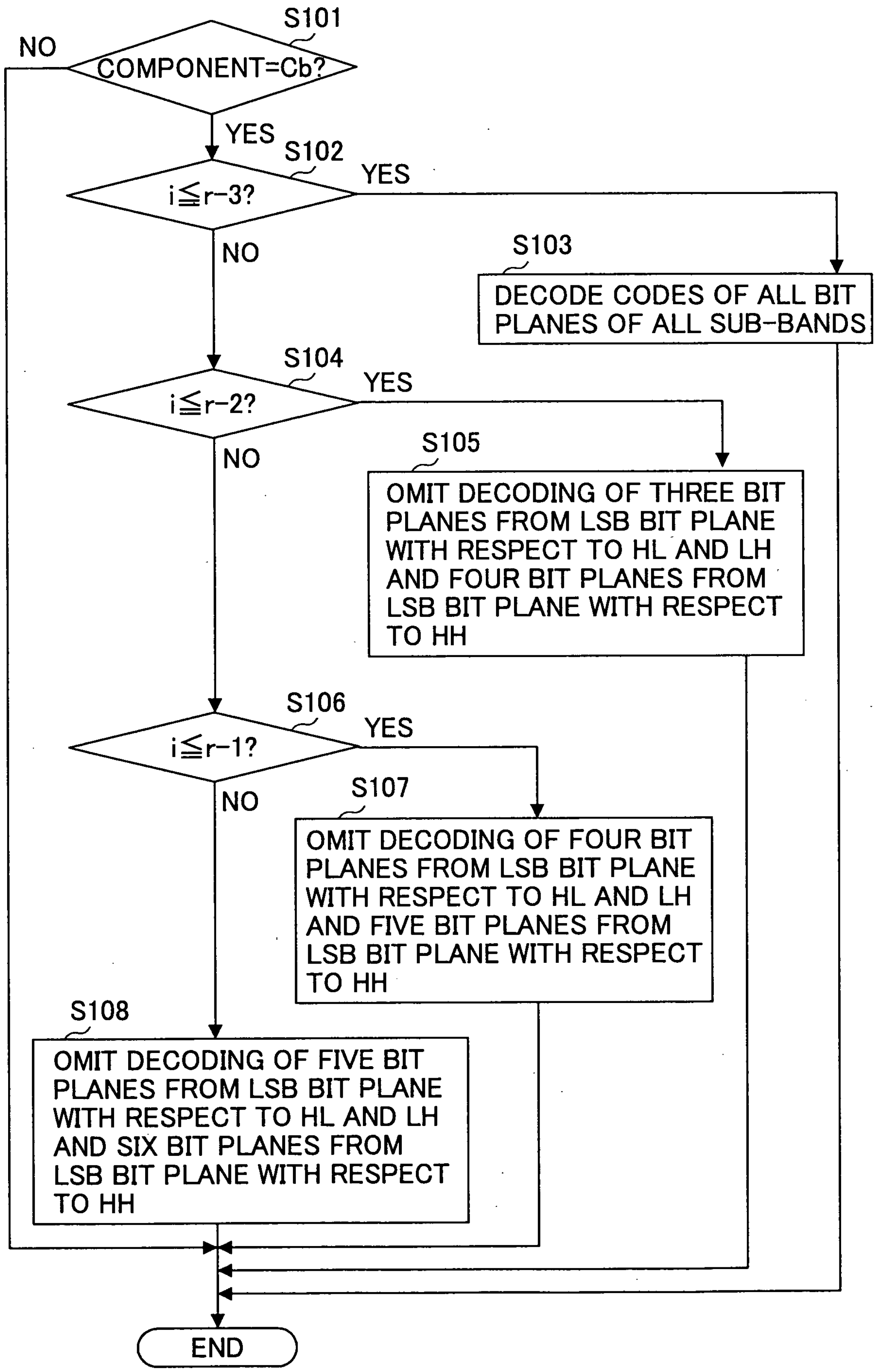
S101
COMPONENT=Cb?
NO
YES
S102
i≦r−3?
YES
NO
S103
DECODE CODES OF ALL BIT PLANES OF ALL SUB-BANDS
S104
i≦r−2?
YES
NO
S105
OMIT DECODING OF THREE BIT PLANES FROM LSB BIT PLANE WITH RESPECT TO HL AND LH AND FOUR BIT PLANES FROM LSB BIT PLANE WITH RESPECT TO HH
S106
i≦r−1?
YES
NO
S107
OMIT DECODING OF FOUR BIT PLANES FROM LSB BIT PLANE WITH RESPECT TO HL AND LH AND FIVE BIT PLANES FROM LSB BIT PLANE WITH RESPECT TO HH
S108
OMIT DECODING OF FIVE BIT PLANES FROM LSB BIT PLANE WITH RESPECT TO HL AND LH AND SIX BIT PLANES FROM LSB BIT PLANE WITH RESPECT TO HH
END

FIG.33

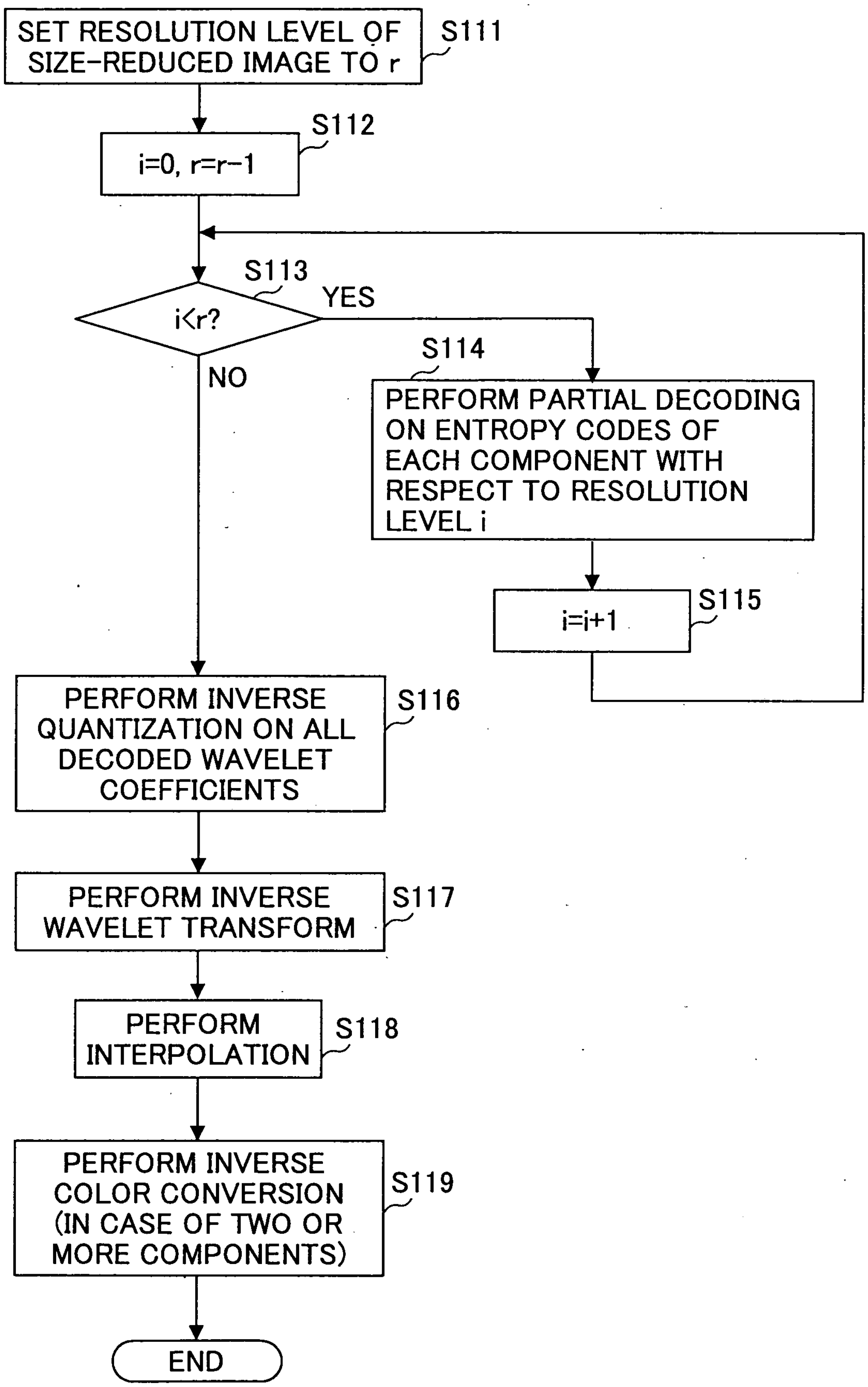
SET RESOLUTION LEVEL OF SIZE-REDUCED IMAGE TO r
S111
i=0, r=r−1
S112
S113
i<r?
YES
NO
S114
PERFORM PARTIAL DECODING ON ENTROPY CODES OF EACH COMPONENT WITH RESPECT TO RESOLUTION LEVEL i
i=i+1
S115
PERFORM INVERSE QUANTIZATION ON ALL DECODED WAVELET COEFFICIENTS
S116
PERFORM INVERSE WAVELET TRANSFORM
S117
PERFORM INTERPOLATION
S118
PERFORM INVERSE COLOR CONVERSION (IN CASE OF TWO OR MORE COMPONENTS)
S119
END